# EUROPÄISCHE PATENTSCHRIFT

(11) **EP 3 535 495 B1**
(45) Veröffentlichungstag und Bekanntmachung des Hinweises auf die Patenterteilung: **23.09.2020**
(21) Anmeldenummer: 17798094.3
(22) Anmeldetag: 20.10.2017
(51) Int. Cl.: F04B 53/14, F04B 39/14, F04B 25/00, F04B 27/00, F04B 27/02, F04B 27/04, F04B 35/01, F04B 39/00, F16F 15/24, F16C 7/02

(54) **HUBKOLBENMASCHINE, INSBESONDERE EIN-, ZWEI- ODER MEHRSTUFIGER KOLBENKOMPRESSOR FÜR EINE DRUCKLUFTVERSORGUNGSANLAGE EINES FAHRZEUGS**
RECIPROCATING PISTON MACHINE, IN PARTICULAR ONE-, TWO-, OR THREE-STAGE PISTON COMPRESSOR FOR A COMPRESSED AIR SUPPLY SYSTEM OF A VEHICLE
MACHINE À PISTON ALTERNATIF, EN PARTICULIER COMPRESSEUR À PISTON À UN OU AU MOINS DEUX ÉTAGES POUR UN SYSTÈME D'ALIMENTATION EN AIR COMPRIMÉ D'UN VÉHICULE

(30) Priorität: 02.11.2016 DE 102016013036
(43) Veröffentlichungstag der Anmeldung: 11.09.2019
(73) Patentinhaber: WABCO Europe BVBA, 1170 Brussels (BE)
(72) Erfinder: EGGEBRECHT, Detlev, 30519 Hannover (DE)
(74) Vertreter: Rabe, Dirk-Heinrich
(86) Internationale Anmeldenummer: PCT/EP2017/001233
(87) Internationale Veröffentlichungsnummer: WO 2018/082800

(56) Entgegenhaltungen:
- EP-A1- 1 225 332
- EP-A1- 1 394 413
- EP-A1- 1 707 812
- EP-A1- 2 161 452
- DE-A1-102004 020 104
- DE-A1-102014 205 309

## Beschreibung

Hubkolbenmaschine, insbesondere ein-, zwei- oder mehrstufiger Kolbenkompressor, Druckluftversorgungsanlage, Druckluftversorgungssystem und Fahrzeug, insbesondere PKW mit einer Druckluftversorgungsanlage, Verfahren zur Montage einer Hubkolbenmaschine und Verfahren zum Betrieb einer Hubkolbenmaschine, insbesondere an einer Druckluftversorgungsanlage.

Die Erfindung betrifft eine Hubkolbenmaschine, insbesondere einen ein-, zwei- oder mehrstufigen Kolbenkompressor bzw. einen ein-, zwei- oder mehrzylindrigen Verdichter, gemäß dem Oberbegriff des Anspruchs 1. Insbesondere betrifft die Erfindung auch Vorrichtungen zur Bereitstellung von Unterdruck, wie etwa eine Vakuumpumpe. Weiter betrifft die Erfindung eine Druckluftversorgungsanlage und ein Druckluftversorgungssystem sowie ein Fahrzeug, insbesondere einen PKW, mit einer Hubkolbenmaschine, insbesondere mit einem Kolbenkompressor bzw. Verdichter. Weiter betrifft die Erfindung ein Verfahren zur Montage einer Hubkolbenmaschine und ein Verfahren zum Betrieb einer Hubkolbenmaschine, insbesondere eines Kolbenkompressors bzw. Verdichters, insbesondere an einer Druckluftversorgungsanlage.

Eine Druckluftversorgungsanlage wird in Fahrzeugen aller Art, insbesondere zur Versorgung einer Luftfederanlage eines PKWs oder eines Nutzfahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Druckluftversorgungssystems umfasst eine Anzahl von an einer gemeinsamen Leitung (Galerie) pneumatisch angeschlossenen Luftbälgen, die mit zunehmender Befüllung den Fahrzeugaufbau anheben und mit abnehmender Befüllung absenken können. Ein solches System wird beispielsweise in einem Geländefahrzeug und einem Sport-Utility-Vehicle (SUV) oder einem Nutz- oder Personentransportfahrzeug eingesetzt.

Zur Sicherstellung eines langfristen Betriebs der Druckluftversorgungsanlage weist diese einen Lufttrockner auf, mit dem die Druckluft zu trocknen ist. Dadurch wird die Ansammlung von Feuchtigkeit in dem Druckluftversorgungssystem vermieden, die ansonsten bei vergleichsweise niedrigen Temperaturen zu ventilschädigender Eiskristallbildung und sonstigen unerwünschten Effekten in der Druckluftversorgungsanlage und in der Pneumatikanlage führen kann. Ein Lufttrockner weist ein Trockenmittel auf, üblicherweise eine Granulatschüttung, welche von der Druckluft durchströmbar ist, so dass die Granulatschüttung --bei vergleichsweise hohem Druck-- in der Druckluft enthaltende Feuchtigkeit durch Adsorption aufnehmen kann. Es hat sich dabei oftmals bewährt, das Trockengranulat in einer Trocknerkartusche unterzubringen, die ein Trocknerbett zur Führung einer Druckluftströmung aufweist.

Eine Druckluftversorgungsanlage zur Verwendung in einem pneumatischen Druckluftversorgungssystem mit einer Pneumatikanlage, beispielsweise mit einer zuvor beschriebenen Luftfederanlage, wird mit Druckluft aus einer Druckluftzuführung betrieben, beispielsweise im Rahmen eines Druckniveaus von 5 bar bis 20 bar. Die Druckluft wird mittels eines Luftverdichters (Kompressor), vorliegend mit einer Hubkolbenmaschine, bevorzugt mit einem ein-, zwei- oder mehrstufigen Kolbenkompressor, der Druckluftzuführung zur Verfügung gestellt.

Bei einer Druckluftversorgungsanlage für ein Druckluftversorgungssystem in einem Fahrzeug ist die von dem Luftverdichter versorgte Druckluftzuführung einerseits zur Versorgung der Pneumatikanlage mit einem Druckluftanschluss pneumatisch verbunden und andererseits mit einem Entlüftungsanschluss pneumatisch verbunden. Über eine Entlüftungsventilanordnung kann die Druckluftversorgungsanlage und/oder die Pneumatikanlage durch Ablassen von Luft zum Entlüftungsanschluss hin entlüftet werden.

Der Antrieb der Hubkolbenmaschine im Luftverdichter (Kompressor) der Druckluftzuführung erfolgt regelmäßig mit einem Antriebsmotor, dessen Antriebsleistung über eine Kurbelwelle und ein oder mehrere Pleuel an einen oder mehrere Kolben des bevorzugt ein-, zwei- oder mehrstufigen Kolbenkompressors weitergegeben wird - ein Kolben läuft im Betrieb abgedichtet in einem Zylinder, indem dieser entlang einer radial ausgerichteten Zylinder-Achse in einem Zylinderhubraum des Zylinders ausgelenkt wird, nämlich wie im Oberbegriff des Anspruchs 1 angegeben. Hierbei ist die Anordnung der Kolben für die Funktionsweise der Erfindung nicht maßgeblich. Der Antrieb der Hubkolbenmaschine im Luftverdichter (Kompressor) der Druckluftzuführung kann auch beispielsweise über einen Riemenantrieb erfolgen.

Auf diese Weise wird angesaugte Umgebungsluft verdichtet. Alternativ kann im Rahmen eines geschlossenen Betriebs oder eines Boostbetriebs eine aus einer anderen Druckluftquelle zugeführte Ansaugluft verdichtet werden. Grundsätzlich haben sich dafür sogenannte TWIN-Kolbenkompressoren bewährt; d. h. zwei-stufige KolbenKompressoren deren zwei Kolben über zwei diesen jeweils zugeordnete Pleuel angetrieben werden, welche wiederum während eines oberen und unteren Totpunkts einer Pleuelbewegung des Pleuels genau entlang einer radial zu einer Wellen-Achse der Kurbelwelle ausgerichteten Zylinder-Achse, die bevorzugt exakt parallel und mittensymmetrisch zu den Zylinderlaufflächen im Zylinderhubraum für den Kolben ausgerichtet verläuft, ausgerichtet sind.

Je nach angeforderter Dynamik und Druckbelastung kann ein solcher oder anderer zweistufiger oder mehrstufiger Kompressor im Betrieb zunehmende Betriebsgeräusche entwickeln, die maßgeblich durch eine Körperschallübertragung durch den Pleueltrieb u.a. in den Antriebsmotor des Kompressors oder deren Gehäuse verursacht sein können. Wünschenswert ist es, eine verbesserte Akustik und einen gleichwohl verlässlichen Pleueltrieb in einem Kompressor in Form der genannten Hubkolbenmaschine zu realisieren. Dies soll insbesondere auch für einen besonders geringen Geräuschpegel im PKW-Bereich ausreichend sein.

EP 1 225 332 A1 offenbart einen Kompressor mit wenigstens einer Kompressoreinheit, die zwei Kolben, zwei Zylinder und ein Verbindungselement aufweist, wobei Längsachsen der Kolben und Zylinder miteinander fluchten und eine Längsachse bilden. Die Kolben jeder Kompressoreinheit sind über ein Pleuel mit der Kurbelwelle verbunden und das Pleuel liegt zeitweise während einer Pleuelbewegung des Pleuels, insbesondere während eines oberen und unteren Totpunkts der Pleuelbewegung, in der Längsachse.

DE 10 2004 020 104 A1 offenbart in etwa einen TWIN-Kompressor mit symmetrisch gelagerten Doppelkolben für einen Verdichter, mit einem länglichen Kolbenträger, der an jedem Ende einen Kolben aufweist, und mit einem etwa parallel zum Kolbenträger verlaufenden Pleuel, das mittels eines Lagers auf einem Bolzen des Kolbenträgers drehbar gelagert ist und im Abstand davon mittels eines Pleuellagers auf einem Exzenter einer Antriebseinrichtung gelagert ist. Der Kolbenträger enthält in einem mittleren Bereich, der sich zwischen beiden Kolben erstreckt, einen zur Aufnahme des Pleuels bemessenen Zwischenraum, in dem das Pleuel frei beweglich ist.

Es zeigt sich, wie von der Erfindung erkannt, dass Lösungen dieser Art Gefahr laufen, eine vergleichsweise hohe Schallentwicklung und Körperschallübertragungen durch den Pleueltrieb in den Kompressor-Antriebsmotor und damit auch nach außen zu verursachen.

Demgegenüber offenbart EP 1 707 812 B1 der Anmelderin einen Kraftfahrzeug-Kleinkompressor mit einem einzigen im Zylinder abgedichtet laufenden Kolben und mit einem Pleuel zur gelenkigen Verbindung eines Kurbelwellenzapfens der Kurbelwelle mit dem Kolben in einem Pleuellager. Durch eine Pleuelschrägstellung entsteht bei jedem Druck ein Kraftvektor, der das Pleuel immer in Richtung Kurbelwelle mit Zapfen drückt. Dies hat den Vorteil, dass das Pleuel frei beweglich gelagert werden kann. Das Pleuel wird im hohen Druckbereich nur noch geringfügig ausgeknickt. Konkret ist dazu eine Hubkolbenmaschine, insbesondere ein Kolbenkompressor, mit einem Zylinder vorgesehen und mit dem im Zylinder abgedichtet laufenden Kolben, mit einem auf eine Kurbelwelle arbeitenden Antriebsmotor, dessen Antriebswelle von einer Bohrung der Kurbelwelle aufgenommen ist, und mit einem Pleuel zur gelenkigen Verbindung eines Kurbelwellenzapfens der Kurbelwelle mit dem Kolben in einem Pleuellager. Das Pleuel ist relativ zur Antriebswelle in einer einer Antriebswellendurchbiegung entgegenwirkenden Schrägstellung angeordnet. Der Winkel der Schrägstellung liegt zwischen 0° und 1,5°. Konkret ist das Pleuellager als Nadellager ausgebildet, wobei das Pleuellager auf dem Kurbelwellenzapfen axial beweglich ist; das Pleuel ist schräg angesetzt aber nicht versetzt. Denn zur Erzielung der Schrägstellung des Pleuels ist die Kurbelwellenbohrung für die Antriebswelle schräg ausgebildet oder die Schrägstellung des Pleuels ist durch eine Schrägstellung der Lagerbohrung im Pleuellagerauge für den Kurbelwellenzapfen realisiert. Die Schrägstellung des Pleuels kann auch durch eine Schiefstellung des Kurbelwellenzapfens in der Kurbelwelle realisiert sein. Die Schrägstellung des Pleuels kann auch durch eine Schrägstellung der Antriebswelle realisiert sein. Dazu kann die Schrägstellung des Pleuels durch eine Schrägstellung der zylindrischen Gehäuseblockbohrung für den Kolben realisiert sein.

EP 1 394 413 A1 offenbart einen Hubkolbenverdichter für eine Niveauregelanlage in Kraftfahrzeugen mit einer Antriebsquelle, einem Kurbelgehäuse, einer Antriebswelle, einem Zylinderkopf, einem zylinderförmigen Bauteil, einem Pleuel und einer ersten Raumachse. Die Antriebsquelle und das Kurbelgehäuse sind miteinander verbunden. Die Antriebswelle ist entlang einer Antriebsachse angeordnet, hat eine an der Antriebswelle befestigte Kurbelwelle und treibt die Kurbelwelle mit einem Kurbelwellenzapfen an. Der Zylinderkopf und das zylinderförmige Bauteil sind an dem Kurbelgehäuse befestigt. Das zylinderförmige Bauteil hat eine innenliegende Zylinderlaufbahn mit einer Längsachse. Die Längsachse des zylinderförmigen Bauteils ist senkrecht zur Antriebsachse angeordnet. Die erste Raumachse schneidet den Drehpunkt der Antriebswelle und den Drehpunkt des Kurbelwellenzapfens in einem oberen Umkehrpunkt des Kurbelwellenzapfens. Die erste Raumachse ist somit senkrecht zur Antriebsachse. Der maximale Schwenkwinkel der Kolbenringlängsachse ist gegenüber der Längsachse der Zylinderlaufbahn bei der Aufwärtsbewegung des Kolbens kleiner, als bei der Abwärtsbewegung des Kolbens. Die Längsachse der Zylinderlaufbahn ist gegenüber der ersten Raumachse versetzt. Der Hubkolbenverdichter dient dazu eine geringere Bauhöhe zu ermöglichen und eine reduzierte Reibung des Kolbenringes an der Zylinderlaufbahn zu schaffen. Dies wird erreicht indem die Längsachse der Zylinderlaufbahn gegenüber der ersten Raumachse in eine Richtung senkrecht zur Antriebsachse versetzt ist.

Die beiden letztgenannten Lösungen sind noch verbesserbar, zumal sie eine Akustik der Hubkolbenmaschine, insbesondere eines Kolbenkompressors, nicht gesondert berücksichtigen.

An dieser Stelle setzt die Erfindung an, deren Aufgabe es ist, eine Hubkolbenmaschine, insbesondere einen ein-, zwei- oder mehrstufigen Kolbenkompressor, vorzugsweise TWIN-Kompressor, oder einen ein-, zwei oder mehrzylindrigen Verdichter, sowie eine Druckluftversorgungsanlage zum Betreiben einer Pneumatikanlage mit einer Druckluftströmung anzugeben, mittels der eine verbesserte Akustik und ein gleichwohl verlässlicher Pleueltrieb in einem Kolbenkompressor zu realisieren ist. Dies soll insbesondere auch für Geräuschpegelanforderungen im PKW-Bereich geeignet sein. Insbesondere sollen, im Rahmen einer akustischen Verbesserung, Körperschallemissionen eines Pleueltriebes in angrenzende, abstrahlende Bauteile, wie Elektromotor, Kurbeltrieb oder dergleichen Bauteile eines Luftverdichters (Kompressors) reduziert werden. Insbesondere soll die Druckluftversorgungsanlage vergleichsweise kompakt sein. Aufgabe der Erfindung ist es auch, ein entsprechendes Druckluftversorgungssystem und ein Fahrzeug mit dem Druckluftversorgungssystem, insbesondere für eine Luftfederanlage, anzugeben. Aufgabe der Erfindung ist es auch, ein entsprechendes Verfahren zur Montage der Hubkolbenmaschine und ein entsprechendes Verfahren zum Betrieb der Hubkolbenmaschine, insbesondere des ein-, zwei- oder mehrstufigen Kolbenkompressors anzugeben.

Die Aufgabe hinsichtlich der Hubkolbenmaschine wird mit einer Hubkolbenmaschine, insbesondere mit dem ein-, zwei- oder mehrstufigen Kolbenkompressor, vorzugsweise TWIN-Kompressor, oder dem ein-, zwei oder mehrzylindrigen Verdichter des Anspruchs 1 gelöst.

Diese weist auf:
- wenigstens einen Zylinder sowie wenigstens einen jeweils einem Zylinder zugeordneten Kolben, wobei im Betrieb der Kolben entlang einer radial ausgerichteten Zylinder-Achse in einem Zylinderhubraum des Zylinders ausgelenkt wird,
- eine im Betrieb antreibbare Kurbelwelle mit einem Kurbelwellenzapfen, der exzentrisch zu einer Wellenachse der Kurbelwelle angeordnet ist, und einer Antriebswellen-Kopplung, die zum Ankoppeln einer Antriebswelle, insbesondere einer Antriebswelle eines Antriebsmotors, zum Antreiben der Kurbelwelle ausgebildet ist,
- wenigstens ein jeweils zum Auslenken des wenigstens einen Kolben ausgebildetes und entlang einer Pleuelachse verlaufendes Pleuel, das mittels dem Kurbelwellenzapfen bewegbar ist.

Erfindungsgemäß ist vorgesehen, dass
- der Kurbelwellenzapfen und/oder die Antriebswellen-Kopplung entlang einer axial ausgerichteten Wellen-Achse ausgerichtet ist, die senkrecht zur radial ausgerichteten Zylinder-Achse verläuft, und
- die Pleuelachse des Pleuels sich in einer Position befindet, in der wenigstens ein Pleuellager, durch eine entlang der Richtung der Wellen-Achse auf das wenigstens eine Pleuellager wirkende vorbestimmte Kraft, bezüglich des Kurbelwellenzapfens verspannt ist, insbesondere derart, dass das Lagerspiel des wenigstens einen Pleuellagers verringert ist, und
- die Pleuelachse des Pleuels in die Position gebracht wird, indem eine entlang der Richtung der Wellen-Achse wirkende Kraft auf das wenigstens eine Pleuellager aufgebracht wird, bis eine vorbestimmte Gegenkraft erreicht ist, die vorzugsweise aus einer entsprechenden Verkippung des Pleuels resultiert.

Die Aufgabe hinsichtlich der Druckluftversorgungsanlage wird mit einer Druckluftversorgungsanlage des Anspruchs 20 gelöst. Eine Druckluftversorgungsanlage zum Betreiben einer Pneumatikanlage, insbesondere einer Luftfederanlage eines Fahrzeugs, vorzugsweise eines PKWs, mit einer Druckluftströmung, weist auf:
- eine Lufttrockneranordnung in einer Pneumatikhauptleitung, die eine Druckluftzuführung von einem Luftverdichter und einen Druckluftanschluss zu der Pneumatikanlage pneumatisch verbindet, und
- eine an die Pneumatikhauptleitung pneumatisch angeschlossene Ventilanordnung zur Steuerung der Druckluftströmung und einen Lufttrockner in der Pneumatikhauptleitung, wobei
- an die Druckluftzuführung ein Luftverdichter mit einer Hubkolbenmaschine, insbesondere ein ein-, zwei- oder mehrstufiger Kolbenkompressor, vorzugsweise TWIN-Kompressor, insbesondere der Ansprüche 1 bis 16 angeschlossen ist.

Die Aufgabe betreffend das Druckluftversorgungssystem wird mit einem Druckluftversorgungssystem des Anspruchs 21 gelöst. Die Erfindung führt auch auf ein Fahrzeug, insbesondere ein PKW-Fahrzeug, des Anspruchs 22.

Ein Druckluftversorgungssystem mit einer Pneumatikanlage und mit einer Druckluftversorgungsanlage dient zum Betreiben der Pneumatikanlage mit einer Druckluftströmung, insbesondere einer Luftfederanlage eines Fahrzeugs, vorzugsweise eines PKWs, wobei die Pneumatikhauptleitung eine Druckluftzuführung von einem Luftverdichter mit einer Hubkolbenmaschine, insbesondere einem ein-, zwei- oder mehrstufiger Kolbenkompressor, vorzugsweise TWIN-Kompressor, oder einem ein-, zwei- oder mehrzylindrigen Verdichter, der Ansprüche 1 bis 16 und einen Druckluftanschluss zu der Pneumatikanlage pneumatisch verbindet.

Ein Fahrzeug, insbesondere PKW, ist mit einer Pneumatikanlage, insbesondere einer Luftfederanlage, und einer Druckluftversorgungsanlage gemäß Anspruch 20 zum Betreiben der Pneumatikanlage mit einer Druckluftströmung versehen.

Die Erfindung betrifft des Weiteren ein Hubkolbenmaschinenmontagesystem für die Montage einer Hubkolbenmaschine gemäß Anspruch 17. Das Hubkolbenmaschinenmontagesystem weist
- eine Hubkolbenmaschine nach einem der Ansprüche 1 bis 16 und
- eine Montagevorrichtung auf.

Die Montagevorrichtung ist ausgebildet an der Hubkolbenmaschine angeordnet zu werden und die Hubkolbenmaschine zu montieren. Die Montagevorrichtung weist ein axial verfahrbares Kippelement auf. Das axial verfahrbare Kippelement ist ausgebildet, gegen das wenigstens eine Pleuellager des Pleuels der Hubkolbenmaschine gefahren zu werden, um auf dieses entlang der Richtung der Wellen-Achse eine Kraft aufzubringen, damit die Pleuelachse des Pleuels bezüglich des Kurbelwellenzapfens verspannt wird, insbesondere kann die Pleuelachse des Pleuels im Vergleich zu einem ohne vorbestimmte Kraft vorliegenden unverspannten Zustand verkippt werden.

Die Erfindung führt auch auf ein Verfahren des Anspruchs 23 zur Montage der Hubkolbenmaschine, insbesondere des Kolbenkompressors, insbesondere des ein-, zwei- oder mehrstufigen Kolbenkompressors, vorzugsweise TWIN-Kompressors, oder des ein-, zwei- oder mehrzylindrigen Verdichters, insbesondere an einer Druckluftversorgungsanlage, insbesondere für ein PKW-Fahrzeug.

Für das Verfahren zur Montage weist eine Hubkolbenmaschine, insbesondere nach einem der Ansprüche 1 bis 16, auf:
- wenigstens einen Zylinder sowie wenigstens einen jeweils einem Zylinder zugeordneten Kolben, wobei im Betrieb der Kolben entlang einer radial ausgerichteten Zylinder-Achse in einem Zylinderhubraum des Zylinders ausgelenkt wird,
- eine im Betrieb antreibbare Kurbelwelle mit einem Kurbelwellenzapfen, der exzentrisch zu einer Wellenachse der Kurbelwelle angeordnet ist, und einer Antriebswellen-Kopplung, die zum Ankoppeln einer Antriebswelle eines Antriebsmotors zum Antreiben der Kurbelwelle ausgebildet ist,
- wenigstens ein jeweils zum Auslenken des wenigstens einen Kolben ausgebildetes und entlang einer Pleuelachse verlaufendes Pleuel, das mittels dem Kurbelwellenzapfen bewegbar ist.

Erfindungsgemäß ist zur Montage der Hubkolbenmaschine vorgesehen, dass
- der Kurbelwellenzapfen und/oder die Antriebswellen-Kopplung entlang einer axial ausgerichteten Wellen-Achse der Kurbelwelle ausgerichtet ist, die senkrecht zur radial ausgerichteten Zylinder-Achse verläuft,
- die Pleuelachse des Pleuels in eine Position gebracht wird, in der wenigstens ein Pleuellager, durch eine entlang der Richtung der Wellen-Achse auf das wenigstens eine Pleuellager wirkende vorbestimmte Kraft, bezüglich des Kurbelwellenzapfens verspannt ist, insbesondere derart, dass das Lagerspiel wenigstens eines Pleuellagers verringert ist, und
- die Pleuelachse des Pleuels an die Position gebracht wird, indem eine entlang der Richtung der Wellen-Achse wirkende Kraft auf das wenigstens eine Pleuellager aufgebracht wird, bis eine vorbestimmte Gegenkraft erreicht ist, die vorzugsweise aus der Verkippung des Pleuels resultiert.

Die Erfindung führt auch auf ein Verfahren des Anspruchs 24 zum Betrieb der Hubkolbenmaschine, insbesondere des Kolbenkompressors, insbesondere des ein-, zwei- oder mehrstufigen Kolbenkompressors, vorzugsweise TWIN-Kompressors, oder des ein-, zwei- oder mehrzylindrigen Verdichters, insbesondere an einer Druckluftversorgungsanlage, insbesondere für ein PKW-Fahrzeug.

Für das Verfahren zum Betrieb weist eine Hubkolbenmaschine, insbesondere nach einem der Ansprüche 1 bis 16, auf:
- wenigstens einen Zylinder sowie wenigstens einen jeweils einem Zylinder zugeordneten Kolben, wobei im Betrieb der Kolben entlang einer radial ausgerichteten Zylinder-Achse in einem Zylinderhubraum des Zylinders ausgelenkt wird,
- eine im Betrieb antreibbare Kurbelwelle mit einem Kurbelwellenzapfen, der exzentrisch zu einer Wellenachse der Kurbelwelle angeordnet ist, und einer Antriebswellen-Kopplung, die -insbesondere ein- oder mehrteilig-- zum Ankoppeln einer Antriebswelle eines Antriebsmotors zum Antreiben der Kurbelwelle ausgebildet ist,
- wenigstens ein jeweils zum Auslenken des wenigstens einen Kolben ausgebildetes und entlang einer Pleuelachse verlaufendes Pleuel, das mittels des Kurbelwellenzapfens bewegbar ist.

Erfindungsgemäß ist zum Betrieb der Hubkolbenmaschine vorgesehen, dass
- der Kurbelwellenzapfen und/oder die Antriebswellen-Kopplung parallel zu einer axial ausgerichteten Wellen-Achse des Kurbelwellenzapfens ausgerichtet ist, die senkrecht zur radial ausgerichteten Zylinder-Achse verläuft,
- die Pleuelachse des Pleuels in eine Position gebracht wird, in der wenigstens ein Pleuellager, durch eine entlang der Richtung der Wellen-Achse auf das wenigstens eine Pleuellager wirkende vorbestimmte Kraft, bezüglich des Kurbelwellenzapfens verspannt ist, insbesondere derart, dass das Lagerspiel wenigstens eines Pleuellagers verringert ist, und
- die Pleuelachse des Pleuels in die Position gebracht wird, indem eine entlang der Richtung der Wellen-Achse wirkende Kraft auf das wenigstens eine Pleuellager aufgebracht wird, bis eine vorbestimmte Gegenkraft erreicht ist, die vorzugsweise aus der Verkippung des Pleuels resultiert.

Die radial ausgerichtete Zylinder-Achse ist eine Längsachse, die durch den Mittelpunkt einer ersten Seite des Zylinders zum Mittelpunkt einer zweiten Seite des Zylinders und parallel zu einer Zylindermantelfläche des Zylinders verläuft, d.h. die Zylinder-Achse entspricht einer Mittenachse des Zylinders. Die radial ausgerichtete Zylinder-Achse ist im Wesentlichen symmetrisch zu Zylinderlaufflächen für den wenigstens einen Kolben im Zylinderhubraum des wenigstens einen Zylinders ausgerichtet. Unter einer radial ausgerichteten Zylinder-Achse mit daran ausgerichtetem Zylinderhubraum ist insbesondere zu verstehen, dass die Zylinderlaufflächen am Zylinderhubraum eines Zylinders für den Kolben exakt parallel und symmetrisch zur radial ausgerichteten Zylinder-Achse stehen.

Die Wellen-Achse ist eine Längsachse, die durch den Mittelpunkt einer ersten Seite der Welle zum Mittelpunkt einer zweiten Seite der Welle und parallel zu einer Mantelfläche der Welle verläuft, d.h. die Wellen-Achse entspricht einer Mittenachse der Welle. Die Pleuelachse des Pleuels ist eine Längsachse, die den Mittelpunkt eines Pleuellagers des Pleuels und einen Mittelpunkt des Kolbens schneidet, d.h. die Pleuelachse entspricht einer Mittenachse des Pleuels. Die Pleuelachse ist im Vergleich zu einem ohne vorbestimmte Kraft vorliegenden unverspannten Zustand gegen die Zylinder-Achse verkippt. Hierdurch wird eine Verkippungsebene für die Pleuelachse vorgegeben, in der die Pleuelachse im Vergleich zu einem ohne vorbestimmte Kraft vorliegenden unverspannten Zustand des Pleuels um einen Verkippungswinkel verkippt ist. Die Pleuelachse kann zusätzlich auch in weiteren Verkippungsebenen gegenüber der Zylinder-Achse verkippt sein, d. h. es kann auch eine zusätzliche Verkippung quer und insbesondere auch senkrecht zur Richtung der Wellen-Achse vorgesehen sein. Vorzugsweise ist der Kurbelwellenzapfen --insbesondere auch die Antriebswellen-Kopplungparallel zu der - senkrecht zur radial ausgerichtete Zylinder-Achse - axial ausgerichteten Wellen-Achse ausgerichtet; d. h. dass der Kurbelwellenzapfen und/oder ein diesen umgebendes Pleuellager mit Pleuellagerachse senkrecht zur radial ausgerichteten Zylinder-Achse steht. Die Pleuellagerachse steht in diesem Fall bevorzugt senkrecht zur Pleuelachse, die in einem Zustand ohne Verkippen bevorzugt parallel zur Zylinder-Achse steht.

Konzeptionell liegen die radial ausgerichtete Zylinder-Achse mit daran ausgerichtetem Zylinderhubraum bzw. Zylinderlaufflächen und die axial ausgerichtete Wellen-Achse mit daran ausgerichtetem Kurbelwellenzapfen und/oder der Antriebswellen-Kopplung exakt senkrecht zueinander. Das Pleuellager kann bezüglich des Kurbelwellenzapfens verspannt sein und dadurch vorzugsweise in Richtung der axial ausgerichteten Wellen-Achse versetzt zur radial ausgerichtete Zylinder-Achse vorliegen; vereinfacht ausgedrückt kann eine Pleuelachse und das Pleuellager verkippt im Vergleich zu einem ohne vorbestimmte Kraft vorliegenden unverspannten Zustand sein. Damit stellt sich ein Verkippungswinkel des Pleuels bzw. Pleuelachse im Vergleich zu einem ohne vorbestimmte Kraft vorliegenden unverspannten Zustand der Pleuelachse ein. Allerdings kann auch ein vernachlässigbarer Verkippungswinkel in einer erfindungsgemäßen Hubkolbenmaschine vorliegen, während das Pleuellager durch die vorbestimmte Kraft vorgespannt ist.

Die Erfindung geht von der Überlegung aus, dass je nach angeforderter Dynamik und Druckbelastung bei einem Luftverdichter, ein ein-, zwei- oder mehrstufiger Kompressor oder eine sonstige Hubkolbenmaschine im Betrieb zunehmend Betriebsgeräusche entwickelt, die --wie sich herausstellt-- vor allem durch eine Körperschallübertragung durch den Pleueltrieb in den Kompressor-Antriebsmotor verursacht sein können. Es zeigt sich, wie von der Erfindung erkannt, dass die Betriebsgeräusche zum Teil bedingt sind durch ein konstruktiv erforderliches Pleuellagerspiel; d.h. die Emission tritt auch im Leerlauf auf, insbesondere tritt dies aufgrund der Massenträgheit bei einem Lastwechsel auf, bei dem die Bewegungsrichtung umgekehrt wird. Die Erfindung hat nun erkannt, dass durch eine geschickte Anpassung der konstruktiv erforderlichen Pleuellagerspiele eine verbesserte Akustik und ein gleichwohl verlässlicher Pleueltrieb in einem Kompressor zu realisieren ist; auch mit einer insbesondere für einen PKW-Bereich akzeptablen niedrigen Geräuschentwicklung. Darüber hinaus ist das Konzept der vorliegenden Erfindung ebenfalls bevorzugt für ein Nutzfahrzeug oder PersonentransportFahrzeug, insbesondere wenn bei diesem die Druckluftversorgungsanlage für vergleichsweise hohe Druckamplituden ausgelegt ist.

Wie von der Erfindung erkannt, sehen bisherige Lösungen --vereinfacht dargestellteine Achse der Zylinderbohrungen (radial ausgerichtete Zylinder-Achse) und eine Ebene eines Kurbelwellenlagers und Pleuellagers vor (Pleuelachse), die im Wesentlichen parallel zueinander ausgerichtet sind, insbesondere miteinander fluchten. Demzufolge wird beispielsweise das Pleuellager (wie z. B. ein Kugellager auf einer Kurbelwelle) üblicherweise mit einem gewissen Montagemaß X (von hier anschaulich z. B. mit [X] = 15,00 mm vorgegeben) in der Flucht zu den Zylinderlaufflächen montiert; d. h. das Montagemaß X ist vorgegeben, beispielsweise als Abstand zwischen einer Gehäuse-Außenfläche und einer Planfläche des Pleuellagers.

Die Erfindung hat erkannt, dass mit einer --bevorzugt eine Vorspannung der Pleuellager hervorrufenden-- Reduzierung freier Pleuellagerspiele in einem Pleuellager die Geräuschentwicklung maßgeblich gesenkt werden kann; die Erfindung sieht dazu vor, eine auf das wenigstens eine Pleuellager wirkende vorbestimmte Kraft aufzuwenden, durch die vorzugsweise die Pleuelachse gegen eine im unverspannten also entspannten Zustand vorliegende ursprüngliche Pleuelachse in Richtung der Wellen-Achse verkippt werden kann. Hierfür wird eine entlang der Richtung der Wellen-Achse wirkende Kraft auf das wenigstens eine Pleuellager aufgebracht, bis eine vorbestimmte Gegenkraft erreicht ist, die vorzugsweise aus der Verkippung des Pleuels resultiert. Die Geräuschentwicklung kann dadurch vorteilhaft maßgeblich gesenkt werden. Durch Aufbringen einer entlang der Richtung der Wellen-Achse wirkenden Kraft, bis eine vorbestimmte Gegenkraft erreicht ist, können Fertigungstoleranz-bedingte unterschiedliche Vorspannungen der Pleuellager vermieden werden, die beispielsweise auftreten könnten, wenn man das Pleuel um ein fest vorgegebenes Montagemaß versetzt oder einen fest vorgegebenen Kippwinkel einstellt. Es ist also ein Aspekt der Erfindung, dass die Bauteile, wie beispielsweise Pleuellager, z.B. Nadellager oder dergleichen in einem geringeren Maße entsprechend ihrer Fertigungsparameter aufeinander abgestimmt werden müssen, wenn sie miteinander und/oder in der Hubkolbenmaschine verwendet werden sollen, da die Erfindung es ermöglicht, für einen gewissen Ausgleich der unterschiedlichen Fertigungsparameter durch die Verspannung des Pleuellagers zu sorgen. Weiterhin kann die Auswirkung der Fertigungstoleranz-bedingten Variation von Fertigungsparametern auf die Akustik verringert werden.

Fertigungsbedingte Toleranzen sorgen typischerweise für eine Abweichung der Pleuelachse des entsprechenden Pleuels um eine ideale Mittellage, die meist entlang der Zylinder-Achse ausgebildet ist. Daher führt ein bloßes Festlegen eines Versatzes zu unterschiedlichen Verspannungen des Pleuellagers entsprechend der Abweichung von der idealen Mittellage. Die erfindungsgemäße Nutzung der vorbestimmten Kraft ermöglicht einen reproduzierbaren, von fertigungsbedingten Toleranzen nahezu unabhängigen Grad an Verspannung mindestens eines Pleuellagers der Hubkolbenmaschine.

Die Erfindung kann es ermöglichen, die Pleuellager exakt so vorzuspannen, dass das Pleuellagerspiel reduziert wird. Es ist vorzugsweise möglich, das Pleuellager so weit zu verkippen, dass kein Pleuellagerspiel möglich ist.

Das Lagerspiel des Pleuellagers beschreibt eine Bewegbarkeit zwischen einem ersten und einem zweiten Lagerteil des Pleuellagers. Diese Bewegbarkeit wird für die erfindungsgemäße Hubkolbenmaschine durch eine Verspannung des Pleuellagers durch eine vorbestimmte Kraft eingeschränkt. Die dabei vorzugsweise realisierte Verkippung der Pleuelachse ist hierbei gleichbedeutend mit einer Auslenkung, insbesondere einer einseitigen Auslenkung, der Pleuelachse. Vorzugsweise bleiben die Achsen des Kurbelwellenzapfens und der Pleuellager parallel, wobei die Achsen der beiden Kolben geringfügig in axialer Richtung verkippt sind. Dadurch ergibt sich dann die vorzugsweise aus der Beaufschlagung des Pleuellagers mit der vorbestimmten Kraft vorliegende geringfügige Schrägstellung des ersten und des zweiten Pleuels bzw. Kolbenachse gegenüber dem ohne vorbestimmte Kraft vorliegenden unverspannten Zustand.

Bei Verwendung eines vorgegebenen Montagemaßes oder vorgegebenen Kippwinkels, könnte einerseits noch Lagerspiel in den Pleuellagern verbleiben, was sich negativ auf die Akustik auswirken könnte und daher nur eine relativ geringe Verringerung des Schallpegels gegenüber dem nicht vorgespannten Zustand der Pleuellager liefern würde. Andererseits könnte eine zu starke Vorspannung zu unnötig hohem Strombedarf der Hubkolbenmaschine im Betrieb und zu einem erhöhten Verschleiß durch Abrieb führen.

Daher wird im Rahmen einer bevorzugten Ausgestaltung die Pleuelachse des Pleuels derart gekippt, dass die entlang der Richtung der Wellen-Achse wirkende Kraft auf das wenigstens eine Pleuellager zu einer Hubkolbenmaschine mit einer vorbestimmten gewünschten Verringerung des Schallpegels, einem vorbestimmten gewünschten Energieverbrauch und einem vorbestimmten gewünschten Verschleiß führt.

Die im Rahmen einer Druckluftversorgungsanlage zur Verwendung in einem pneumatischen Druckluftversorgungssystem hier beschriebene Hubkolbenmaschine, insbesondere der Kolbenkompressor, kann jedoch grundsätzlich auch in anderen Anwendungsgebieten Verwendung finden, insbesondere dort wo --wie bei den genannten Druckluftversorgungsanlagen-- flexibel und dynamisch vergleichsweise hohe Druckamplituden erzielt werden sollen. Weiterhin kann die hier beschriebene Hubkolbenmaschine auch zur Bereitstellung von Unterdruck, beispielsweise innerhalb einer Vakuumpumpe verwendet werden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Ein Pleuel kann starr ohne Gelenklager oder auch gelenkig, insbesondere mit Gelenklager, ausgebildet sein. Ein Kolben kann am Pleuel gehalten oder an dem Pleuel einstückig ausgebildet sein.

In einer vorteilhaften Weiterbildung ist die erfindungsgemäße Hubkolbenmaschine dadurch gekennzeichnet, dass die Pleuelachse des Pleuels gegen die radial ausgerichtete Zylinder-Achse durch die vorbestimmte Kraft derart gekippt ist, dass das wenigstens eine Pleuellager vorgespannt ist. Hierbei ist die Pleuelachse des Pleuels in einer Variante dieser Weiterbildung relativ zur Zylinderachse insgesamt gekippt, wobei dies vorzugsweise zu einer Auslenkung, insbesondere zu einer einseitigen Auslenkung, insbesondere zu einer unteren Auslenkung der Pleuelachse führt.

In Rahmen einer bevorzugten Weiterbildung der Hubkolbenmaschine wird die entlang der Richtung der Wellen-Achse wirkende Kraft auf das wenigstens eine Pleuellager von einem axial verfahrbaren Kippelement aufgebracht. Das axial verfahrbare Kippelement kann beispielsweise ein Stempel, ein Stößel, ein Rohr oder dergleichen sein. Das axial verfahrbare Kippelement ist bevorzugt an einer Montagevorrichtung angeordnet, die dazu ausgebildet ist an der Hubkolbenmaschine derart angeordnet zu werden, dass das Kippelement gegen das wenigstens eine Pleuellager gefahren werden kann.

Besonders bevorzugt ist die Montagevorrichtung derart ausgebildet, dass das Kippelement gegen einen Innenring des Pleuellagers verfahren werden kann, um auf dieses entlang der Richtung der Wellen-Achse eine Kraft aufzubringen. Das axial verfahrbaren Kippelement wird bevorzugt gegen das wenigstens eine Pleuellager, insbesondere den Innenring des Pleuellagers verfahren, um eine Kraft auf das wenigstens eine Pleuellager, insbesondere den Innenring des Pleuellagers aufzubringen und das Pleuellager dadurch zu verspannen, vorzugsweise die Pleuelachse des Pleuels gegen die radial ausgerichtete Zylinder-Achse beispielsweise in Richtung der Wellen-Achse zu verkippen. Besonders bevorzugt kann das axial verfahrbare Kippelement so lange verfahren werden, bis eine vorbestimmte Gegenkraft erreicht ist, die aus der Verkippung des Pleuels resultiert. Das axial verfahrbare Kippelement kann also beispielsweise so lange verfahren werden, bis das Pleuel sich nicht mehr kraftfrei weiter verschieben lässt, d.h. das Lagerspiel im Pleuellager ist null. Das axial verfahrbare Kippelement kann auch beispielsweise so lange verfahren werden, bis eine definierte Kraft auf das Pleuel ausgeübt wird, d.h. das Pleuellager ist mit einer definierten Kraft vorgespannt, die für alle mit Fertigungstoleranzen behafteten Pleuellager identisch ist. Bevorzugt kann das axial verfahrbare Kippelement so gegen das Pleuellager, insbesondere den Innenring des Pleuellagers gefahren werden, dass dieses das Pleuellager, insbesondere den Innenring des Pleuellagers um ein Maß versetzt, das unterhalb der Beanspruchungsgrenze des Pleuellagers liegt. Beispielsweise kann das Pleuellager, insbesondere der Innenring des Pleuellagers um 30 µm oder bis zu 50 µm gegenüber einem unverspannten Zustand des Pleuellagers versetzt sein.

Das axial verfahrbare Kippelement hat bevorzugt ein selbsthemmendes Gewinde und kann beispielsweise von einem Motor mit einstellbarem, vorbestimmtem AbschaltDrehmoment verfahren werden. Bevorzugt ist das axial verfahrbare Kippelement ausgebildet, so lange in Kontakt mit dem Pleuellager, insbesondere Innenring des Pleuellagers, verbleiben zu können, bis ein exzentrischer Kurbelwellenzapfen in das Pleuellager eingeführt ist. Hierfür kann das mit dem Pleuellager in Kontakt stehende distale Ende des axial verfahrbaren Kippelements derart ausgeformt sein, dass der Kurbelwellenzapfen in das Pleuellager eingeführt werden kann, ohne dass der Kurbelwellenzapfen das Kippelement direkt berührt. Bevorzugt ist ein mit dem Pleuellager in Kontakt stehendes distales Ende des axial verfahrbaren Kippelements konstruktiv so gestaltet, dass es am axial verfahrbaren Kippelement kardanisch aufgehängt ist, um sich während eines ganzen Verfahrweges des Kippelements auf der Kontaktfläche des Pleuellager-Innenrings flächig abzustützen. Besonders bevorzugt wird der Kurbelwellenzapfen mit dem Innenring des Pleuellagers verpresst. Erst danach werden das axial verfahrbare Kippelement und die Montagevorrichtung entfernt. Dies ermöglicht es, den Kurbelwellenzapfen mit dem Pleuellager zu verbinden, ohne dass die Einstellung des Verkippungswinkels verändert wird.

Vorzugsweise weist das Kippelement einen Antrieb auf, der bei Vorliegen eines vorbestimmten Drehmoments gestoppt werden kann, so dass eine vordefinierte Kraft auf das Pleuellager ausgeübt werden kann.

Bevorzugt kann die Pleuelachse des Pleuels verkippt werden durch das Aufbringen der vorbestimmten Kraft auf das Pleuellager, wodurch vorzugsweise ein Versetzen und/oder Verschieben des Pleuellagers relativ zur radial ausgerichteten Zylinder-Achse beispielsweise in Richtung der Wellen-Achse oder entgegen der Wellen-Achse bewirkt werden.

Durch eine solche Verkippung infolge einer Verschiebung eines Pleuellagers wird bevorzugt sowohl ein erstes Pleuellager, vorzugsweise ein Kugellager direkt auf der Kurbelwelle, als auch ein zweites Pleuellager, vorzugsweise ein Gelenklager, insbesondere ein Nadellager, das indirekt an die Kurbelwelle gekoppelt ist, insbesondere direkt am ersten Pleuel angebracht ist, vorgespannt. Diese Vorspannung führt jedenfalls zu einer Reduzierung der freien Lagerspiele in dem ersten und zweiten Pleuellager, sodass diese generell weniger Spiel und damit eine geringere Geräuschentwicklung aufweisen.

Das Konzept der Erfindung bietet damit die Basis für einen Einsatz eines Pleuellagers (z. B. ein Wälzlager oder Gelenk- und/oder Gleitlager), mit reduziertem Spiel und umgeht gleichwohl die bekannten technischen Probleme (z. B. bei niedrigen Temperaturen) von völlig spielfreien Lagern. Eine elastische, insbesondere gummielastische Entkopplung der einzelnen Lagerstellen der Pleuellager (z. B. radiale und axiale Lagerstellen) ist zwar zusätzlich auch bei dem Konzept der Erfindung möglich; jedoch nicht mehr mit hohem technischen Aufwand erforderlich. Das Konzept der Erfindung erweist sich somit als ein einfaches und mit vergleichsweise geringerem kommerziellen Aufwand realisierbares Konzept.

Es zeigt sich nach Durchführung von Versuchen zur Geräuschreduzierung und unter Akustikmessungen in den Messergebnissen für einen Gesamtschallpegel mit verschiedenen Montagemaßen [X] eine starke Abhängigkeit zwischen Geräusch und Montagemaß für eine Pleuellagerposition auf dem Kurbelwellenzapfen der Kurbelwelle in Abhängigkeit der Montageposition [X].

Vorzugsweise ist das wenigstens eine Pleuel durch die wirkende Kraft mit einem Verkippungswinkel gegen die radial ausgerichtete Zylinder-Achse gekippt. Ein solcher Verkippungswinkel führt bevorzugt zu einem Verkippungsabstand, der bevorzugt bis zu 0,5 mm, ggfs. bis zu 1 mm oder 2 mm betragen kann. Konzeptionell ist der Verkippungsabstand zwischen der Pleuelachse und der Zylinder-Achse am Kolben am geringsten und am Kurbelwellenzapfen am größten. In einer alternativen Weiterbildung der Erfindung führt die vorbestimmte Kraft nicht zu einem Verkippungswinkel und entsprechend nicht zu einem Verkippungsabstand, da das Pleuellager durch die vorbestimmte Kraft ohne Veränderung der entsprechenden Pleuelachse vorgespannt ist.

Im Rahmen einer besonders bevorzugten Weiterbildung ist das wenigstens eine Pleuel mittels wenigstens einem Pleuellager, das heißt bevorzugt
- mit einem einzigen Pleuellager direkt oder indirekt, oder
- mit einem ersten und einem zweiten Pleuellager, jeweils direkt oder indirekt bevorzugt mit einem ersten direkt und einem zweiten Pleuellager indirekt, oder
- mit einem ersten und einem zweiten Pleuellager und ggfs. einem oder mehreren weiten Pleuellagern, jeweils direkt oder indirekt
   am Kurbelwellenzapfen gelagert. Unter einer direkten Lagerung ist zu verstehen, dass das Pleuel direkt über das Pleuellager durch den Kurbelwellenzapfen bewegt wird. Unter einer indirekten Lagerung ist zu verstehen, dass das Pleuel über ein weiteres Bauteil (beispielsweise bevorzugt das erste Pleuel), das heißt indirekt, durch den Kurbelwellenzapfen bewegt wird, jedoch nicht direkt an diesem gelagert ist. Die indirekte Lagerung des Pleuellagers am Kurbelwellenzapfen ist hier insbesondere derart zu verstehen, dass beispielsweise das zweite Pleuel über ein Koppelelement, insbesondere einen Lagerbolzen mit dem ersten Pleuel verbunden ist und keine (direkte) Verbindung zum Kurbelwellenzapfen hat.

Im Rahmen einer besonders bevorzugten Weiterbildung kann ein erstes entlang einer ersten Pleuelachse verlaufendes Pleuel direkt mittels dem exzentrischen Kurbelwellenzapfen bewegbar sein und ein zweites entlang einer zweiten Pleuelachse verlaufendes Pleuel indirekt mittels des Kurbelwellenzapfens, insbesondere direkt mittels des ersten Pleuels, bewegbar sein. Vorzugsweise ist bei dieser Weiterbildung das zweite Pleuel (als Schlepppleuel) vom ersten Pleuel (als Antriebspleuel) bewegbar, wobei das erste Pleuel direkt vom Kurbelwellenzapfen bewegt wird. Eine vorgenannte Weiterbildung hat sich insbesondere bewährt zur Realisierung eines zweistufigen Kolbenkompressors, der auch als TWIN-Kompressor zu bezeichnen ist, nämlich mit zwei gegenüberliegenden Kolben entlang einer radial ausgerichteten Zylinderachse.

Das wenigstens eine erste oder zweite Pleuellager des wenigstens einen ersten oder zweiten Pleuels ist bevorzugt derart versetzt zur radial ausgerichteten Zylinderachse gelagert, dass dabei die erste oder zweite Pleuelachse in Richtung der Wellen-Achse mit der vorbestimmten Kraft beaufschlagt ist. Insbesondere verläuft die erste oder zweite Pleuelachse verkippt im Vergleich zu einem ohne vorbestimmte Kraft vorliegenden unverspannten Zustand, vorzugsweise außerhalb der radial ausgerichteten Zylinderachse.

Bevorzugt ist die Pleuelachse durch die vorbestimmte Kraft derart gekippt, dass das wenigstens eine erste oder zweite Pleuellager vorgespannt ist. Insofern wird im Folgenden unter einem signifikanten, wenn auch kleinen Kippwinkel, ein solcher Kippwinkel verstanden, der derart groß ist, dass sich eine Vorspannung im Pleuellager unter Verringerung des freien Lagerspiels des Pleuellagers bemerkbar macht. Ein Verkippungswinkel der Verkippung liegt bevorzugt zwischen mehr als 0° und weniger als 5°. Die Größe des Verkippungswinkels korreliert jedoch nicht mit dem vorliegenden Grad an Verspannung des Pleuellagers. So kann in einer erfindungsgemäßen Hubkolbenmaschine kein Verkippungswinkel ausgebildet sein, während eine Verspannung des Pleuellagers durch die beaufschlagte vorbestimmte Kraft vorliegt.

Bevorzugt ist das wenigstens eine Pleuellager, insbesondere ein erstes Pleuellager eines ersten Pleuels, direkt am Kurbelwellenzapfen gelagert und durch die vorbestimmte Kraft in Richtung der Wellen-Achse versetzt und dadurch mindestens ein Pleuellager vorgespannt. Bevorzugt wird mittels des versetzten Pleuellagers die oben genannte Verkippung der Pleuelachse des Pleuels erreicht.

Vorzugsweise ist zusätzlich oder alternativ das wenigstens eine Pleuellager, insbesondere ein zweites Pleuellager eines zweiten Pleuels, indirekt am Kurbelzapfen gelagert, bevorzugt am ersten Pleuel. Das zweite Pleuel ist dabei typischerweise über einen separaten Lagerbolzen mit dem ersten Pleuel verbunden und hat keine unmittelbare Verbindung zum Kurbelwellenzapfen. Bevorzugt ist das wenigstens eine Pleuellager, insbesondere das zweite Pleuellager des zweiten Pleuels, in Richtung der Wellen-Achse mit der vorbestimmten Kraft beaufschlagt. Über die beaufschlagte Kraft wird somit bevorzugt die oben genannte Verkippung der Pleuelachse des Pleuels erreicht, insbesondere gegen die radial ausgerichtete Zylinder-Achse in Richtung der Wellen-Achse.

Grundsätzlich hat es sich als vorteilhaft erwiesen, dass wenigstens ein Pleuellager des wenigstens einen Pleuels, insbesondere ein erstes Pleuellager des ersten Pleuels, das direkt am Kurbelwellenzapfen gelagert ist, mit der vorbestimmten Kraft in Richtung der Wellen-Achse beaufschlagt ist, derart, dass wenigstens ein Pleuellager vorgespannt ist und zusätzlich auch ein zweites Pleuellager des zweiten Pleuels, das bevorzugt indirekt am Kurbelwellenzapfen, nämlich direkt am ersten Pleuel gelagert ist, durch die vorbestimmte Kraft in Richtung der Wellen-Achse vorgespannt ist.

Ein besonderer Vorteil der vorgenannten Weiterbildungen liegt darin, dass die Ausrichtung des exzentrischen Kurbelwellenzapfens und/oder der Antriebswellenkopplung entlang einer axial ausgerichteten Wellenachse unverändert bleibt, insofern also der Kurbelwellenzapfen und die Wellenachse parallel ausgerichtet sind entlang der axial ausgerichteten Wellenachse. Eine gemäß dem Konzept der Erfindung vorgesehene Verspannung des Pleuellagers und insbesondere eine Verkippung der Pleuelachse des Pleuels, wird gemäß dieser Weiterbildung besonders bevorzugt über das Beaufschlagen des Pleuellagers mit der vorbestimmten Kraft erreicht.

Mit anderen Worten wird das Pleuellager durch die vorbestimmte Kraft vorzugsweise ausgestellt, bevorzugt einwärts ausgestellt, das heißt in Richtung des Anschlusses des Kurbelwellenzapfens an die Kurbelwelle beziehungsweise in Richtung der Antriebswellenkopplung versetzt. Eine Ausstellung des Pleuellagers nach einwärts hat, durch die typischerweise damit verbundene Verringerung des Abstands zwischen Motorlager und Pleuellager eine weitere Verbesserung der Akustik zur Folge. Grundsätzlich kann jedoch zum Erreichen der Akustikvorteile das Pleuellager auch nach außen, das heißt in eine Richtung weg vom Kurbelwellenzapfen, das heißt weg von der Antriebswellenkopplung realisiert werden.

Besonders bevorzugt kann im Rahmen eines sogenannten TWIN-Kompressors ein erstes Pleuellager direkt am Kurbelwellenzapfen gelagert sein und eine Mittenachse des ersten Pleuellagers im Vergleich zu einem ohne vorbestimmte Kraft vorliegenden unverspannten Zustand des Pleuellagers entlang der Richtung der Wellen-Achse versetzt angeordnet sein. Das Einstellen eines Versatzes führt typischerweise zu einer Verkippung der Zylinderachse relativ zu der Mittenachse. Bevorzugt ist zusätzlich oder alternativ ein zweites Pleuellager indirekt am Kurbelwellenzapfen, insbesondere direkt am ersten Pleuel, gelagert und eine Mittenachse des zweiten Pleuellagers entlang der Richtung der Wellen-Achse versetzt angeordnet.

Ein Versatz kann beispielsweise auch zwischen der radial ausgerichtete Zylinder-Achse und einer Ring-Ebene eines Ring-Kugellagers, beispielsweise dem ersten Pleuellager, und/oder einer Mittenachse eines Gleit-Lagers, beispielsweise dem zweitem Pleuellager, durch die vorbestimmte Kraft bewirkt sein.

Wie bereits zuvor erwähnt, dienen die Maßnahmen einer Verkippung der Pleuelachse beziehungsweise zusätzlich oder alternativ eines Versetzens des Pleuellagers dazu, dass das wenigstens eine Pleuellager vorgespannt ist und dessen Pleuellagerspiel auf eine Obergrenze reduziert wird, die unterhalb des freien Pleuellagerspiels im unverspannten Zustand des Lagers liegt.

Konkret ist im Rahmen der Weiterbildung vorgesehen, dass
- die Pleuelachse des wenigstens einen Pleuels soweit gegen die radial ausgerichtete Zylinderachse in Richtung der Wellen-Achse gekippt ist, dass
- das wenigstens eine Pleuellager mit der Pleuelachse soweit außerhalb der radial ausgerichteten Zylinderachse gelagert ist, dass
   das wenigstens eine Pleuellager mit der vorbestimmten Kraft vorgespannt ist.

In der vorgenannten Weiterbildung wird folglich eine Mindestkippung erreicht, durch die das Pleuellager vorgespannt ist. Eine solche Kippung kann in verschiede Richtungen senkrecht zur Pleuelachse erfolgen. Hierbei kann es insbesondere in beispielsweise einer linken und einer rechten Richtung der Verkippung dazu kommen, dass Bauteilabhängig ein unterschiedlicher Versatz notwendig ist, um die Mindestkippung, also eine Kippung die notwendig ist, um das wenigstens eine Pleuellager vorzuspannen, zu erreichen.

In einer besonders bevorzugten Weiterbildung ist das Lagerspiel wenigstens eines der Pleuellager, insbesondere das axiale und/oder radiale Lagerspiel, der Hubkolbenmaschine auf eine Obergrenze reduziert, die unterhalb eines freien Lagerspiels im unverspannten Zustand liegt. Das Lagerspiel des Pleuellagers in dieser Weiterbildung ist zumindest teilweise, also beispielsweise in axialer oder radialer Richtung relativ zur Pleuelachse, reduziert gegenüber dem Lagerspiel in einem unverspannten Zustand der Hubkolbenmaschine. Die Bewegbarkeit zwischen einem ersten und zweiten Lagerteil des Pleuellagers ist folglich in mindestens einer Bewegungsachse (also für zwei sich entgegenstehende Bewegungsrichtungen) gegenüber einem unverspannten Zustand reduziert.

Bevorzugt ist die Pleuelachse durch die beaufschlagte vorbestimmte Kraft nach einwärts zum Kurbelwellenzapfen, insbesondere einwärts zur Antriebswellenkopplung, gekippt. Hierbei bedeutet eine Verkippung einwärts zum Kurbelwellenzapfen, dass die Pleuelachse in Richtung des Anschlusses des Kurbelwellenzapfens an die Kurbelwelle gekippt ist, also der Winkel zwischen Pleuelachse und Kurbelwelle in dieser Richtung der Kurbelwelle spitzwinklig ist.

Zusätzlich oder alternativ ist das wenigstens eine Pleuellager durch die beaufschlagte vorbestimmte Kraft einwärts zum Kurbelwellenzapfen hin versetzt, insbesondere einwärts zur Antriebswellenkopplung und/oder zum Antrieb hin versetzt.

Im Rahmen einer weiteren Weiterbildung hat es sich als vorteilhaft erwiesen, dass ein erstes Pleuel mittels eines ersten Pleuellagers direkt am Kurbelwellenzapfen gelagert ist und an das erste Pleuel mittels einer Kolbenhalterung ein erster Kolben gehalten ist. Zusätzlich oder alternativ kann ein zweites Pleuel mittels eines zweiten Pleuellagers und eines Koppelelements, insbesondere eines Lagerbolzens, am ersten Pleuel befestigt sein und an dem zweiten Pleuel ein zweiter Kolben angeformt sein. In diesem Fall der Weiterbildung ist bevorzugt ein Schlepppleuel mit einem angeformten Kolben und ein Antriebspleuel mit einem daran gehaltenen Kolben realisiert. Grundsätzlich kann unabhängig von dieser Weiterbildung ein am Pleuel angeformter Kolben beziehungsweise ein am Pleuel gehaltener Kolbens je nach Bedarf realisiert sein. Für ein mit der (Niederdruck-) Verdichterstufe eines TWIN-Kompressors gebildetes Schlepppleuel hat sich vor allem ein angeformter Kolben bewährt. Für eine weiter unten erläuterte (Hochdruck-) Verdichterstufe eines TWIN-Kompressors hat sich vor allem ein Antriebspleuel mit einem daran gehaltenen Kolben bewährt.

Im Rahmen einer bevorzugten konstruktiven Realisierung kann das erste Pleuellager als ein Ring-Kugellager, insbesondere als ein Rillen-Kugellager oder Wälzlager jeglicher Art realisiert sein, das bevorzugt in Form eines Rillen-Kugellagers am Kurbelwellenzapfen, das heißt direkt am Kurbelwellenzapfen gebildet ist. Das erste Pleuellager kann auch beispielsweise ein Wälzlager in Form eines Schrägkugellagers sein. Zusätzlich oder alternativ kann das zweite Pleuellager als ein Gelenklager gebildet sein, insbesondere in Form eines Gleitlagers oder Wälzlagers am ersten Pleuel, besonders bevorzugt in Form eines Nadellagers.

Wie weiter oben bereits erwähnt, hat sich eine Hubkolbenmaschine als ein Kolbenkompressor mit einem zweistufigen Kompressor mit einer ersten und zweiten Verdichterstufe besonders bewährt für die Bereitstellung von Druckluft für eine Druckluftversorgungsanlage. Insbesondere kann der Zweistufenkompressor als ein TWIN-Kompressor gebildet sein.

Es ist insbesondere vorgesehen, dass
- ein erstes Pleuel der zweiten, insbesondere Hochdruck-, Verdichterstufe gebildet ist, wobei das erste Pleuel mittels eines ersten Pleuellagers direkt am Kurbelwellenzapfen gelagert ist.

Zusätzlich oder alternativ hat es sich als vorteilhaft erwiesen, dass das zweite Pleuel der ersten, insbesondere Niederdruck-, Verdichterstufe gebildet ist, wobei das zweite Pleuel mittels eines zweiten Pleuellagers und eines Koppelelement, insbesondere eines Lagerbolzens, direkt am ersten Pleuel gelagert ist.

Ein Axiallagerspiel des Pleuellagers liegt bevorzugt im Bereich von 0,1 bis 0,3 mm. Zusätzlich oder alternativ kann das Radiallagerspiel des Pleuellagers im Bereich von 0,05 bis 0,08 mm liegen.

Im Rahmen einer bevorzugten Weiterbildung des Hubkolbenmaschinenmontagesystems ist das axial verfahrbare Kippelement ausgebildet, eine Kraft auf einen Innenring des Pleuellagers (L1) entlang der Richtung der Wellen-Achse (E) aufzubringen, um das Pleuellager zu verspannen, wodurch vorzugsweise die Pleuelachse (Pa) des Pleuels (P1) in Richtung der Wellen-Achse (E) verkippen wird. Bevorzugt weist das axial verfahrbare Kippelement ein selbsthemmendes Gewinde auf.

Im Rahmen einer bevorzugten Weiterbildung des Verfahrens zur Montage und des Verfahrens zum Betrieb, umfasst das Verfahren die folgenden Verfahrensschritte zum Verkippen der Pleuelachse des Pleuels:
- Anordnen einer Montagevorrichtung mit einem axial verfahrbaren Kippelement, derart an der Hubkolbenmaschine derart, dass das Kippelement gegen das wenigstens eine Pleuellager gefahren werden kann, um auf dieses entlang der Richtung der Wellen-Achse eine Kraft aufzubringen, und
- Verfahren des verfahrbaren Kippelements gegen das wenigstens eine Pleuellager, wodurch die vorbestimmte Kraft auf das wenigstens eine Pleuellager aufgebracht wird und das wenigstens eine Pleuellager bezüglich des Kurbelwellenzapfens verspannt wird, wobei das verfahrbare Kippelement so lange verfahren wird, bis eine vorbestimmte Gegenkraft erreicht ist, die vorzugsweise aus einer Verkippung des Pleuels resultiert.

Bevorzugt wird das axial verfahrbare Kippelement gegen einen Innenring des Pleuellagers gefahren.

Besonders bevorzugt weist das Verfahren die folgenden weiteren Verfahrensschritte auf:
- Anordnen des Kurbelwellenzapfens und Verbinden derselben an dem Pleuel, derart, dass dieses mit dem Kurbelwellenzapfen bewegbar ist, und
- Verfahren des Kippelements vom Pleuellager weg und Entfernen der Montagevorrichtung von der Hubkolbenmaschine, nachdem der Kurbelwellenzapfen an dem Pleuel, insbesondere in dem Pleuellager, angeordnet ist.

Der Kurbelwellenzapfen kann beispielsweise mit Hilfe einer Pressverbindung mit dem Innenring des Pleuellagers verbunden werden, um diesen an dem Pleuel anzuordnen.

Die Hubkolbenmaschine ist in einer bevorzugten Ausgestaltung entsprechend des vorgenannten Verfahrens montiert und kann in dieser montierten Ausgestaltung betrieben werden.

Die Erfindung betrifft auch die Verwendung einer Hubkolbenmaschine in einem der erfindungsgemäßen Verfahren.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen, bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnungen.

Im Einzelnen zeigt die Zeichnung in:
FIG. 1: eine pneumatische Schaltung für eine Ausführungsform einer Druckluftversorgungsanlage mit angeschlossener Pneumatikanlage in Form einer Luftfederanlage für ein Fahrzeug, wobei ein im Detail D1 gezeigter zwei-stufiger und im Detail D2 gezeigter ein-stufiger Kolbenkompressor im Rahmen eines Luftverdichters die Luftfederanlage mit Druckluft versorgt über eine Lufttrockneranordnung und eine als entsperrbares Rückschlagventil ausgebildete Ventilanordnung, die über ein steuerbares Magnetventil schaltbar ist;
FIG. 2: einen Luftverdichter, eine Hubkolbenmaschine in Form eines zweistufigen Kolbenkompressors mit einem ersten Pleuel für einen Kolben einer zweiten (Hochdruck)-Stufe und einem zweiten Pleuel eines Luftverdichters einer ersten (Niederdruck)-Stufe mit Pleuellagern, in einer vor der Betriebsstellung unverspannten Einstellung eines vorläufigen Einbaus;
FIG. 3: jeweils eine Prinzipskizze eines Ausschnitts eines ersten Pleuellagers direkt am Kurbelwellenzapfen als ein Ring-Kugellager (FIG. 3A - in Ansicht A1 lastfrei, in Ansicht A2 unter Axiallast, in Ansicht A3 unter Axiallast und Radiallast) und eines zweiten Pleuellagers als ein Gelenklager in Form eines Gleitlagers zwischen dem Ring-Kugellager und einer Kolbenhalterung (FIG. 3B - lastfrei);
FIG. 4: der zwei-stufige Kolbenkompressor, bei dem zum Einbau die Pleuelachse des ersten Pleuels der zweiten (Hochdruck) Stufe gegen die radial ausgerichtete Zylinder-Achse in Richtung der Wellen-Achse gekippt ist indem ein erstes Pleuellager direkt am Kurbelwellenzapfen und ein zweites Pleuellager als Gelenklager mit der Pleuelachse soweit außerhalb der radial ausgerichtete Zylinder-Achse gelagert ist, dass das erste und zweite Pleuellager dadurch vorgespannt ist;
FIG. 5: eine Prinzipskizze eines Ausschnitts eines zwei-stufigen Kolbenkompressors mit einem ersten Pleuel für einen Kolben einer zweiten (Hochdruck)-Stufe und einem zweiten Pleuel eines Luftverdichters einer ersten (Niederdruck)-Stufe mit einem als Gelenklager, konkret als Nadellager, ausgebildeten Pleuellager, in einer vor der Betriebsstellung unverspannten Einstellung;
FIG. 6: den zwei-stufigen Kolbenkompressor der FIG. 5 in einer verspannten Einstellung;
FIG. 7: eine Prinzipskizze eines Ausschnitts eines zwei-stufigen Kolbenkompressors mit einem ersten Pleuel für einen Kolben einer zweiten (Hochdruck)-Stufe und einem zweiten Pleuel eines Luftverdichters einer ersten (Niederdruck)-Stufe mit Pleuellagern bevor dieser mit einem exzentrischen Kurbelwellenzapfen verbunden ist;
FIG. 8: den zwei-stufigen Kolbenkompressors der FIG. 7 mit einer an den Kolbenkompressor angeordneten Montagevorrichtung als Hubkolbenmaschinenmontagesystem;
FIG. 9: das Hubkolbenmaschinenmontagesystem der FIG. 8 beim Verspannen des ersten und des zweiten Pleuellagers;
FIG. 10: das Hubkolbenmaschinenmontagesystem der FIG. 9 beim Einführen eines exzentrischen Kurbelwellenzapfens in ein erstes Pleuellager des Kolbenkompressors;
FIG. 11: das Hubkolbenmaschinenmontagesystem der FIG. 10 beim Entfernen der Montagevorrichtung, nachdem ein exzentrischer Kurbelwellenzapfen in das erste Pleuellager eingeführt wurde;
FIG. 12: ein Blockdiagramm für ein Ausführungsbeispiel eines Verfahren zur Montage einer Hubkolbenmaschine.

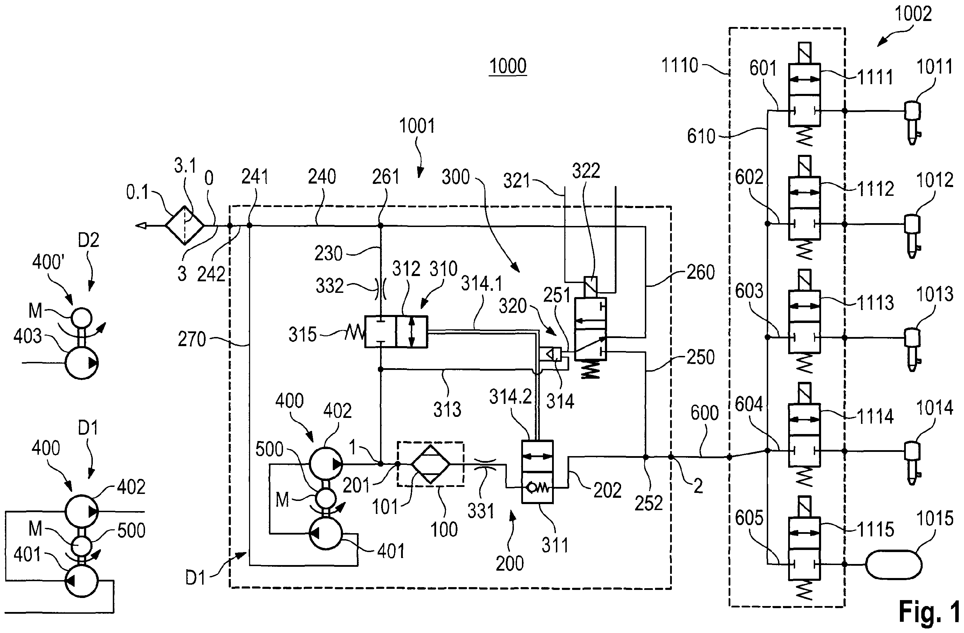

FIG. 1 zeigt im Detail D1 einen Luftverdichter mit einer Hubkolbenmaschine in Form eines zweistufigen Kolbenkompressors 400 mit einer ersten Verdichterstufe 401 und einer zweiten Verdichterstufe 402, der über einen Motor 500 als Antriebsmotor M angetrieben wird.

Als Alternative ist im Detail D2 ein Luftverdichter mit einer Hubkolbenmaschine in Form eines einstufigen Kolbenkompressors 400' mit einer einzigen Verdichterstufe 403 gezeigt, der über einen Antriebsmotor M angetrieben wird.

Solche Kolbenkompressoren 400, 400' werden bevorzugt für pneumatische Druckluftversorgungssysteme 1000 eingesetzt wie eines in FIG. 1 gezeigt ist.

FIG. 1 zeigt eine Ausführungsform eines pneumatischen Schaltplans eines pneumatischen Druckluftversorgungssystems 1000 mit einer Druckluftversorgungsanlage 1001 mit einer Lufttrockneranordnung 100 und einer Pneumatikanlage 1002 in Form einer Luftfederanlage. Die Druckluftversorgungsanlage 1001 dient zum Betreiben der Pneumatikanlage 1002. Die Druckluftversorgungsanlage 1001 weist dazu eine vorerwähnte Druckluftzuführung 1 und einen Druckluftanschluss 2 zur Pneumatikanlage 1002 auf.

Die Druckluftzuführung 1 ist vorliegend mit einer Luftzuführung 0, einem der Luftzuführung 0 vorgeordneten Luftfilter 0.1 und einem der Luftzuführung 0 über die Luftzuführungsleitung 270 nachgeordneten über den Motor 500 angetriebenen Luftverdichter gebildet. Der Luftverdichter ist hier als Beispiel einer Hubkolbenmaschine in Form eines zweistufigen Luftverdichters, nämlich eines zweistufigen Kolbenkompressors 400 mit einer ersten Verdichterstufe 401 und einer zweiten Verdichterstufe 402 sowie einem nicht näher bezeichnetem Anschluss der Druckluftzuführung 1 gebildet.

An den Anschluss der Druckluftzuführung 1 schließt sich in der Pneumatikhauptleitung 200 an den ersten Teil 201 der Pneumatikhauptleitung der Anschluss des Trockenbehälters 101 der Lufttrockneranordnung 100 an. Der Lufttrockner der Lufttrockneranordnung 100 ist weiter mittels dem zweiten Teil 202 der Pneumatikhauptleitung zur Führung einer Druckluftströmung DL zur Pneumatikanlage 1002 pneumatisch verbunden.

In der in FIG. 1 gezeigten Hauptansicht ist vorgesehen, dass eine Zweigleitung 230 an der Druckluftzuführung 1 von dem ersten Teil 201 der Pneumatikhauptleitung 200 abzweigt und an eine Entlüftungsleitung 240 zur Entlüftung 3 zu einem der Entlüftung nachgeschalteten Entlüftungsfilter 3.1 anschließt; die Entlüftung ist mittels weiterem Zweiganschluss 241 und einem Anschlussabschnitt 242 an die Entlüftungsleitung 240 angeschlossen und auch an eine weitere Entlüftungsleitung 260 über den Zweiganschluss 261.

Die Pneumatikhauptleitung 200 verbindet somit pneumatisch die Druckluftzuführung 1 und den Druckluftanschluss 2, wobei in der Pneumatikhauptleitung 200 die Lufttrockneranordnung 100 und weiter in Richtung des Druckluftanschlusses 2 ein entsperrbares Rückschlagventil 311 sowie eine erste Drossel 331 angeordnet ist.

Das pneumatisch entsperrbare Rückschlagventil 311 ist vorliegend ein Teil der Wegeventilanordnung 310, die neben dem entsperrbaren Rückschlagventil 311 ein steuerbares Entlüftungsventil 312 in Reihenschaltung mit einer zweiten Drossel 332 in der Entlüftungsleitung 230 aufweist. Das pneumatisch entsperrbare Rückschlagventil 311 ist vorliegend ebenfalls in einer Reihenschaltung mit der ersten Drossel 331 in der Pneumatikhauptleitung 200 angeordnet, wobei die Pneumatikhauptleitung 200 die einzige pneumatische Leitung ist, die sich bis zur Pneumatikanlage 1002 mit einer weiteren Pneumatikleitung 600 fortsetzt. Die Reihenanordnung aus erster Drossel 331 und pneumatisch entsperrbarem Rückschlagventil 311 ist also zwischen der Lufttrockneranordnung 100 und dem Druckluftanschluss 2 zur Pneumatikanlage 1002 in der Pneumatikhauptleitung 200 angeordnet.

Weiter weist die Druckluftversorgungsanlage 1001 eine mit der Pneumatikhauptleitung 200 und dem Entlüftungsanschluss 3 und weiterem Filter 0.3 und/oder Schalldämpfer pneumatisch verbundene zweite pneumatische Verbindung auf; nämlich die vorerwähnte Entlüftungsleitung 230. Die Nennweite der zweiten Drossel 332 liegt vorliegend oberhalb der Nennweite der ersten Drossel 331.

Das in der zweiten pneumatischen Verbindung angeordnete Entlüftungsventil 312 ist vorliegend als ein vom pneumatisch entsperrbaren Rückschlagventil 311 separates 2/2-Wege-Ventil in der Entlüftungsleitung 230 gebildet.

Das steuerbare Entlüftungsventil 312 ist somit als indirekt geschaltetes Relaisventil Teil einer Ventilanordnung 300 mit einem Steuerventil 320 in Form eines 3/2-Wege-Magnetventils. Das Steuerventil 320 kann mit einem über eine elektrische Steuerleitung 321 übermittelbaren elektrischen Steuersignal, in Form eines Spannungs- und/oder Stromsignals, an die Spule 322 des Steuerventils 320 elektrisch angesteuert werden. Bei dieser elektrischen Ansteuerung kann das Steuerventil 320 von der in FIG. 1 gezeigten stromlos die pneumatische Steuerleitung 250 unterbrechende Stellung in eine pneumatisch geöffnete Stellung überführt werden, in der über die pneumatische Steuerleitung 250 aus der Pneumatikhauptleitung 200 abgeleiteter Druck zur pneumatischen Steuerung des steuerbaren Entlüftungsventils 312 als Relaisventil weitergegeben wird.

Das steuerbare Entlüftungsventil 312 ist vorliegend zusätzlich mit einer Druckbegrenzung 313 versehen. Die Druckbegrenzung 313 greift über eine pneumatische Steuerleitung vor dem Entlüftungsventil 312 --konkret zwischen zweiter Drossel 332 und Entlüftungsventil 312-- einen Druck ab, welcher bei übersteigen eines Schwelldrucks einen Kolben 314 des Entlüftungsventils 312 gegen die Kraft einer Feder 315, vorliegend einer einstellbaren Feder, vom Ventilsitz abhebt --also das steuerbare Entlüftungsventil 312 auch ohne Ansteuerung über das Steuerventil 320 in die geöffnete Stellung bringt. Auf diese Weise wird vermieden, dass ein ungewollt zu hoher Druck im pneumatischen System 1000, insbesondere n der Pneumatikanlage 1002 entsteht.

Das Steuerventil 320 trennt im vorliegend geschlossenen Zustand die Steuerleitung 250 und ist über eine weitere Entlüftungsleitung 260 mit der Entlüftungsleitung 240 zur Entlüftung 3 pneumatisch verbunden. Mit anderen Worten ist ein zwischen Entlüftungsventil 312 und Steuerventil 320 liegender Leitungsabschnitt 251 der Steuerleitung 250 bei der in FIG. 1 gezeigten geschlossenen Stellung des Steuerventils 320 mit der weiteren Entlüftungsleitung 260 zwischen Steuerventil 320 und Entlüftung 3 verbunden. Die weitere Entlüftungsleitung 260 schließt dazu im weiteren Zweiganschluss 261 an die Entlüftungsleitung 230 und die weitere Entlüftungsleitung 240 an. Somit werden diese in einem zwischen dem weiteren Zweiganschluss 261 und der Entlüftung 3 liegenden Abschnitt einer Entlüftungsleitung 240 zusammengeführt.

Über das Steuerventil 320 kann also bei Anstehen eines von der Pneumatikhauptleitung 200 oder von der weiteren Pneumatikleitung 600 über die pneumatische Steuerleitung 250 vom Steueranschluss 252 abgeleiteten Steuerdrucks das Entlüftungsventil 312 unter Druckbeaufschlagung des Kolbens 314 geöffnet werden.

Der Kolben 314 ist vorliegend als ein Doppelkolben ausgeführt, so dass mit besonderem Vorteil versehen, das Überführen des Steuerventils 320 in den --im obigen Sinnegeöffneten Zustand nicht nur zum Öffnen des Entlüftungsventils 312 führt, sondern auch zum Entsperren des entsperrbaren Rückschlagventils 311. Mit anderen Worten dient das Steuerventil 320 der Magnetventilanordnung 300 zur Ansteuerung des separat vom Rückschlagventil 311 vorgesehenen Entlüftungsventils 312 als auch des Rückschlagventils 311. Dies führt zu einem beidseitigen pneumatischen Öffnen der Lufttrockneranordnung 100 bei Überführung des Steuerventils 320 in die geöffnete Stellung. Diese weitere durch die Druckluftversorgungsanlage 1001 einnehmbare Betriebsstellung kann im Betrieb zum Entlüften der Pneumatikanlage 1002 und gleichzeitig zum Regenerieren der Lufttrockneranordnung 100 genutzt werden.

Die in FIG. 1 gezeigte Betriebsstellung der Druckluftversorgungsanlage 1001 dient unter Durchfluss des Rückschlagventils 311 in Durchlassrichtung vor allem zum Befüllen der Pneumatikanlage 1002 über die Pneumatikhauptleitung 200 sowie die weitere Pneumatikleitung 600.

Die Pneumatikanlage 1002 der FIG. 1 in Form einer Luftfederanlage weist in diesem Fall eine Anzahl von vier sogenannten Bälgen 1011, 1012, 1013, 1014 auf, die jeweils einem Rad eines nicht näher dargestellten PKW-Fahrzeugs zugeordnet sind und jeweils eine Luftfeder des Fahrzeugs bilden.

Des Weiteren weist die Luftfederanlage einen Speicher 1015 zur Speicherung schnellverfügbarer Druckluft für die Bälge 1011, 1012, 1013, 1014 auf. Jene Bälge 1011 bis 1014 sind jeweils in einer von einer Galerie 610 abgehenden Federzweigleitung 601, 602, 603, 604 jeweils ein Magnetventil 1111, 1112, 1113, 1114 vorgeordnet, welches jeweils als Niveauregelventil zum Öffnen oder Schließen einer mit einem Balg 1011 bis 1014 gebildeten Luftfeder dient. Die Magnetventile 1111 bis 1114 in den Federzweigleitungen 601 bis 604 sind als 2/2-Wegeventile in einem Ventilblock 1110 ausgebildet. Einem Speicher 1015 ist in einer Speicherzweigleitung 605 ein Magnetventil 1115 in Form eines weiteren 2/2-Wegeventils als Speicherventil vorgeordnet. Die Magnetventile 1111 bis 1115 sind mittels der Feder- und Speicherzweigleitungen 601 bis 604 bzw. 605 an eine gemeinsame Sammelleitung, nämlich die vorbezeichnete Galerie 610 und dann an die weitere Pneumatikleitung 600 angeschlossen. Die Galerie 610 ist so über die Pneumatikleitung 600 an den Druckluftanschluss 2 der Druckluftversorgungsanlage 1001 pneumatisch angeschlossen. Vorliegend sind die Magnetventile 1111 bis 1115 in einem Ventilblock 1110 angeordnet. Die Magnetventile sind in FIG. 1 in einem stromlosen Zustand gezeigt - dabei sind die Magnetventile 1111 bis 1115 als stromlos geschlossene Magnetventile gebildet. Andere, hier nicht gezeigte abgewandelte Ausführungsformen können eine andere Anordnung der Magnetventile realisieren - es können auch weniger Magnetventile im Rahmen des Ventilblocks 1010 genutzt werden.

Zum Befüllen der Pneumatikanlage 1002 werden die den Bälgen 1011 bis 1014 vorgeordneten Magnetventile 1111 bis 1114 und/oder das dem Speicher 1015 vorgeordnete Magnetventil 1115 in eine geöffnete Stellung gebracht.

Gleichwohl ist --aufgrund des vorliegend nicht entsperrten Rückschlagventils 311-- ein Betrieb der Pneumatikanlage 1002 entkoppelt von der Druckluftversorgungsanlage 1001 möglich. Mit anderen Worten kann ein Querschalten von Bälgen 1011 bis 1014 (z. B. im Off-Road-Betrieb eines Fahrzeugs) ein Befüllen der Bälge 1011 bis 1014 aus dem Speicher 1015 oder eine Druckmessung in der Pneumatikanlage 1002 über die Galerie 610 vorgenommen werden, ohne dass die Druckluftversorgungsanlage 1001 druckbeaufschlagt wird.

Insbesondere wird die Lufttrockneranordnung 100 aufgrund des vom Druckluftanschluss 2 zur Druckluftzuführung 1 gesperrten Rückschlagventils 311 und des geschlossenen Steuerventils 320 vor unnötiger Beaufschlagung mit Druckluft geschützt. In vorteilhafter Weise ist also eine Beaufschlagung der Lufttrockneranordnung 100 mit Druckluft nicht bei jeder Betriebsstellung der Pneumatikanlage 1002 vorteilhaft. Vielmehr ist es für eine effektive und schnelle Regeneration der Lufttrockneranlage 100 vorteilhaft, wenn diese ausschließlich im Falle einer Entlüftung der Pneumatikanlage 1002 vom Druckluftanschluss 2 zur Druckluftzuführung 1 vorgenommen wird mit entsperrtem Rückschlagventil 311.

Dazu wird --wie oben erläutert-- das Steuerventil 320 in eine geöffnete Schaltstellung gebracht, so dass sowohl das Entlüftungsventil 312 öffnet als auch das Rückschlagventil 311 entsperrt wird. Eine Entlüftung der Pneumatikanlage 1002 kann über die erste Drossel 331, das entsperrte Rückschlagventil 311 unter Regeneration der Lufttrockneranordnung 100 sowie anschließend über die zweite Drossel 332 und das geöffnete Entlüftungsventil 312 zur Entlüftung 3 erfolgen.

Anders ausgedrückt ist zur gleichzeitigen entsperrenden Betätigung des Rückschlagventils 311 und zum öffnenden Betätigen des Entlüftungsventils 312 ein vom Steuerventil 320 pneumatisch ansteuerbarer Steuerkolben 314 als Doppelrelaiskolben vorgesehen mit einem Relaisentlüftungskörper 314.1 des Entlüftungsventils und einem Relaisentsperrkörper 314.2 für das entsperrbare Rückschlagventil 311. Der Doppelrelaiskolben verdeutlicht vorliegendes Prinzip zum Entsperren des Rückschlagventils 311 und gleichzeitiges Betätigen des Entlüftungsventils 312 über die zwei gekoppelten Betätigungselemente --nämlich über den Relaisentsperrkörper 314.2 und den Relaisentlüftungskörper 314.1-- die als einstückiger Doppelrelaiskörper oder in einer Abwandlung auch als separate Körper ausgebildet werden können. Andere, hier nicht gezeigte abgewandelte Ausführungsformen können eine andere Anordnung der Ventile, Drosseln, Leitungen und Verzweigungen realisieren. Im Rahmen einer besonders bevorzugten Abwandlung einer konstruktiven Realisierung können die vorgenannten Betätigungselemente des Doppelrelaiskolbens als einstückige Bereiche eines Doppelrelaiskolbens, gebildet sein.

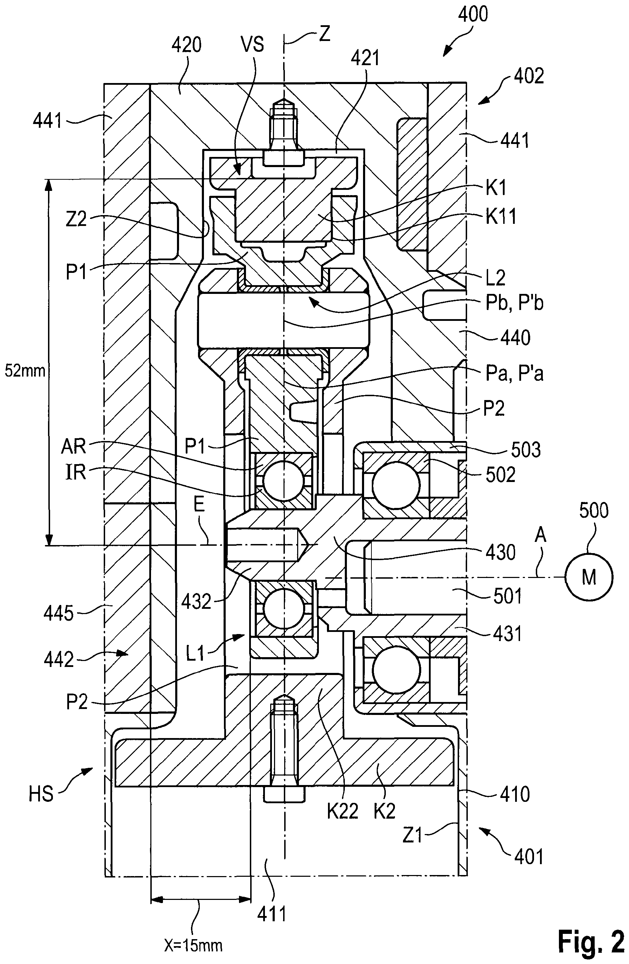

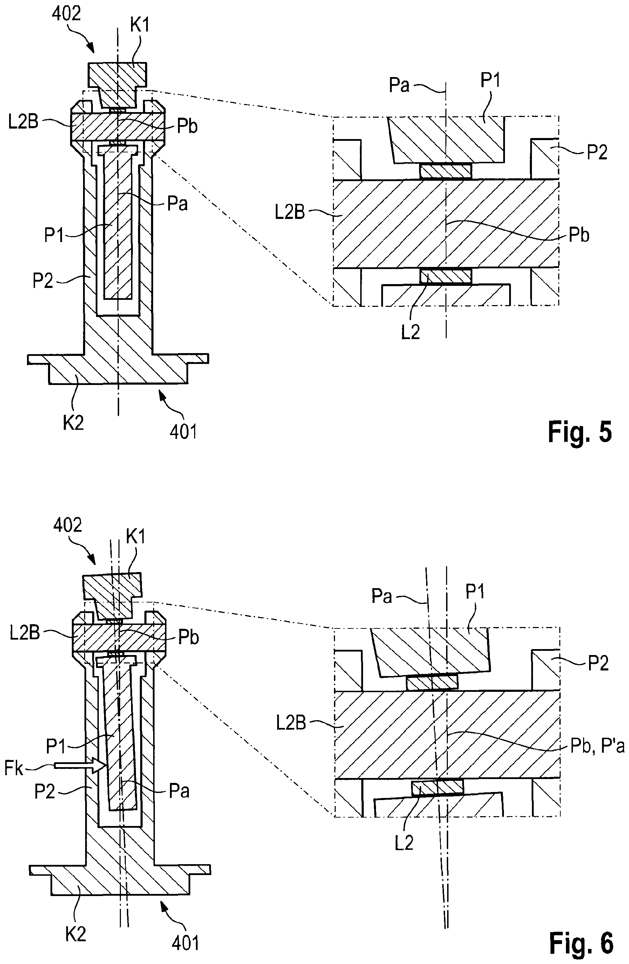

FIG. 2 bis FIG. 4 erläutern nun die Details des Konzepts der Erfindung am Beispiel einer Hubkolbenmaschine speziell in Form des zweistufigen Kolbenkompressors 400 der FIG. 1. FIG. 5 bis FIG. 11 erläutern Details wie die Hubkolbenmaschine in Form des zweistufigen Kolbenkompressors 400 der FIG. 1 montiert wird.

Zunächst Bezug nehmend auf FIG. 2 zeigt diese eine Hubkolbenmaschine in Form eines Doppelverdichters gemäß dem Detail D1 der FIG. 1, nämlich einen als zweistufigen Kolbenkompressor 400 ausgeführten TWIN-Kompressor mit einer ersten Verdichterstufe 401 und einer zweiten Verdichterstufe 402 sowie mit einem Motor 500, der als Antriebsmotor M mit einer Antriebswelle 501 an eine Kurbelwelle 430 des Kolbenkompressors 400 gekoppelt ist.

Dazu weist die Kurbelwelle 430 eine Antriebswellenkopplung 431 auf, die als Aufnahme für die Antriebswelle 501 des Antriebsmotors M dient. Die Kurbelwelle 430 ist außenseitig der Antriebswellenkopplung 431 in einem Lager 502 drehbar gelagert, das vorliegend als Ring-Kugellager ausgeführt ist. Das Lager 502 wiederum ist mit einem entsprechenden Haltemechanismus am Motorgehäuse 503 gehalten. Auf diese Weise ist die im Betrieb mittels des Antriebsmotors M antreibbare Kurbelwelle 430 über die genannte Antriebswellenkopplung 431 zum Ankoppeln der Antriebswelle 501 des Antriebsmotors 500 zum Antreiben der Kurbelwelle 430 ausgebildet.

Die Kurbelwelle 430 weist darüber hinaus einen exzentrisch zur Achse A an der Kurbelwelle 430 ausgebildeten exzentrischen Kurbelwellenzapfen 432 auf, der sich entlang einer Exzenterachse erstreckt, welche hier als axial ausgerichtete Wellen-Achse E bezeichnet ist.

Unter drehendem Antrieb der Kurbelwelle 430 ist der exzentrische Kurbelwellenzapfen 432 damit ausgebildet, ein erstes Pleuel P1 direkt und ein zweites Pleuel P2 indirekt anzutreiben. Dazu ist der exzentrische Kurbelwellenzapfen 432 mittels eines ersten Pleuellagers L1 zur direkten Lagerung und zum direkten Antrieb des ersten Pleuels P1 ausgebildet. Das zweite Pleuel P2 wiederum ist an das als Antriebspleuel P1 funktionierende erste Pleuel P1, d. h. als Schlepppleuel, über ein weiteres Pleuellager L2 bewegbar gelagert. Das erste Pleuellager L1 ist als Ring-Kugellager ausgebildet. In einem nicht gezeigten alternativen Ausführungsbeispiel ist das erste Pleuellager L1 als Schrägkugellager ausgeführt. Das zweite Pleuellager L2 ist als Gelenklager in Form eines Gleitlagers ausgebildet. In einem nicht gezeigten alternativen Ausführungsbeispiel ist das zweite Pleuellager L2 als Nadellager ausgeführt.

Der erste Kolben K1 ist mittels einer Kolbenhalterung K11 als separates Teil in das Kopfende des ersten Pleuels P1 eingesetzt und dort gehalten. Der zweite Kolben K2 ist integral und einstückig am Kopfende K22 des zweiten Pleuels P2 angeformt - also entlang einer radial ausgerichteten Zylinder-Achse Z distal gegenüberliegend dem ersten Kolben K1. Das zweite Pleuel P2 ist dazu als einstückiges, in etwa ringartiges Bauteil -- wie in FIG. 2 ersichtlich-- am zweiten Pleuellager L2 aufgehängt.

Bei dieser Konstruktion ist unter drehendem Antrieb der Kurbelwelle 430 eine exzentrische Drehbewegung des Kurbelwellenzapfens 432 im Betrieb des Kompressors 400 erreichbar, sodass der erste und zweite Kolben K1, K2 mit einer Hin-und-HerBewegung zur Verdichtung von Druckluft in der entsprechenden zweiten und ersten Verdichterstufe 402, 401 jeweils bewegt werden.

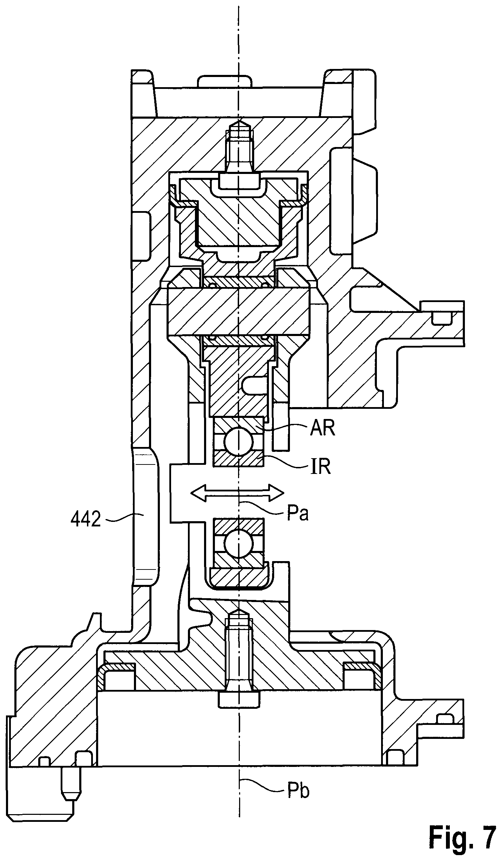

Der zweite Kolben K2 der ersten Verdichterstufe 401 bewegt sich dazu in einem Zylinderhubraum 411 des ersten Zylinders 410 in der ersten (Niederdruck-) Verdichterstufe 401. Der erste Kolben K1 bewegt sich dazu in einem Zylinderhubraum 421 eines zweiten Zylinders 420 der zweiten (Hochdruck-) Verdichterstufe 402. Der erste und zweite Zylinder 410, 420 sind Teil eines Gehäuses 440 des gesamten Luftverdichters mit Kolbenkompressor 400, Antriebsmotor M und Kurbelwelle 430. Das Gehäuse 440 des Luftverdichters ist durch weitere Bauteile 441 an dem Gehäuse einer Druckluftversorgungsanlage 1001, wie sie in FIG.1 gezeigt ist, gehalten. Das Gehäuse 440 hat in diesem Ausführungsbeispiel eine Öffnung 442, die insbesondere für die Montage des Kompressors 400 verwendet wird (s. FIG. 7 bis FIG. 10). Nach der Montage wird die Öffnung 442 typischerweise durch einen Montagedeckel 445 verschlossen.

FIG. 2 zeigt den TWIN-Kompressor 400, vorliegend in einer Betriebsstellung, gemäß der der zweite Kolben K2 der (Niederdruck-) Verdichterstufe 401 in einer Hubstellung HS, also im unteren Totpunkt, steht, das heißt, die Verdichtung der im Hubraum 411 befindlichen Luft steht bevor. Dagegen befindet sich der erste Kolben K1 der zweiten Verdichterstufe als 402 in einer Verdichtungsstellung VS, also im oberen Totpunkt des ersten Kolbens K1, das heißt aus der zweiten Hochdruckstufe 402 wird Druckluft verdichtet abführbar zur Druckluftversorgungsanlage 1001.

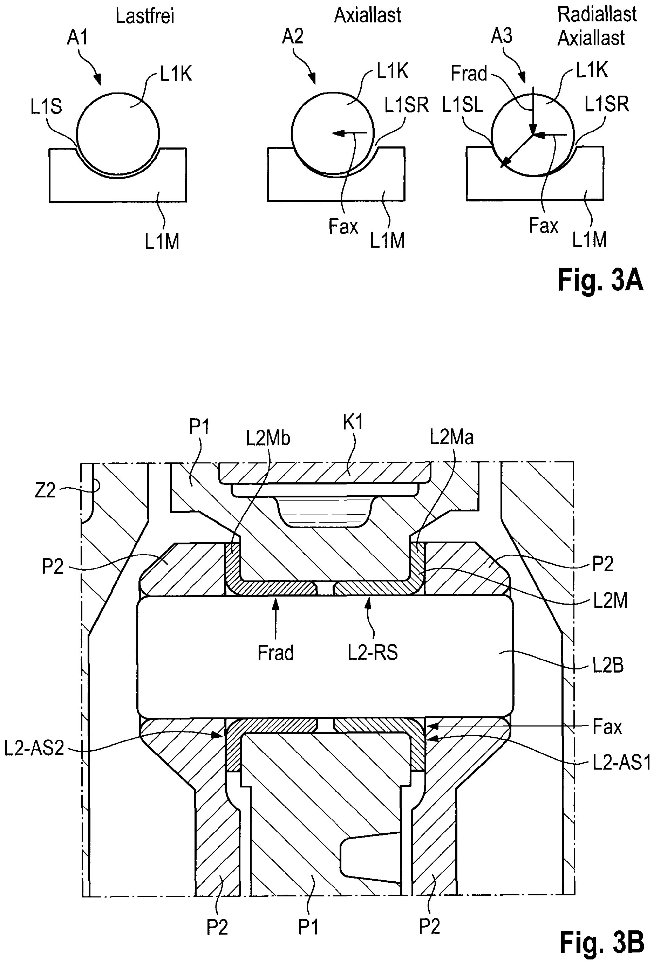

Im Folgenden wird hinsichtlich der Montage des Kolbenkompressors 400 Bezug genommen auf FIG. 2 und FIG. 3.

Die Bewegung des ersten und zweiten Kolbens K1, K2 im Betrieb des Kolbenkompressors 400 erfolgt abgesehen von einer für die Pleuelbewegung typischen seitlichen Taumelbewegung grundsätzlich entlang einer radial ausgerichteten Zylinderachse Z. Diese liegt mittensymmetrisch zu Zylinderlaufflächen Z1 beziehungsweise Z2 des ersten beziehungsweise zweiten Zylinderhubraums 411, 421 für den zweiten, beziehungsweise ersten Kolben K2, K1 des ersten beziehungsweise zweiten Zylinders 410, 420. In FIG. 2 beträgt die Pleuellänge 52,00 mm für das erste Pleuel P1 als Beispiel für die Größenordnung der Hochdruckstufe 420 des Kolbenkompressors 400.

Die radial ausgerichtete Zylinderachse Z ist insofern radial orientiert, als dass sie entlang eines Radius um die axial ausgerichtete Wellenachse E (Exzenterachse E) verläuft. Die axial ausgerichtete Wellenachse E verläuft in diesem Ausführungsbeispiel exakt senkrecht zur radial ausgerichteten Zylinderachse Z. Das heißt, der exzentrische Kurbelwellenzapfen 432 der Kurbelwelle 430 ist ebenfalls exakt senkrecht zur radial ausgerichteten Zylinderachse Z im Kolbenkompressor 400 angeordnet. Ein hinlänglich verlässlicher und dichtender Lauf des zweiten und ersten Kolbens K2, K1 in der ersten (Niederdruck-) Verdichterstufe bzw. zweiten (Hochdruck-) Verdichterstufe 401, 402 ist somit aufgrund der Laufrichtung der Kolben K2, K1 ebenfalls entlang der radial ausgerichteten Zylinderachse Z gewährleistet.

Dazu wird die Anordnung des ersten Pleuels P1 mit Kolben K1 beziehungsweise des zweiten Pleuels P2 mit Kolben K2 unter Lagerung derselben mittels dem ersten Pleuellager L1 beziehungsweise dem zweiten Pleuellager L2 exakt entlang der radial ausgerichteten Zylinderachse Z vorgenommen; dies jedoch zunächst vorläufig mit einem hier angezeigten Montagemaß von X = 15 mm als Beispiel. Das Montagemaß X gibt einen Abstand zwischen der Gehäuseaußenwand des Gehäuses 440 und einer Planfläche des ersten Pleuellagers L1 an. Alternativ kann ein Montagemaß X beispielsweise auch von einer der Zylinderlaufflächen Z1 oder Z2 aus gemessen werden (nicht gezeigt).

Bei dieser Einbausituation stellt sich eine in FIG. 3A dargestellte Lagerbelastung und Lagerspiel des ersten Pleuellagers L1 gemäß der Situation A1 dar. Das zweite Pleuellager L2 (s. FIG. 3B) hat ein Radiallagerspiel L2-RS und ein antriebswellenseitiges Axiallagerspiel L2-AS1 und ein diesem gegenüberliegendes Axiallagerspiel L2-AS2; in der Ansicht der FIG. 3B, also rechts und links des ersten Pleuels P1, zwischen dem ersten Pleuel P1 und dem zweiten Pleuel P2.

Wie des Weiteren in FIG. 3B erkennbar, sind die Lagerspiele L2-RS und L2-AS1, L2-AS2 zwischen dem zweiten Pleuel P2 und einem Lagerbolzen L2B und dem ersten Pleuel P1 mit einer entsprechenden Lagermanschette L2M abgefedert. Damit handelt es sich bei dem zweiten Pleuellager L2 um ein echtes Gelenkgleitlager - die Lagermanschette L2M ist vorliegend als ringförmige Lagermanschette zweischalig mit zwei Lagermanschettenteilen L2Ma, L2Mb ausgeführt.

Entsprechend ist in FIG. 2, beziehungsweise im Detail der FIG. 3A eine Lagerkugel L1K mit Lagermanschette L1M erkennbar, die wiederum als ringförmige Manschette zur Darstellung des Ring-Kugellagers L1 mit einem Innenring IR und einem Außenring AR ausgeführt ist. Das Lagerspiel L1S des ersten Pleuellagers L1 ist in FIG. 3A als Abstand zwischen der Lagerkugel L1K und der Lagermanschette L1M symmetrisch auf beiden Seiten dargestellt.

Diese Situation in FIG. 3A (A1) und FIG. 3B besteht jedoch nur nach einer vorläufigen Montage wie sie in FIG. 2 das heißt lastfrei für die Pleuellager P1, P2, L1, L2 vorliegt. Über den in FIG. 2 dargestellten Montagedeckel 445 kann eine Last auf den Pleuel P1 aufgebracht werden, die zu einer Auslenkung des Pleuels führt. Anstelle eines Gelenkgleitlagers kann für L2 auch ein Nadellager vorgesehen werden.

FIG. 3A zeigt für die Situation einer lediglich axialen Last in der Darstellung A2 und für die Situation einer zusätzlichen radialen Last in der Darstellung A3, dass die Lagerkugel L1K relativ zur Lagermanschette L1M eben kein symmetrisches Lagerspiel L1S aufweist; vielmehr ist ein in der Abbildung A3 der FIG. 3A dargestelltes linksseitiges Lagerspiel L1SL infolge der wirkenden Radial- und Axialkräfte Frad, Fax sehr viel geringer als das rechtsseitige Lagerspiel L1SR. Mit anderen Worten, die resultierende im Betrieb wirkende Kraft F verringert die Lagerspiele L1SL, L1SR unsymmetrisch, was hier am Beispiel des ersten Pleuellagers L1 als Ring-Kugellager erläutert wurde.

Gleiches gilt analog auch für das zweite Pleuellager L2. Bei ähnlicher Lastsituation einer resultierenden Kraft F (nicht gezeigt in FIG. 3B) werden sowohl das Lagerspiel L2RS als auch die Lagerspiele L2AS1, L2AS2 unsymmetrisch verändert.

Die Erfindung hat erkannt, dass wechselseitige Belastungen, wie sie typischerweise während eines Betriebs einer Hubkolbenmaschine auftreten, zu einem Wechsel der Pleuelanordnung relativ zu einem Pleuellager führen. Ein derartiger Wechsel der Pleuelanordnung durch sich natürlich verändernde Lagerspiele führt zu Körpergeräuschen an den Lagern, Pleueln und schließlich der Kurbelwelle 430, was zu einer erheblich gesteigerten Akustik des Kolbenkompressors 400 infolge der Übertragung auf die Gehäuse 440 sowie den Antriebsmotor M und die weiteren Gehäuse 441 führt. Die Akustik wird dabei von den innerhalb einer Hubkolbenmaschine wirkenden großen Beschleunigungskräften unterstützt.

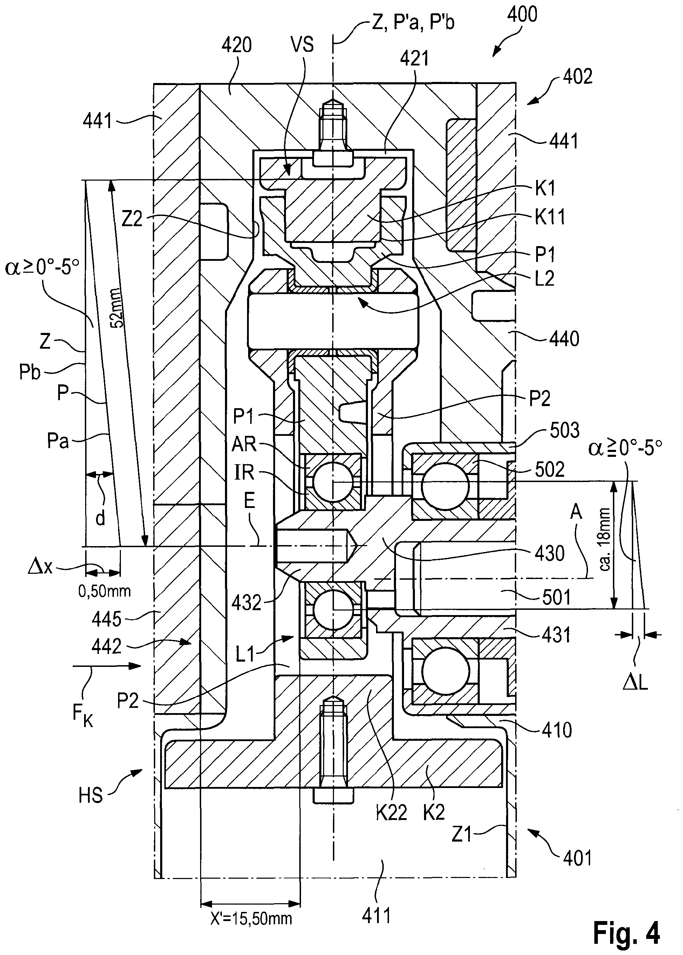

Das Konzept der Erfindung sieht deswegen vor, dass eine in FIG. 4 dargestellte Pleuelachse Pa eines Pleuels P1, P2, durch eine entlang der Richtung der Wellen-Achse E auf das wenigstens eine Pleuellager L11, L2 des Pleuels wirkende vorbestimmte Kraft Fk, bezüglich des Kurbelwellenzapfens 432 verspannt ist. Hierdurch ist in dem vorliegenden Ausführungsbeispiel die radial ausgerichtete Zylinderachse Z in Richtung der Wellen-Achse E gekippt. Die Pleuelachse Pa des Pleuels P1 ist eine Längsachse, die den Mittelpunkt des ersten Pleuellagers L1 des ersten Pleuels P1 und einen Mittelpunkt des ersten Kolbens K1 schneidet, d.h. die Pleuelachse Pa entspricht einer Mittenachse des Pleuels P1.

FIG. 4 zeigt dazu einen Verkippungswinkel *α* an, der in diesem Ausführungsbeispiel zwischen *α* ≥0° bis 5° liegt. Aus Gründen der Übersichtlichkeit ist die vorliegende sehr kleine Verkippung in der Beschriftung der Darstellung nicht maßstabsgetreu wiedergegeben. Die Länge des Pleuels P1 beträgt im folgenden Beispiel 52 mm. Die Verkippung der Pleuelachse Pa des ersten Pleuels P1 mit der vorbestimmten Kraft Fk um einen sich daraus resultierenden Verkippungswinkel von *α* ≥ 0° bis 5° wirkt sich ersichtlich auf den zunehmenden Verkippungsabstand d zwischen der ursprünglich ohne vorbestimmte Kraft Fk im entspannten Zustand vorliegenden Pleuelachse Pa' und der Pleuelachse Pa im dargestellten verspannten Zustand des ersten Pleuels P1 aus; dieser nimmt nämlich vom ersten Kolben K1 zum Kurbelwellenzapfen 432 hin zu. Das heißt, die Pleuelachse Pa verläuft mit zunehmendem Verkippungsabstand d zwischen der Pleuelachse Pa und der ursprünglichen Pleuelachse Pa' und zwar (abgesehen vom Scheitelpunkt des Winkels *α* auf Höhe des oberen Druckpunkts des ersten Kolbens K1) außerhalb der ursprünglichen Pleuelachse Pa'. Die ursprüngliche Pleuelachse Pa' ist in dem dargestellten Ausführungsbespiel entlang der radial ausgerichteten Zylinderachse Z ausgebildet. In anderen, nicht dargestellten, Ausführungsbeispielen ist die ursprüngliche Pleuelachse nicht identisch mit der Zylinderachse , insbesondere bezüglich der Zylinderachse zur Wellen-Achse E gekippt. Insbesondere ist die ursprüngliche Pleuelachse in nicht dargestellten Ausführungsbeispielen identisch zu der Pleuelachse im verspannten Zustand des Pleuellagers.

Die Verkippung der Pleuelachse Pa gegen die ursprüngliche Pleuelachse Pa' ist so groß (bevorzugt im Verkippungswinkelbereich *α* ≥ 0° bis 5°), dass das erste Pleuellager P1 vorgespannt ist. Mit anderen Worten, ist das in FIG. 3A in Ansicht A1 dargestellte symmetrische Lagerspiel L1S im nachfolgenden Montageschritt (das heißt nach der Vormontage wie diese in FIG. 2 dargestellt ist) unsymmetrisch verändert.

Die Veränderung, beziehungsweise die Vorspannung des ersten Pleuellagers L1 ist nun derart, dass diese einer Situation, wie sie in Ansicht A3 der FIG. 3A dargestellt ist, genau entgegen wirkt; das heißt, die Verkippung der Pleuelachse Pa gegenüber der ursprünglichen Lagerachse Pa' ist mit einem Lagerspiel L1SL ausgeführt, das größer ist als das Lagerspiel L1SR. Dies wird vorliegend bevorzugt dadurch erreicht, dass die Pleuelachse Pa des Pleuels P1 gekippt wird, indem eine entlang der Richtung der Wellen-Achse E wirkende Kraft auf den Innenring IR des wenigstens einen Pleuellagers L1 aufgebracht wird, bis eine vorbestimmte Gegenkraft erreicht ist, so dass eine Verkippung des Pleuels P1 resultiert. Es wird also wie in FIG. 4 dargestellt, die Pleuelachse Pa bei der Montage des ersten Pleuels P1 mit Pleuellager L1 auf den exzentrischen Kurbelwellenzapfen 432 bevorzugt dauerhaft verkippt. Die Verkippung ist vorliegend in Richtung zum Antriebsmotor M hin gerichtet, das heißt in Richtung zur Antriebswellenkopplung 431 vorgenommen. Die Verkippung wird durch das in FIG. 5 bis FIG. 11 gezeigte und später beschriebene Montageverfahren erreicht. Hierbei wirkt auf den Innenring IR des ersten Pleuellagers L1 eine vorbestimmte Kraft, so dass die erste Pleuelachse Pa verkippt wird woraus ein Versatz Δ x zwischen der Pleuelachse Pa und der ursprünglichen Pleuelachse Pa' und ein entsprechender Verkippungsabstand d resultiert. Dadurch wird die in Bezug auf FIG. 3A, Ansicht A3, erläuterte gegenläufige unsymmetrische Veränderung des Lagerspiels L1SL > L1SR des ersten Pleuellagers L1 erreicht. Dies ist auf der rechten Seite der FIG. 4 symbolisch dargestellt für den hier beispielhaft angenommenen Durchmesser des ersten Pleuellagers L1 in Form eines Ring-Kugellagers; mit einem Durchmesser von etwa 18 mm und aufgrund des Versatzes Δ x ergibt sich ein Lagerversatz Δ L aufgrund des in etwa gleichen Verkippungswinkels *α* ≥ 0° bis 5°. In einem anderen nicht dargestellten Ausführungsbeispiel führt die unsymmetrische Veränderung des ohne vorbestimmte Kraft Fk vorliegenden Lagerspiels zu einem reduzierten Lagerspiel L1SL.

Weiterhin führt ein aufgrund der vorbestimmten Kraft Fk reduziertes Lagerspiel des ersten Pleuellagers L1, beispielsweise ein reduziertes Lagerspiel L1SL, in zahlreichen nicht gezeigten Ausführungsbeispielen zu einem entgegengesetzt reduzierten Lagerspiel, beispielsweise L2SR, des zweiten Pleuellagers L2.

Die Konstruktion des ersten Pleuellagers L1 zur direkten Lagerung am exzentrischen Kurbelwellenzapfen 432 und dem zweiten Pleuellager L2 zur indirekten Lagerung am Kurbelwellenzapfen 432 --nämlich vielmehr zur direkten Lagerung des zweiten Pleuels P2 am ersten Pleuel P1 als Schlepppleuel-- kann im vorliegenden Ausführungsbeispiel dazu führen, dass sich aufgrund der am ersten Pleuellager L1 anliegenden vorbestimmten Kraft Fk auch eine Verkippung des zweiten Pleuels P2 ergibt (nicht gezeigt). D. h. in solch einem Fall können die Pleuelachsen Pa und Pb für das erste Pleuel P1 und das zweite Pleuel P2 identisch sein. Für den Fall, dass die Pleuelachsen Pa und Pb identisch sind, ist sowohl das erste als auch das zweite Pleuel P1, P2 gegenüber der ursprünglichen Pleuelachsen Pa' und Pb' um entspannten Zustand der Pleuel P1, P2 um den gleichen Verkippungswinkel *α* ≥ 0° bis 5° verkippt.

Die Größe des Versatzes für das zweite Pleuellager L2 ist geringer als die Größe des Versatzes des ersten Pleuellagers L1. Dies hat seine Ursache darin, dass die Länge des zweiten Pleuels P2 in Bezug auf die Exzenterachse E kürzer ist und in dem Beispiel bei 32,00 mm liegt.

Die Vorspannung des ersten und zweiten Pleuellagers L1, L2 wird durch jeweils entgegengesetzte unsymmetrische Verteilungen der Lagerspiele erreicht, die vorliegend durch eine Ausstellung der Pleuellager L1, L2 erreicht werden. Dies ist das Ergebnis des bevorzugt nach einwärts zum Kurbelwellenzapfen 432 und der Antriebswellenkupplung 431 wirkenden vorbestimmten Kraft Fk und der dadurch verkippten Pleuelachse Pa im Vergleich zur im entspannten Zustand vorliegenden ursprünglichen Pleuelachse Pa'.

Im Ergebnis wird so eine Hubkolbenmaschine in Form eines TWIN-Kompressors 400 mit einer ersten und zweiten Verdichterstufe 401, 402 zur Verfügung gestellt, bei dem ein erstes Pleuel P1 der zweiten, nämlich (Hochdruck-) Verdichterstufe 402 gebildet ist, wobei das erste Pleuel P1 mittels einem ersten Pleuellager L1 direkt am Kurbelwellenzapfen 432 gelagert ist --das heißt als Antriebspleuel-- und ein zweites Pleuel P2 der ersten, hier (Niederdruck-) Verdichterstufe 401 gebildet ist, wobei das zweite Pleuel P2 mittels einem zweiten Pleuellager L2 indirekt am Kurbelwellenzapfen, das heißt direkt am ersten Pleuel P1 --also als Schlepppleuel am Antriebspleuel-- gelagert ist.

In beiden Fällen ergibt sich die Verkippung der Pleuelachse Pa gegen die ursprüngliche Pleuelachse Pa' in Richtung der Wellen-Achse E durch eine Vorspannung der beiden Pleuellager L1, L2 mit der vorbestimmten Kraft Fk. Die freien Lagerspiele sind damit unsymmetrisch verändert, sodass ein Wechsel von Auflageflächen des ersten und zweiten Pleuels P1, P2 vermieden oder weitgehend reduziert wird, wodurch sich Schlaggeräusche in den Pleuellagern L1, L2 reduzieren. Dadurch ist eine Übertragung von Lagergeräuschen über die Pleuel P1, P2 zu dem Gehäuse 440 und zu weiteren Bauteile 441, die an dem Gehäuse 440 angebracht sind, weitestgehend reduziert.

Grundsätzlich gilt dies --auch wenn das vorbeschriebene innerhalb eines ersten Pleuellagers L1 als Ring-Kugellager und eines zweiten Pleuellagers P2 als Gelenkgleitlager beschrieben wurde-- auch für andere Lagertypen, wie beispielsweise Nadellager, und vor allem auf Basis anderer Konstruktionen, die eine direkte Lagerung sowohl des ersten Pleuels P1 als auch des zweiten Pleuels P2 direkt am Kurbelwellenzapfen 432 vorsehen. Mit anderen Worten, die vorbeschriebenen Ausführungsformen mit Antriebspleuel und Schlepppleuel erweisen sich zwar als besonders vorteilhaft für einen TWIN-Kompressor 400. Das Konzept der Erfindung ist jedoch nicht darauf beschränkt. Grundsätzlich können Lagergeräusche auch verringert werden in Bezug auf Ausführungsformen, bei denen beide Pleuel P1, P2 direkt am Kurbelwellenzapfen 432 gelagert sind, oder ein erstes und zweites Pleuel P1, P2 unabhängig gelagert sind, oder auch für lediglich einstufige Kompressoren 400' mit einem einzigen Pleuel; hier gilt beispielsweise analog die Beschreibung der FIG.4 für das erste Pleuel P1, wenn der Kolbenkompressor lediglich ein einziges Pleuel hat, beziehungsweise lediglich eine einzige Verdichterstufe 403 hat, wie sie im Detail D2 der FIG.1 gezeigt ist.

FIG. 5 und FIG. 6 zeigen jeweils eine Prinzipskizze eines Ausschnitts eines zweistufigen Kolbenkompressors 400 mit einem ersten Pleuel P1 für einen Kolben K1 einer zweiten (Hochdruck)-Stufe 402 und einem zweiten Pleuel P2 mit einem Kolben K2 einer ersten (Niederdruck)-Stufe 401. Das zweite Pleuel P2 ist fest mit einem Lagerbolzen L2B verbunden, um den herum das zweite Pleuellager L2 in Form eines Nadellagers angeordnet ist, das mit dem ersten Pleuel P1 verbunden ist. Die Pleuel P1 und P2 sind über den Lagerbolzen L2B und das zweite Pleuellager L2 verbunden. Weitere Details, des Kolbenkompressors 400 wurden in FIG. 5 und FIG. 6 der besseren Übersichtlichkeit halber vernachlässigt.

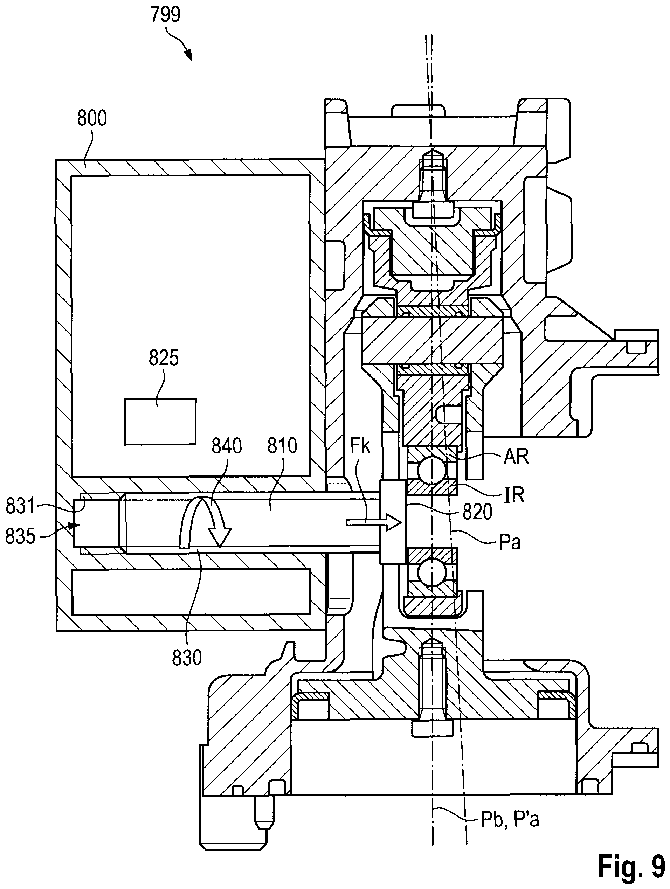

In FIG. 5 befindet sich der Kolbenkompressor 400 in einer vor dem Betrieb unverspannten Einstellung. In diesem Fall fallen bei idealer Geometrie aller genutzten Bauteile die Pleuelachse Pa des ersten Pleuels P1 und die Pleuelachse Pb des zweiten Pleuels P2 zusammen. Das zweite Pleuellager L2 hat in diesem Ausführungsbeispiel ein Lagerspiel zwischen 0 und 40 µm. Um in die Betriebsstellung überführt zu werden, wird das erste Pleuel P1 mit einer Kraft Fk verkippt (s. FIG. 6). In der gezeigten Prinzipskizze greift die Kraft Fk im unteren Drittel des Pleuels P1 an. Die Kraft Fk kann auch an anderen Teilen des Pleuels P1 angreifen. Besonders bevorzugt greift die Kraft Fk an einem Innenring IR eines ersten Pleuellagers L1 des ersten Pleuels P1 an (s. FIG. 9).

In FIG. 6 ist der zwei-stufige Kolbenkompressor 400 der in FIG. 5 ausschnittsweise gezeigt ist in einer verspannten Einstellung gezeigt. Die auf das erste Pleuel P1 einwirkende Kraft Fk verkippt die Pleuelachse Pa gegenüber der ursprünglichen im entspannten Zustand vorliegenden Pleuelachse Pa' (nicht gezeigt) und der zweiten Pleuelachse Pb. Die zweite Pleuelachse Pb bleibt in diesem Ausführungsbeispiel in seiner ursprünglichen Pleuelachse Pb', welche im vorliegenden Ausführungsbeispiel parallel zur Zylinderachse Z ist. Alternativ können auch beide Pleuelachsen Pa, Pb durch die vorbestimmte Kraft Fk gegen die ursprünglichen Pleuelachsen Pa', Pb' und vorliegend insbesondere gegen die Zylinderachse Z in Richtung einer Wellen-Achse E verkippt werden. In diesem Ausführungsbeispiel wird durch die Verkippung der Pleuelachse Pa zur Pleuelachse Pb das Lagerspiel des zweiten Pleuellagers L2 verringert. Die auf das erste Pleuel P1 aufgebrachte Kraft Fk erzeugt dafür eine Vorspannung im Pleuellager L2. Die aufzubringende Kraft Fk kann am Kraftangriffspunkt ermittelt werden, um eine bestimmte Vorspannung und/oder ein bestimmtes Lagerspiel einzustellen. Bevorzugt ist die Kraft Fk derart eingestellt, dass sie einerseits den durch das Lagerspiel erzeugten Schallpegel so weit wie möglich verringert und dass sie andererseits die für den Betrieb des Kolbenkompressors 400 notwendige Energie, die beispielsweise in Form eines Stroms zugeführt wird, möglichst nicht oder nur wenig erhöht. Zusätzlich wird die auf das Pleuel P1 aufzubringende Kraft Fk bevorzugt so gewählt und eingestellt, dass der Verschleiß an den Pleuellagern möglichst gering ausfällt. Die Kraft Fk wird also derart eingestellt, dass sie die drei vorgenannten Randbedingungen möglichst gut erfüllt, wobei die Priorisierung der Randbedingungen und deren Gewichtung von einem Nutzer und/oder einem Hersteller des Kolbenkompressors vorgegeben werden kann.

In dem in FIG. 6 gezeigten Ausführungsbeispiel ist im zweiten Pleuellager L2 vorrangig das Radialspiel und im ersten Pleuellager L1 vorrangig des Axialspiel reduziert.

Die Figuren FIG. 7 bis FIG. 11 zeigen ein Verfahren zur Montage einer erfindungsgemäßen Hubkolbenmaschine in Form eines zweistufigen Kompressors 400. Der Kolbenkompressor 400 entspricht dem in FIG. 2 und FIG. 4 gezeigten Kolbenkompressor 400.

FIG. 7 zeigt den Kolbenkompressor 400 ohne in dem Pleuellager L1 angeordneten exzentrischen Kurbelwellenzapfen 432.

In einem ersten Schritt des Montageverfahrens wird die Pleuelbaugruppe, aufweisend unter anderem das erste Pleuel P1 und das zweite Pleuel P2, in das Gehäuse 400 eingebracht. Das Pleuel P1 ist noch nicht mit dem Motor M und dem exzentrischen Kurbelwellenzapfen 432 verbunden. Aufgrund der Fertigungstoleranzen weisen die Pleuellager L1 und L2 je nach produziertem Kolbenkompressor 400 unterschiedliche axiale und radiale Lagerspiele auf. Insbesondere hat das zweite Pleuellager L2 in Form eines Gelenklagers typischerweise ein größeres Lagerspiel als das erste Pleuellager L1 in Form eines Ring-Kugellagers. Das zweite Pleuellager L2 in Form eines Gelenklagers ist in diesem Ausführungsbeispiel ein Gleitlager. Es können auch andere Pleuellager verwendet werden, beispielsweise kann das zweite Pleuellager L2 in Form eines Nadellagers ausgeführt sein und das erste Pleuellager L1 in Form eines Schrägkugellagers. Die Verwendung eines Nadellagers kann beispielsweise dazu dienen den Verschleiß zu verringern.

Weiterhin können in erfindungsgemäßen Ausführungsbeispielen Fertigungstoleranzen dazu führen, dass die erste und zweite ursprüngliche Pleuelachse Pa' und Pb' bereits vor einem Beaufschlagen mit der vorbestimmten Kraft Fk nicht miteinander und/oder mit der Zylinder-Achse Z übereinstimmen.

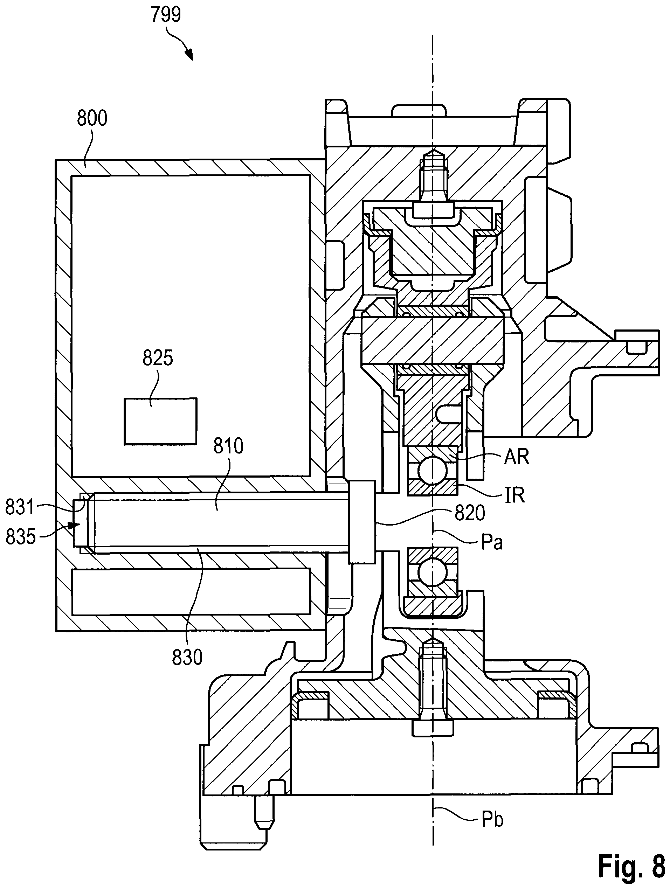

FIG. 8 zeigt ein Hubkolbenmaschinenmontagesystem 799 mit einer Montagevorrichtung 800 und einem zweistufigen Kolbenkompressor 400.

Die Montagevorrichtung 800 ist derart ausgebildet, dass sie an den Kolbenkompressor 400 angeordnet werden kann. In FIG. 8 ist die Montagevorrichtung an eine Außenfläche des Gehäuses 440 des Kolbenkompressors 400 angeordnet. Die Montagevorrichtung 800 dient dazu, zumindest einen Teil der zur Montage des Kolbenkompressors 400 notwendigen Montageschritte auszuführen, insbesondere dazu, die Pleuelachse Pa des ersten Pleuels P1 durch die vorbestimmte Kraft Fk gegen die ursprüngliche Pleuelachse Pa' zu verkippen, vorliegend insbesondere in Richtung der Wellen-Achse E zu verkippen, und dadurch das Pleuellager L1 bezüglich des Kurbelwellenzapfens 432 zu verspannen.

Die Montagevorrichtung 800 hat eine Bohrung 835, in der ein Stößel 810 angeordnet ist. Am distalen Ende des Stößels 810 befindet sich ein Stempel 820, der als Kippelement dient. Der Stößel 810 und Stempel 820 sind axial verfahrbar. Hierfür weist der Stößel 810 ein selbsthemmendes Gewinde 830 auf, das einem Gegengewinde 831 der Bohrung 835 gegenüberliegend angeordnet ist. Das Gewinde 830 und Gegengewinde 831 können beispielsweise Spindelgewinde sein. In diesem Ausführungsbeispiel ist in der Montagevorrichtung 800 ein Motor 825 vorgesehen, der dazu dient den Stößel 810 und Stempel 820 mit Hilfe der Gewinde 830 und Gegengewinde 831 axial zu verfahren. Alternativ können Stößel 810 und Stempel 820 beispielsweise auch manuell verfahrbar sein (nicht gezeigt).

Die Montagevorrichtung 800 ist derart an den Kolbenkompressor 400 angeordnet, dass der Stempel 820 gegen einen Innenring IR des ersten Pleuellagers L1 gedrückt werden kann, um die Pleuelachse Pa des ersten Pleuel P1 zu verkippen. Der Stempel 820 dient also hier als axial verfahrbares Kippelement. Hierfür kann die Bohrung 835 der Montagevorrichtung 800 derart ausgerichtet werden, dass Stößel 810 und Stempel 820 axial entlang der Richtung der Wellen-Achse E, d.h. senkrecht zur Richtung der Zylinder-Achse Z, verfahren werden können.

In FIG. 9 ist der Stempel 830 an den Innenring IR des ersten Pleuellagers L1 herangefahren und der Motor 825 erzeugt ein vorbestimmtes Drehmoment 840. Dieses Drehmoment 840 entspricht einer vorbestimmten Kraft Fk zum Verkippen der Pleuelachse Pa des ersten Pleuels P1 die ursprünglich vorliegende Pleuelachse Pa' in Richtung der Wellen-Achse E. Die auf den Innenring IR aufgebrachte Kraft Fk verkippt die Pleuelachsen Pa und Pb der Pleuel P1 und P2 zueinander (s. FIG. 6). Hierdurch werden die Pleuellager L1 und L2 vorgespannt und das Lagerspiel der Pleuellager L1 und L2 wird verringert. Sobald das vorbestimmte Drehmoment 840 und somit die vorbestimmte Kraft Fk erreicht sind, wird der Betrieb des Motors 825 eingestellt, so dass der Stempel 820 nicht weiter verfahren wird. Das selbsthemmende Gewinde 831 sorgt dafür, dass der Stempel 820 und Stößel 810 nicht zurück in die Bohrung 835 der Montagevorrichtung 800 gedrückt werden kann.

Die vorbestimmte Kraft Fk kann beispielsweise so eingestellt sein, dass der Stempel 820 so lange herausgefahren wird, bis sich die Pleuelachse Pa nicht mehr weiter kraftfrei verkippen lässt. Alternativ kann beispielsweise die vorbestimmte Kraft Fk auch so eingestellt sein, dass eine definierte Kraft Fk auf den Innenring IR des Pleuels P1 ausgeübt wird, so dass im Serienfertigungsprozess wiederholbar das erste Pleuellager L1 mit einer definierten Kraft Fk vorgespannt wird.

Bevorzugt ist der Stempel 820 so gegen den Innenring IR gefahren, dass dieser den Innenring IR des Pleuellagers L1 um ein Maß versetzt, das unterhalb der Beanspruchungsgrenze des Pleuellagers liegt. Beispielsweise kann der Innenring IR des Pleuellagers L1 um 30 µm oder bis zu 50 µm gegenüber dem unverspannten Zustand des Pleuellagers L1 versetzt sein. Dabei ist vorzugsweise ein Maß zu wählen, bei dem nur eine geringe Auswirkung auf eine Lebensdauer des Pleuellagers L1 zu erwarten ist.

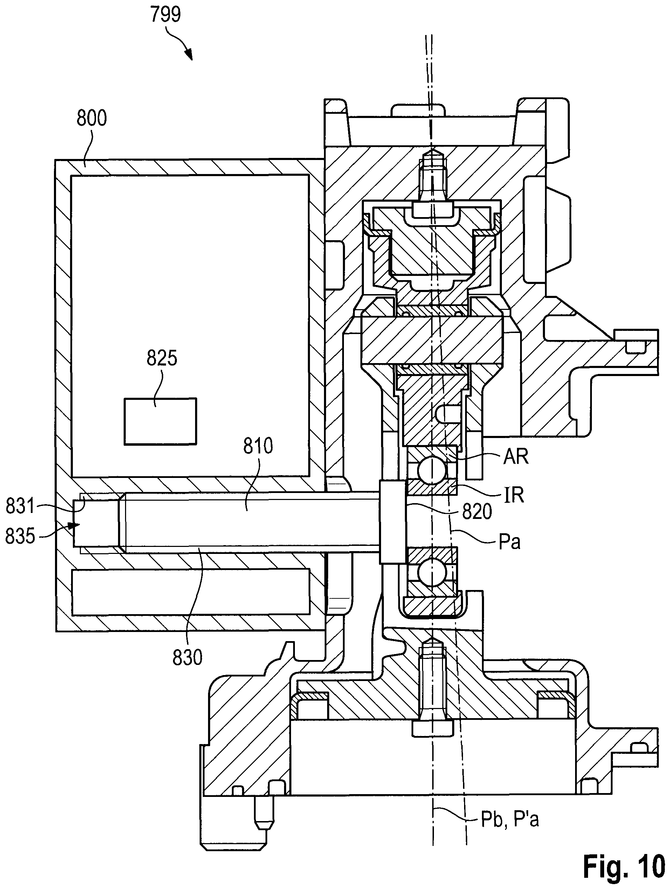

FIG. 10 zeigt, wie ein exzentrischer Kurbelwellenzapfen 432 in das erste Pleuellager L1 des Pleuels P1 eingeführt und mit dem Innenring IR in einer Pressverbindung verpresst wird. Hierbei hält der Stempel 820 den Innenring IR des ersten Pleuellagers L1 fest, so dass beim Einführen des Kurbelwellenzapfens 432 die Verkippung der Pleuelachse Pa bestehen bleibt. Die Selbsthemmung des selbsthemmenden Gewindes 830 verhindert also, dass ein für den Stempel 820 eingestelltes Montagemaß verstellt werden kann.

Der Stempel 820 ist derart ausgestaltet, dass der Kurbelwellenzapfen 432 in diesen hineingesteckt werden kann, ohne den Stempel 820 direkt zu berühren. Der Stempel 820 ist also in diesem Ausführungsbeispiel ringförmig. In diesem Ausführungsbeispiel ist eine Fläche einer Kontaktfläche des Stempels 820 auf die Oberfläche des Innenrings IR des ersten Pleuellagers L1 so abgestimmt, dass sich die Kontaktfläche des Stempels 820 nicht über die Oberfläche des Innenrings IR hinaus erstreckt.

Durch die Pressverbindung zwischen Innenring IR des Pleuellagers L1 und Kurbelwellenzapfen 432 wird die Verkippung der ersten Pleuelachse Pa fixiert.

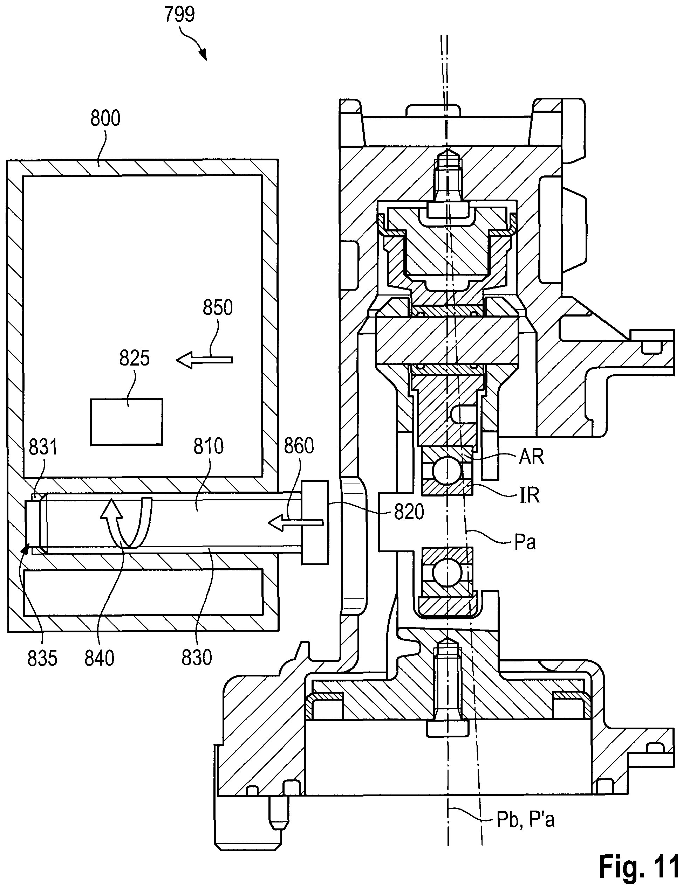

FIG. 11 zeigt, wie die Montagevorrichtung 800 von dem Kompressor 400 entfernt wird. Hierfür kann die Montagevorrichtung 800 in einer Rückwärtsbewegung 850 weg vom Kompressor 400 gefahren werden. Weiterhin wird der Stößel 810 und Stempel 820 in einer Rückwärtsbewegung 860 in die Bohrung 835 zurückgefahren.

In einem nicht gezeigten Ausführungsbeispiel wird der Kompressor von der Montagevorrichtung entfernt.

Die Pleuelachse Pa verbleibt aufgrund der Pressverbindung zwischen Pleuellager L1 und Kurbelwellenzapfen 432 in der verkippten Stellung und der Kompressor 400 kann in dem Zustand mit den vorgespannten Pleuellagern L1 und L2 betrieben werden.

Die Montagevorrichtung 800 kann, nachdem sie vom Kompressor 400 entfernt wurde, an einen nächsten Kompressor 400 angeordnet werden, um dessen erste Pleuelachse Pa zu verkippen (s. FIG. 8).

Die Verkippung ermöglicht es, Bauteile mit verschiedenen Parametern aufgrund von Fertigungstoleranzen zu verwenden und diese mit Hilfe der Verkippung auszugleichen. Es ist möglich das Lagerspiel in den Pleuellagern L1 und L2 zu beseitigen oder zumindest zu verringern. Ferner ist es möglich, die Schallpegel-Varianz in den hergestellten Produkten zu verringern, da aufgrund der Verkippung Produkte mit unterschiedlichen Parametern verschieden stark verkippt werden können, um die Lagerspiele auszugleichen. Der Gesamtschalldruckpegel kann durch die Verkippung der Pleuelachse Pa beispielsweise um 3 dB verringert werden.

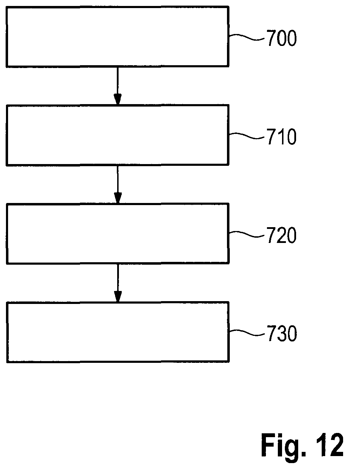

FIG. 12 zeigt ein Verfahren zur Montage einer Hubkolbenmaschine. In diesem Ausführungsbeispiel wird eine Hubkolbenmaschine in Form eines zweistufigen Kolbenkompressors montiert. Alternativ kann das Verfahren auch auf ein-, drei- oder mehrstufigen Kolbenkompressoren angewendet werden. Der Kolbenkompressor umfasst zwei Zylinder 410, 420, zwei Kolben K1, K2, zwei Zylinderhubräume 411, 421, eine Kurbelwelle 430 und zwei Pleuel P1, P2.

Die Kolben K1, K2 sind jeweils einem Zylinder 410, 420 zugeordnet. Im Betrieb wird der jeweilige Kolben K1, K2 entlang einer radial ausgerichteten Zylinder-Achse Z in dem Zylinderhubraum 411, 421 des Zylinders 410, 420 ausgelenkt.

Die Kurbelwelle 430 wird im Betrieb mit einem exzentrischen Kurbelwellenzapfen 432 und einer Antriebswellen-Kopplung 431 angetrieben. Die Antriebswellen-Kopplung 431 ist zum Ankoppeln einer Antriebswelle 501 eines Antriebsmotors M zum Antreiben der Kurbelwelle 430 ausgebildet.

Die Pleuel P1, P2 sind jeweils zum Auslenken der Kolben K1, K2 ausgebildet und verlaufen entlang einer jeweiligen Pleuelachse Pa, Pb. Die Pleuel P1, P2 sind mittels des exzentrischen Kurbelwellenzapfens 432 bewegbar.

Der exzentrische Kurbelwellenzapfen 432 ist entlang einer axial ausgerichteten Wellen-Achse E ausgerichtet und die Antriebswellen-Kopplung 431 ist entlang einer zur Wellen-Achse E parallel verlaufenden Wellen-Achse A ausgerichtet. Die Wellen-Achsen E und A verlaufen senkrecht zur radial ausgerichteten Zylinder-Achse Z.

Die Pleuelachse Pa des Pleuels P1 wird in diesem Verfahren gegen die ursprüngliche Pleuelachse Pa' in Richtung der Wellen-Achse E gekippt. Dabei werden die Pleuellager L1, L2 der Pleuel P1, P2 vorgespannt.

Das Verfahren umfasst die Schritte:
700 Anordnen einer Montagevorrichtung mit einem axial verfahrbaren Kippelement, derart an der Hubkolbenmaschine, dass das Kippelement gegen das wenigstens eine Pleuellager L1 gefahren werden kann, um auf dieses entlang der Richtung der Wellen-Achse E eine Kraft aufzubringen, und
710 Verfahren des verfahrbaren Kippelements gegen einen Innenring IR des ersten Pleuellagers L1, wodurch die vorbestimmte Kraft Fk auf den Innenring IR des ersten Pleuellagers L1 aufgebracht wird und das Pleuellager L1 verspannt wird. Vorzugsweise wird dabei die Pleuelachse Pa des ersten Pleuels P1 gegen die ursprüngliche Pleuelachse Pa' verkippt.

Das verfahrbare Kippelement wird dabei so lange verfahren, bis eine vorbestimmte Gegenkraft erreicht ist, die vorzugsweise aus der Verkippung des Pleuels P1 resultiert.

720 Anordnen und Fixieren des exzentrischen Kurbelwellenzapfens 432 an dem Innenring IR des Pleuellagers L1 derart, dass das Pleuel P1 mit dem Kurbelwellenzapfen 432 bewegbar ist, und
730 Entfernen des axial verfahrbaren Kippelements und der Montagevorrichtung von der Hubkolbenmaschine, nachdem der exzentrische Kurbelwellenzapfen 432 in dem ersten Pleuellager L1 angeordnet und an dem Innenring IR des Pleuellagers L1 fixiert ist.

Das Anordnen von Bauteilen ist hierbei so zu verstehen, dass beispielsweise auch die Hubkolbenmaschine an der Montagevorrichtung angeordnet werden kann. Weiterhin kann die Hubkolbenmaschine auch von der Montagevorrichtung und dem axial verfahrbaren Kippelement entfernt werden.

Das axial verfahrbare Kippelement wird in diesem Ausführungsbeispiel gegen einen Innenring IR des ersten Pleuellagers L1 gefahren. Alternativ kann das axial verfahrbare Kippelement auch gegen einen anderen Teil des ersten Pleuellagers oder des ersten Pleuels gefahren werden. Der exzentrische Kurbelwellenzapfen wird in diesem Ausführungsbeispiel mit Hilfe einer Pressverbindung mit dem Innenring des Pleuellagers verbunden. Es können auch alternative Verbindungstypen verwendet werden.

Der entsprechend dem Verfahren montierte Kolbenkompressor kann, nachdem er montiert ist, betrieben werden.

### Bezugszeichenliste (Bestandteil der Beschreibung)

- 0: Luftzuführung, Ansaugung
- 0.1: Filterelement, Luftfilter
- 1: Druckluftzuführung
- 2: Druckluftanschluss
- 3: Entlüftungsanschluss
- 3.1: Entlüftungsfilter, Filterelement, Schalldämpfer
- 100: Lufttrockneranordnung
- 101: Trockenbehälter

- 200: Pneumatikhauptleitung
- 201: erster Teil der Pneumatikhauptleitung
- 202: zweiter Teil der Pneumatikhauptleitung
- 230: Zweigleitung, Entlüftungsleitung
- 240: weitere Entlüftungsleitung
- 241: weiterer Zweiganschluss
- 242: Anschlussabschnitt
- 250: pneumatische Steuerleitung
- 251: Leitungsabschnitt
- 252: Steueranschluss
- 260: weitere Entlüftungsleitung
- 261: Zweiganschluss
- 270: Luftzuführungsleitung

- 300: Ventilanordnung, Magnetventilanordnung
- 310: Wegeventilanordnung
- 311: Rückschlagventil
- 312: Entlüftungsventil
- 313: Druckbegrenzung
- 314: Kolben
- 314.1: Relaisentlüftungskörper
- 314.2: Relaisentsperrkörper
- 315: einstellbare Feder
- 320: Steuerventil
- 321: elektrische Steuerleitung
- 322: Spule
- 331: erste Drossel
- 332: zweite Drossel

- 400, 400': Luftverdichter in Form eines Kolbenkompressors
- 401: erste (Niederdruck)-Verdichterstufe
- 402: zweite (Hochdruck)-Verdichterstufe
- 403: Verdichterstufe
- 410: erster Zylinder
- 411,421: Zylinderhubraum
- 420: zweiter Zylinder
- 430: Kurbelwelle
- 431: Antriebswellenkopplung
- 432: Kurbelwellenzapfen
- 440: Gehäuse
- 441: weitere Bauteile
- 442: Gehäuseöffnung
- 445: Montagedeckel

- 500: Motor
- 501: Antriebswelle
- M: Antriebsmotor
- 502: Lager
- 600: weitere Pneumatikleitung
- 601, 602, 603, 604: Federzweigleitung
- 605: Speicherzweigleitung
- 610: Galerie

- 700, 710, 720, 730: Verfahrensschritte

- 799: Hubkolbenmaschinenmontagesystem
- 800: Montagevorrichtung
- 810: Stößel
- 820: Stempel
- 825: Motor
- 830: selbsthemmendes Gewinde
- 831: Gegengewinde
- 835: Bohrung
- 840: Drehmoment
- 850: Rückwärtsbewegung der Montagevorrichtung
- 860: Rückwärtsbewegung des Stößels

- 1000: Druckluftversorgungssystem
- 1001: Druckluftversorgungsanlage
- 1002: Pneumatikanlage
- 1011, 1012, 1013, 1014: Bälge
- 1110: Ventilblock
- 1015: Speicher
- 1111 bis 1114: Magnetspeicher-Wegeventil
- 1115: Magnet-Wegeventil

- *α*: Verkippungswinkel
- Δ L: Lagerversatz
- Δ x: Versatz
- A: Achse
- A1, A2, A3: Ansicht
- AR: Außenring
- D1, D2: Detail
- DL: Druckluftströmung
- E: Exzenterachse, Wellenachse
- F: Kraft
- Fk: Kraft für die Verkippung
- Fax, Frad: Axialkraft, Radialkraft
- HS: Hubstellung
- IR: Innenring
- K1, K2: Kolben
- K11: Kolbenhalterung
- K22: Kopfende
- L1, L2: Pleuellager, Ring-Kugellager, Gelenk-Gleitlager
- L2RS, L1S, L1SL, L1SR: radiales Lagerspiel
- L2-AS1, L2-AS2: axiales Lagerspiel
- L2B: Lagerbolzen
- L1K: Lagerkugel
- L1M: Lagermanschette des ersten Pleuellagers
- L2M: Lagermanschette des zweiten Pleuellagers
- L2Ma, L2Mb: Lagermanschettenteile des zweiten Pleuellagers
- M: Antriebsmotor
- P, Pa, Pb: Pleuelachse
- Pa', Pb': ursprüngliche Pleuelachse des entspannten Pleuels
- P1, P2: erstes, zweites Pleuel
- VS: Verdichtungsstellung
- X: Montagemaß
- Z: Zylinderachse
- Z1, Z2: Zylinderlauffläche

## Patentansprüche

1. Hubkolbenmaschine, insbesondere ein ein-, zwei- oder mehrstufiger Kolbenkompressor (400, 400') oder ein ein-, zwei- oder mehrzylindriger Verdichter, aufweisend:
- wenigstens einen Zylinder (410, 420) sowie wenigstens einen jeweils einem Zylinder (410, 420) zugeordneten Kolben (K1, K2), wobei im Betrieb der Kolben (K1, K2) entlang einer radial ausgerichteten Zylinder-Achse (Z) in einem Zylinderhubraum (411, 421) des Zylinders (410, 420) ausgelenkt wird,
- eine im Betrieb antreibbare Kurbelwelle (430) mit einem Kurbelwellenzapfen (432), der exzentrisch zu einer Wellen-Achse (E) der Kurbelwelle angeordnet ist, und einer Antriebswellen-Kopplung (431), die zum Ankoppeln einer Antriebswelle (501) zum Antreiben der Kurbelwelle (430) ausgebildet ist,
- wenigstens ein jeweils zum Auslenken des wenigstens einen Kolben (K1, K2) ausgebildetes und entlang einer Pleuelachse (Pa, Pb) verlaufendes Pleuel (P1, P2), das mittels des Kurbelwellenzapfens (432) bewegbar ist, wobei
- der Kurbelwellenzapfen (432) und/oder die Antriebswellen-Kopplung (431) entlang einer axial ausgerichteten Wellen-Achse (E) ausgerichtet ist, die senkrecht zur radial ausgerichteten Zylinder-Achse (Z) verläuft, **dadurch gekennzeichnet, dass**
- die Pleuelachse (Pa) des Pleuels (P1) sich in einer Position befindet, in der wenigstens ein Pleuellager (L1, L2), durch eine entlang der Richtung der Wellen-Achse (E) auf das wenigstens eine Pleuellager (L1, L2) wirkende vorbestimmte Kraft (Fk), bezüglich des Kurbelwellenzapfens (432) verspannt ist,
- wobei die Pleuelachse (Pa) des wenigstens einen Pleuels (P1) durch die wirkende vorbestimmte Kraft (Fk) mit einem Verkippungswinkel (a) gegen die radial ausgerichtete Zylinder-Achse (Z) gekippt ist und
- die Pleuelachse (Pa) des Pleuels (P1) in die Position gebracht wird, indem eine entlang der Richtung der Wellen-Achse (E) wirkende Kraft auf das wenigstens eine Pleuellager (L1) aufgebracht wird, bis eine vorbestimmte Gegenkraft erreicht ist.

2. Hubkolbenmaschine nach Anspruch 1, **dadurch gekennzeichnet, dass** das Lagerspiel des wenigstens einen Pleuellagers (L1, L2) verringert ist,.

3. Hubkolbenmaschine nach Anspruch 1 oder 2, **dadurch gekennzeichnet, dass**
- das wenigstens eine Pleuel (P1) mittels wenigstens einem Pleuellager (L1) direkt oder indirekt am Kurbelwellenzapfen (432) gelagert ist, und/oder
- an dem Pleuel (P2) der Kolben (K2) angeformt oder mittels einer Kolbenhalterung (K11) der Kolben (K1) gehalten ist.

4. Hubkolbenmaschine nach einem der Ansprüche 1 bis 3, **dadurch gekennzeichnet, dass** ein erstes entlang einer ersten Pleuelachse (Pa) verlaufendes Pleuel (P1) direkt mittels dem Kurbelwellenzapfen (432) bewegbar ist und ein zweites entlang einer zweiten Pleuelachse (Pb) verlaufendes Pleuel (P2) indirekt mittels des Kurbelwellenzapfens (432), insbesondere mittels des ersten Pleuels (P1), bewegbar ist, vorzugsweise das zweite Pleuel (P2) als Schlepppleuel vom ersten Pleuel (P1) als Antriebspleuel bewegbar ist.

5. Hubkolbenmaschine nach einem der Ansprüche 1 bis 4, **dadurch gekennzeichnet, dass** wenigstens ein erstes oder zweites Pleuellager (L1, L2) des wenigstens einen ersten oder zweiten Pleuels (P1, P2) derart versetzt zur radial ausgerichteten Zylinder-Achse (Z) gelagert ist, dass dabei die erste oder zweite Pleuelachse (Pa, Pb) in Richtung der Wellen-Achse (E) mit der vorbestimmten Kraft (Fk) beaufschlagt ist, insbesondere derart, dass das wenigstens eine erste oder zweite Pleuellager (L1, L2) vorgespannt ist.

6. Hubkolbenmaschine nach einem der Ansprüche 1 bis 5, **dadurch gekennzeichnet, dass** das wenigstens eine Pleuellager (L1, L2), insbesondere ein erstes Pleuellager (L1) eines ersten Pleuels (P1), direkt am Kurbelwellenzapfen (432) gelagert und in Richtung der Wellen-Achse (E) mit der vorbestimmten Kraft (Fk) beaufschlagt ist, insbesondere derart, dass das wenigstens eine Pleuellager (L1) vorgespannt ist.

7. Hubkolbenmaschine nach einem der Ansprüche 1 bis 6, **dadurch gekennzeichnet, dass** das wenigstens eine Pleuellager (L1, L2), insbesondere ein zweites Pleuellager (L2) eines zweiten Pleuels (P2), indirekt am Kurbelwellenzapfen (432), insbesondere am ersten Pleuel (P1), gelagert und in Richtung der Wellen-Achse (E) mit der vorbestimmten Kraft (Fk) beaufschlagt ist, insbesondere derart, dass das wenigstens eine Pleuellager (L1, L2), insbesondere das zweite Pleuellager (L2), vorgespannt ist.

8. Hubkolbenmaschine nach einem der Ansprüche 1 bis 7, **dadurch gekennzeichnet, dass**
- ein erstes Pleuellager (L1) direkt am Kurbelwellenzapfen (432) gelagert ist und eine Mittenachse des ersten Pleuellagers entlang der Richtung der Wellen-Achse (E) mit der vorbestimmten Kraft (Fk) beaufschlagt ist, und/oder
- ein zweites Pleuellager indirekt am Kurbelwellenzapfen, insbesondere direkt am ersten Pleuel, gelagert ist und eine Mittenachse des zweiten Pleuellagers entlang der Richtung der Wellen-Achse (E) mit der vorbestimmten Kraft (Fk) beaufschlagt ist.

9. Hubkolbenmaschine nach einem der Ansprüche 1 bis 8, **dadurch gekennzeichnet, dass** die Pleuelachse (Pa, Pb) des Pleuels (P1, P2) gegen die radial ausgerichtete Zylinder-Achse (Z) durch die vorbestimmte Kraft (Fk) gekippt ist, derart, dass das wenigstens eine Pleuellager (L1, L2) vorgespannt ist.

10. Hubkolbenmaschine nach einem der Ansprüche 1 bis 9, **dadurch gekennzeichnet, dass**
- die Pleuelachse (Pa) des wenigstens einen Pleuels (P1) soweit gegen die radial ausgerichtete Zylinder-Achse (Z) in Richtung der Wellen-Achse (E) gekippt ist, dass
- das wenigstens eine Pleuellager (L1) mit der Pleuelachse (Pa) soweit außerhalb der radial ausgerichteten Zylinder-Achse (Z) gelagert ist, dass
- das wenigstens eine Pleuellager (L1) mit der vorbestimmten Kraft (Fk) vorgespannt ist.

11. Hubkolbenmaschine nach einem der Ansprüche 1 bis 10, **dadurch gekennzeichnet, dass** das Lagerspiel wenigstens einer der Pleuellager auf eine Obergrenze reduziert ist, die unterhalb des freien Lagerspiels im unverspannten Zustand liegt.

12. Hubkolbenmaschine nach einem der Ansprüche 1 bis 11, **dadurch gekennzeichnet, dass**
- das wenigstens eine Pleuellager (L1) im Vergleich zu einem ohne vorbestimmte Kraft (Fk) vorliegenden unverspannten Zustand in Richtung der Wellen-Achse (E) versetzt ist, insbesondere in Richtung der Wellen-Achse (E) zur Antriebswellen-Kopplung und/oder zum Antrieb hin versetzt ist.

13. Hubkolbenmaschine nach einem der Ansprüche 1 bis 12, **dadurch gekennzeichnet, dass** ein Verkippungswinkel (*α*) der Verkippung wenigstens eines Pleuels aus einem ohne vorbestimmte Kraft (Fk) vorliegenden unverspannten Zustand zwischen mehr als 0° und weniger als 5° liegt.

14. Hubkolbenmaschine nach einem der Ansprüche 1 bis 13, **dadurch gekennzeichnet, dass**
- ein erstes Pleuel (P1) mittels eines ersten Pleuellagers (L1) direkt am Kurbelwellenzapfen (432) gelagert ist und an dem ersten Pleuel (P1) mittels einer Kolbenhalterung (K11) ein erster Kolben (K1) gehalten ist, und
- ein zweites Pleuel (P2) mittels eines zweiten Pleuellagers (L2) und eines Koppelelements, insbesondere eines Lagerbolzens (L2B), am ersten Pleuel (P1) befestigt ist und an dem zweiten Pleuel (P2) ein zweiter Kolben (K2) angeformt ist.

15. Hubkolbenmaschine nach Anspruch 14, **dadurch gekennzeichnet, dass**
- das erste Pleuellager (P1) ein Wälzlager (L1) ist, insbesondere in Form eines Rillenkugellagers (L1) am Kurbelwellenzapfen (432), und/oder
- das zweite Pleuellager (L2) ein Gelenklager ist, insbesondere in Form eines Gleitlagers oder Wälzlagers, insbesondere Nadellagers, am ersten Pleuel (P1).

16. Hubkolbenmaschine nach einem der Ansprüche 1 bis 15, **dadurch gekennzeichnet, dass**
der Kolbenkompressor (400) als ein Zweistufen-Kompressor (400) mit einer ersten und zweiten Verdichterstufe (401, 402), insbesondere als ein TWIN-Kompressor, gebildet ist, wobei:
- ein erstes Pleuel (P1) der zweiten, insbesondere Hochdruck-, Verdichterstufe (402) gebildet ist, wobei das erste Pleuel (P1) mittels einem ersten Pleuellager (L1) direkt am Kurbelwellenzapfen (432) gelagert ist, und/oder
- ein zweites Pleuel (P2) der ersten, insbesondere Niederdruck-, Verdichterstufe (401) gebildet ist, wobei das zweite Pleuel (P2) mittels eines zweiten Pleuellagers (L2) und eines Koppelelements, insbesondere eines Lagerbolzens (L2B), direkt am ersten Pleuel (P1) gelagert ist.

17. Hubkolbenmaschinenmontagesystem (799) für die Montage einer Hubkolbenmaschine, aufweisend:
- eine Hubkolbenmaschine nach einem der Ansprüche 1 bis 16 und
- eine Montagevorrichtung (800), die ausgebildet ist an der Hubkolbenmaschine angeordnet zu werden und die Hubkolbenmaschine zu montieren und die aufweist:
-- ein axial verfahrbares Kippelement (820), das ausgebildet ist gegen das wenigstens eine Pleuellager (L1) des Pleuels (P1) der Hubkolbenmaschine gefahren zu werden, um auf dieses entlang der Richtung der Wellen-Achse (E) eine vorbestimmte Kraft (Fk) aufzubringen, damit das Pleuel (P1) bezüglich des Kurbelwellenzapfens (432) verspannt ist, wobei die Pleuelachse (Pa) des wenigstens einen Pleuels (P1) durch die wirkende vorbestimmte Kraft (Fk) mit einem Verkippungswinkel (α) gegen die radial ausgerichtete Zylinder-Achse (Z) gekippt ist.

18. Hubkolbenmaschinenmontagesystem (799) nach Anspruch 17, **dadurch gekennzeichnet, dass** das axial verfahrbare Kippelement (820) ausgebildet ist die vorbestimmte Kraft (Fk) auf einen Innenring (IR) des Pleuellagers (L1) entlang der Richtung der Wellen-Achse (E) aufzubringen, um die Pleuelachse (Pa) des Pleuels (P1) im Vergleich zu einem ohne vorbestimmte Kraft (Fk) vorliegenden unverspannten Zustand zu verkippen.

19. Hubkolbenmaschinenmontagesystem (799) nach Anspruch 17 oder 18, **dadurch gekennzeichnet, dass** das axial verfahrbare Kippelement (820) ein selbsthemmendes Gewinde (830) aufweist.

20. Druckluftversorgungsanlage (1001) zum Betreiben einer Pneumatikanlage (1002), insbesondere einer Luftfederanlage eines Fahrzeugs, vorzugsweise eines PKWs, mit einer Druckluftströmung (DL), aufweisend:
- eine Lufttrockneranordnung (100) in einer Pneumatikhauptleitung (200), die eine Druckluftzuführung (1) von einem Luftverdichter (400) und einen Druckluftanschluss (2) zu der Pneumatikanlage (1002) pneumatisch verbindet, und
- eine an die Pneumatikhauptleitung (200) pneumatisch angeschlossene Ventilanordnung (300) zur Steuerung der Druckluftströmung (DL) und einen Lufttrockner (101) in der Pneumatikhauptleitung (200), wobei
- an die Druckluftzuführung (1) ein Luftverdichter (400, 400') mit einer Hubkolbenmaschine, insbesondere ein ein-, zwei- oder mehrstufiger Kolbenkompressor (400, 400') oder ein ein, zwei- oder mehrzylindriger Verdichter, der Ansprüche 1 bis 16 angeschlossen ist.

21. Druckluftversorgungssystem (1000) mit einer Pneumatikanlage (1002) und mit einer Druckluftversorgungsanlage (1001) gemäß Anspruch 20 zum Betreiben der Pneumatikanlage (1002) mit einer Druckluftströmung (DL), insbesondere einer Luftfederanlage eines Fahrzeugs, vorzugsweise eines PKWs, wobei die Pneumatikhauptleitung (200) eine Druckluftzuführung (1) von einem Luftverdichter (400, 400') mit einer Hubkolbenmaschine, insbesondere einem ein-, zwei- oder mehrstufiger Kolbenkompressor (400, 400'), der Ansprüche 1 bis 16 und einen Druckluftanschluss (2) zu der Pneumatikanlage (1002) pneumatisch verbindet.

22. Fahrzeug, insbesondere PKW, mit einer Pneumatikanlage (1002), insbesondere einer Luftfederanlage, und einer Druckluftversorgungsanlage (1001) gemäß Anspruch 20 zum Betreiben der Pneumatikanlage (1002) mit einer Druckluftströmung (DL).

23. Verfahren zur Montage einer Hubkolbenmaschine nach einem der Ansprüche 1 bis 16, insbesondere mit einem ein-, zwei- oder mehrstufigen Kolbenkompressor (400, 400') oder einem ein-, zwei- oder mehrzylindrigen Verdichter, insbesondere an einer Druckluftversorgungsanlage (1001), aufweisend:
- wenigstens einen Zylinder (410, 420) sowie wenigstens einen jeweils einem Zylinder (410,420) zugeordneten Kolben (K1, K2), wobei im Betrieb der Kolben (K1, K2) entlang einer radial ausgerichteten Zylinder-Achse (Z) in einem Zylinderhubraum (411, 421) des Zylinders (410, 420) ausgelenkt wird,
- eine im Betrieb antreibbare Kurbelwelle (430) mit einem Kurbelwellenzapfen (432), der exzentrisch zu einer Wellenachse (E) der Kurbelwelle (430) angeordnet ist, und einer Antriebswellen-Kopplung (431), die zum Ankoppeln einer Antriebswelle (501), insbesondere eines Antriebsmotors (M), zum Antreiben der Kurbelwelle (430) ausgebildet ist,
- wenigstens ein jeweils zum Auslenken des wenigstens einen Kolben (K1, K2) ausgebildetes und entlang einer Pleuelachse (Pa, Pb) verlaufendes Pleuel (P1, P2), das mittels dem Kurbelwellenzapfen (432) bewegbar ist, wobei
- der Kurbelwellenzapfen (432) und/oder die Antriebswellen-Kopplung (431) entlang einer axial ausgerichteten Wellen-Achse (E) der Kurbelwelle (430) ausgerichtet ist, die senkrecht zur radial ausgerichteten Zylinder-Achse (Z) verläuft, **dadurch gekennzeichnet, dass**
- die Pleuelachse (Pa) des Pleuels (P1) in eine Position gebracht wird, in der wenigstens ein Pleuellager (L1, L2), durch eine entlang der Richtung der Wellen-Achse (E) auf das wenigstens eine Pleuellager (L1, L2) wirkende vorbestimmte Kraft (Fk), bezüglich des Kurbelwellenzapfens (432) verspannt ist, insbesondere derart, dass das Lagerspiel wenigstens eines Pleuellagers verringert ist,
- wobei die Pleuelachse (Pa) des wenigstens einen Pleuels (P1) durch die wirkende vorbestimmte Kraft (Fk) mit einem Verkippungswinkel (α) gegen die radial ausgerichtete Zylinder-Achse (Z) gekippt ist und
- die Pleuelachse (Pa) des Pleuels (P1) in die Position gebracht wird, indem eine entlang der Richtung der Wellen-Achse (E) wirkende Kraft auf das wenigstens eine Pleuellager (L1) aufgebracht wird, bis eine vorbestimmte Gegenkraft erreicht ist.

24. Verfahren zum Betrieb einer Hubkolbenmaschine nach einem der Ansprüche 1 bis 16, insbesondere mit einem ein-, zwei- oder mehrstufigen Kolbenkompressor (400, 400') oder einem ein-, zwei- oder mehrzylindrigen Verdichter, insbesondere an einer Druckluftversorgungsanlage (1001), aufweisend:
- wenigstens einen Zylinder (410, 420) sowie wenigstens einen jeweils einem Zylinder (410,420) zugeordneten Kolben (K1, K2), wobei im Betrieb der Kolben (K1, K2) entlang einer radial ausgerichteten Zylinder-Achse (Z) in einem Zylinderhubraum (411, 421) des Zylinders (410, 420) ausgelenkt wird,
- eine im Betrieb antreibbare Kurbelwelle (430) mit einem Kurbelwellenzapfen (432), der exzentrisch zu einer Wellenachse (E) der Kurbelwelle (430) angeordnet ist, und einer Antriebswellen-Kopplung (431), die zum Ankoppeln einer Antriebswelle (501) eines Antriebsmotors (M) zum Antreiben der Kurbelwelle (430) ausgebildet ist,
- wenigstens ein jeweils zum Auslenken des wenigstens einen Kolben (K1, K2) ausgebildetes und entlang einer Pleuelachse (Pa, Pb) verlaufendes Pleuel (P1, P2), das mittels dem Kurbelwellenzapfen (432) bewegbar ist, wobei
- der Kurbelwellenzapfen (432) und/oder die Antriebswellen-Kopplung (431) parallel zu einer axial ausgerichteten Wellen-Achse (E) des Kurbelwellenzapfens (432) ausgerichtet ist, die senkrecht zur radial ausgerichteten Zylinder-Achse (Z) verläuft, **dadurch gekennzeichnet, dass**
- die Pleuelachse (Pa) des Pleuels (P1) in eine Position gebracht wird, in der wenigstens ein Pleuellager (L1, L2), durch eine entlang der Richtung der Wellen-Achse (E) auf das wenigstens eine Pleuellager (L1, L2) wirkende vorbestimmte Kraft (Fk), bezüglich des Kurbelwellenzapfens (432) verspannt ist, insbesondere derart, dass das Lagerspiel wenigstens eines Pleuellagers (L1, L2) verringert ist,
- wobei die Pleuelachse (Pa) des wenigstens einen Pleuels (P1) durch die wirkende vorbestimmte Kraft (Fk) mit einem Verkippungswinkel (α) gegen die radial ausgerichtete Zylinder-Achse (Z) gekippt ist und
- die Pleuelachse (Pa) des Pleuels (P1) in die Position gebracht wird, indem eine entlang der Richtung der Wellen-Achse (E) wirkende Kraft auf das wenigstens eine Pleuellager (L1, L2) aufgebracht wird, bis eine vorbestimmte Gegenkraft erreicht ist.

25. Verfahren nach Anspruch 23 oder 24, **gekennzeichnet durch** die Verfahrensschritte zum Verkippen der Pleuelachse (Pa) des Pleuels (P1):
- Anordnen einer Montagevorrichtung mit einem axial verfahrbaren Kippelement (820), derart an der Hubkolbenmaschine, dass das Kippelement (820) gegen das wenigstens eine Pleuellager (L1) gefahren werden kann, um auf dieses entlang der Richtung der Wellen-Achse (E) eine Kraft (Fk) aufzubringen, und
- Verfahren des verfahrbaren Kippelements (820) gegen das wenigstens eine Pleuellager (L1), wodurch die vorbestimmte Kraft (Fk) auf das wenigstens eine Pleuellager (L1, L2) aufgebracht wird und das wenigstens eine Pleuellager (L1, L2) bezüglich des Kurbelwellenzapfens (432) verspannt wird,
wobei das verfahrbare Kippelement (820) so lange verfahren wird, bis eine vorbestimmte Gegenkraft erreicht ist, die vorzugsweise aus einer Verkippung des Pleuels (P1) resultiert.

26. Verfahren nach Anspruch 25, **dadurch gekennzeichnet, dass** das axial verfahrbare Kippelement (820) gegen einen Innenring des Pleuellagers (L1) gefahren wird.

27. Verfahren nach Anspruch 25 oder 26, **gekennzeichnet durch** den Verfahrensschritt:
- Anordnen und Fixieren des Kurbelwellenzapfens (432) an dem Innenring (IR) des Pleuellagers (L1) derart, dass das Pleuel (P1, P2) mit dem Kurbelwellenzapfen (432) bewegbar ist, und
- Entfernen des axial verfahrbaren Kippelements (820) und der Montagevorrichtung (800) von der Hubkolbenmaschine, nachdem der Kurbelwellenzapfen (432) an dem Pleuel (P1), insbesondere in dem Pleuellager (L1), angeordnet und an dem Innenring (IR) des Pleuellagers (L1) fixiert ist.

28. Hubkolbenmaschine nach einem der Ansprüche 1 bis 16, die nach einem der Verfahren der Ansprüche 23, 25, 26 oder 27 montiert wurde.

29. Verwendung einer Hubkolbenmaschine nach einem der Ansprüche 1 bis 16 in einem Verfahren nach einem der Ansprüche 24 bis 27.

## Claims

1. Reciprocating-piston machine, in particular a single-stage, two-stage or multi-stage piston compressor (400, 400') or a single-cylinder, two-cylinder or multi-cylinder compressor, having:
- at least one cylinder (410, 420) and at least one piston (K1, K2) assigned to in each case one cylinder (410, 420), wherein, during operation, the piston (K1, K2) is deflected along a radially oriented cylinder axis (Z) in a cylinder swept volume (411, 421) of the cylinder (410, 420),
- a crankshaft (430) which can be driven during operation and which has a crankshaft journal (432), arranged eccentrically with respect to a shaft axis (E) of the crankshaft, and which has a drive shaft coupling (431), which is designed for the coupling of a drive shaft (501) for driving the crankshaft (430),
- at least one connecting rod (P1, P2) which is designed in each case for deflecting the at least one piston (K1, K2) and which runs along a connecting-rod axis (Pa, Pb) and which is movable by means of the crankshaft journal (432), wherein
- the crankshaft journal (432) and/or the drive shaft coupling (431) is oriented along an axially oriented shaft axis (E) which runs perpendicularly with respect to the radially oriented cylinder axis (Z), **characterized in that**
- the connecting-rod axis (Pa) of the connecting rod (P1) is situated in a position in which at least one connecting-rod bearing (L1, L2) is braced with respect to the crankshaft journal (432) by a predetermined force (Fk) acting on the at least one connecting-rod bearing (L1, L2) along the direction of the shaft axis (E),
- wherein the connecting-rod axis (Pa) of the at least one connecting rod (P1) is tilted with a tilt angle (α) relative to the radially oriented cylinder axis (Z) by the acting predetermined force (Fk), and
- the connecting-rod axis (Pa) of the connecting rod (P1) is brought into the position by virtue of a force acting along the direction of the shaft axis (E) being imparted to the at least one connecting-rod bearing (L1) until a predetermined opposing force is attained.

2. Reciprocating-piston machine according to Claim 1, **characterized in that** the bearing play of the at least one connecting-rod bearing (L1, L2) is reduced.

3. Reciprocating-piston machine according to Claim 1 or 2, **characterized in that**
- the at least one connecting rod (P1) is mounted by means of at least one connecting-rod bearing (L1) directly or indirectly on the crankshaft journal (432), and/or
- the piston (K2) is integrally formed, or the piston (K1) is held by means of a piston holder (K11), on the connecting rod (P2).

4. Reciprocating-piston machine according to any of Claims 1 to 3, **characterized in that** a first connecting rod (P1) running along a first connecting-rod axis (Pa) is movable directly by means of the crankshaft journal (432), and a second connecting rod (P2) running along a second connecting-rod axis (Pb) is movable indirectly by means of the crankshaft journal (432), in particular by means of the first connecting rod (P1), and preferably the second connecting rod (P2), as follower connecting rod, is movable by the first connecting rod (P1), as drive connecting rod.

5. Reciprocating-piston machine according to any of Claims 1 to 4, **characterized in that** at least one first or second connecting-rod bearing (L1, L2) of the at least one first or second connecting rod (P1, P2) is mounted offset with respect to the radially oriented cylinder axis (Z) such that, here, the first or second connecting-rod axis (Pa, Pb) is acted on in the direction of the shaft axis (E) with the predetermined force (Fk), in particular such that the at least one first or second connecting-rod bearing (L1, L2) is preloaded.

6. Reciprocating-piston machine according to any of Claims 1 to 5, **characterized in that** the at least one connecting-rod bearing (L1, L2), in particular a first connecting-rod bearing (L1) of a first connecting rod (P1), is mounted directly on the crankshaft journal (432) and is acted on in the direction of the shaft axis (E) with the predetermined force (Fk), in particular such that the at least one connecting-rod bearing (L1) is preloaded.

7. Reciprocating-piston machine according to any of Claims 1 to 6, **characterized in that** the at least one connecting-rod bearing (L1, L2), in particular a second connecting-rod bearing (L2) of a second connecting rod (P2), is mounted indirectly on the crankshaft journal (432), in particular on the first connecting rod (P1), and is acted on in the direction of the shaft axis (E) with the predetermined force (Fk), in particular such that the at least one connecting-rod bearing (L1, L2), in particular the second connecting-rod bearing (L2), is preloaded.

8. Reciprocating-piston machine according to any of Claims 1 to 7, **characterized in that**
- a first connecting-rod bearing (L1) is mounted directly on the crankshaft journal (432), and a central axis of the first connecting-rod bearing is acted on along the direction of the shaft axis (E) with the predetermined force (Fk), and/or
- a second connecting-rod bearing is mounted indirectly on the crankshaft journal, in particular directly on the first connecting rod, and a central axis of the second connecting-rod bearing is acted on along the direction of the shaft axis (E) with the predetermined force (Fk).

9. Reciprocating-piston machine according to any of Claims 1 to 8, **characterized in that** the connecting-rod axis (Pa, Pb) of the connecting rod (P1, P2) is tilted relative to the radially oriented cylinder axis (Z) by the predetermined force (Fk), such that the at least one connecting-rod bearing (L1, L2) is preloaded.

10. Reciprocating-piston machine according to any of Claims 1 to 9, **characterized in that**
- the connecting-rod axis (Pa) of the at least one connecting rod (P1) is tilted relative to the radially oriented cylinder axis (Z) in the direction of the shaft axis (E) to such an extent that
- the at least one connecting-rod bearing (L1) is mounted with the connecting-rod axis (Pa) outside the radially oriented cylinder axis (Z) to such an extent that
- the at least one connecting-rod bearing (L1) is preloaded with the predetermined force (Fk).

11. Reciprocating-piston machine according to any of Claims 1 to 10, **characterized in that** the bearing play of at least one of the connecting-rod bearings is reduced to an upper limit which lies below the free bearing play in the non-braced state.

12. Reciprocating-piston machine according to any of Claims 1 to 11, **characterized in that**
- the at least one connecting-rod bearing (L1) is offset in the direction of the shaft axis (E), in particular is offset in the direction of the shaft axis (E) of the drive shaft coupling and/or in the direction of the drive, in relation to a non-braced state which is present in the absence of the predetermined force (Fk).

13. Reciprocating-piston machine according to any of Claims 1 to 12, **characterized in that** a tilt angle (α) of the tilt of at least one connecting rod out of a non-braced state, which is present in the absence of the predetermined force (Fk), lies between more than 0° and less than 5°.

14. Reciprocating-piston machine according to any of Claims 1 to 13, **characterized in that**
- a first connecting rod (P1) is mounted by means of a first connecting-rod bearing (L1) directly on the crankshaft journal (432), and a first piston (K1) is held on the first connecting rod (P1) by means of a piston holder (K11), and
- a second connecting rod (P2) is fastened by means of a second connecting-rod bearing (L2) and a coupling element, in particular a bearing pin (L2B), to the first connecting rod (P1), and a second piston (K2) is integrally formed on the second connecting rod (P2).

15. Reciprocating-piston machine according to Claim 14, **characterized in that**
- the first connecting-rod bearing (P1) is a rolling bearing (L1), in particular in the form of a deep-groove ball bearing (L1) on the crankshaft journal (432), and/or
- the second connecting-rod bearing (L2) is an articulated bearing, in particular in the form of a plain bearing or rolling bearing, in particular needle-roller bearing, on the first connecting rod (P1).

16. Reciprocating-piston machine according to any of Claims 1 to 15, **characterized in that**
the piston compressor (400) is formed as a two-stage compressor (400) with a first and a second compressor stage (401, 402), in particular as a twin compressor, wherein:
- a first connecting rod (P1) of the second, in particular high-pressure, compressor stage (402) is formed, wherein the first connecting rod (P1) is mounted by means of a first connecting-rod bearing (L1) directly on the crankshaft journal (432), and/or
- a second connecting rod (P2) of the first, in particular low-pressure, compressor stage (401) is formed, wherein the second connecting rod (P2) is mounted by means of a second connecting-rod bearing (L2) and a coupling element, in particular a bearing pin (L2B), directly on the first connecting rod (P1).

17. Reciprocating-piston machine assembly system (799) for the assembly of a reciprocating-piston machine, having:
- a reciprocating-piston machine according to any of Claims 1 to 16, and
- an assembly device (800) which is designed for being arranged on the reciprocating-piston machine and for assembling the reciprocating-piston machine and which has:
-- an axially movable tilting element (820) which is designed to be moved against the at least one connecting-rod bearing (L1) of the connecting rod (P1) of the reciprocating-piston machine in order to impart a predetermined force (Fk) thereto along the direction of the shaft axis (E) in order that the connecting rod (P1) is braced with respect to the crankshaft journal (432), wherein the connecting-rod axis (Pa) of the at least one connecting rod (P1) is tilted relative to the radially oriented cylinder axis (Z) with a tilt angle (α) by the acting predetermined force (Fk).

18. Reciprocating-piston machine assembly system (799) according to Claim 17, **characterized in that** the axially movable tilting element (820) is designed to impart the predetermined force (Fk) to an inner ring (IR) of the connecting-rod bearing (L1) along the direction of the shaft axis (E) in order to tilt the connecting-rod axis (Pa) of the connecting rod (P1) in relation to a non-braced state which is present in the absence of the predetermined force (Fk).

19. Reciprocating-piston machine assembly system (799) according to Claim 17 or 18, **characterized in that** the axially movable tilting element (820) has a self-locking thread (830).

20. Compressed-air supply system (1001) for the operation of a pneumatic system (1002), in particular an air suspension system of a vehicle, preferably of a passenger motor vehicle, with a compressed-air flow (DL), having:
- an air dryer arrangement (100) in a pneumatic main line (200) which pneumatically connects a compressed-air feed (1) from an air compressor (400) and a compressed-air connection (2) to the pneumatic system (1002), and
- a valve arrangement (300) which is pneumatically connected to the pneumatic main line (200) and which serves for controlling the compressed-air flow (DL) and an air dryer (101) in the pneumatic main line (200), wherein
- an air compressor (400, 400') with a reciprocating-piston machine, in particular a single-stage, two-stage or multi-stage piston compressor (400, 400') or a single-cylinder, two-cylinder or multi-cylinder compressor, of Claims 1 to 16 is connected to the compressed-air feed (1) .

21. Compressed-air supply system (1000) with a pneumatic system (1002) and with a compressed-air supply system (1001) according to Claim 20 for the operation of the pneumatic system (1002) with a compressed-air flow (DL), in particular of an air suspension system of a vehicle, preferably of a passenger motor vehicle, wherein the pneumatic main line (200) pneumatically connects a compressed-air feed (1) from an air compressor (400, 400') with a reciprocating-piston machine, in particular a single-stage, two-stage or multi-stage piston compressor (400, 400'), of Claims 1 to 16 and a compressed-air connection (2) to the pneumatic system (1002).

22. Vehicle, in particular passenger motor vehicle, with a pneumatic system (1002), in particular an air suspension system, and a compressed-air supply system (1001) according to Claim 20 for the operation of the pneumatic system (1002) with a compressed-air flow (DL).

23. Method for assembling a reciprocating-piston machine according to any of Claims 1 to 16, in particular with a single-stage, two-stage or multi-stage piston compressor (400, 400') or a single-cylinder, two-cylinder or multi-cylinder compressor, in particular on a compressed-air supply system (1001), having:
- at least one cylinder (410, 420) and at least one piston (K1, K2) assigned to in each case one cylinder (410, 420), wherein, during operation, the piston (K1, K2) is deflected along a radially oriented cylinder axis (Z) in a cylinder swept volume (411, 421) of the cylinder (410, 420),
- a crankshaft (430) which can be driven during operation and which has a crankshaft journal (432), arranged eccentrically with respect to a shaft axis (E) of the crankshaft (430), and which has a drive shaft coupling (431), which is designed for the coupling of a drive shaft (501), in particular of a drive motor (M), for driving the crankshaft (430),
- at least one connecting rod (P1, P2) which is designed in each case for deflecting the at least one piston (K1, K2) and which runs along a connecting-rod axis (Pa, Pb) and which is movable by means of the crankshaft journal (432), wherein
- the crankshaft journal (432) and/or the drive shaft coupling (431) is oriented along an axially oriented shaft axis (E) of the crankshaft (430) which runs perpendicularly with respect to the radially oriented cylinder axis (Z), **characterized in that**
- the connecting-rod axis (Pa) of the connecting rod (P1) is brought into a position in which at least one connecting-rod bearing (L1, L2) is braced with respect to the crankshaft journal (432), in particular such that the bearing play of at least one connecting-rod bearing is reduced, by a predetermined force (Fk) acting on the at least one connecting-rod bearing (L1, L2) along the direction of the shaft axis (E),
- wherein the connecting-rod axis (Pa) of the at least one connecting rod (P1) is tilted with a tilt angle (α) relative to the radially oriented cylinder axis (Z) by the acting predetermined force (Fk), and
- the connecting-rod axis (Pa) of the connecting rod (P1) is brought into the position by virtue of a force acting along the direction of the shaft axis (E) being imparted to the at least one connecting rod (L1) until a predetermined opposing force is attained.

24. Method for operating a reciprocating-piston machine according to any of Claims 1 to 16, in particular with a single-stage, two-stage or multi-stage piston compressor (400, 400') or a single-cylinder, two-cylinder or multi-cylinder compressor, in particular on a compressed-air supply system (1001), having:
- at least one cylinder (410, 420) and at least one piston (K1, K2) assigned to in each case one cylinder (410, 420), wherein, during operation, the piston (K1, K2) is deflected along a radially oriented cylinder axis (Z) in a cylinder swept volume (411, 421) of the cylinder (410, 420),
- a crankshaft (430) which can be driven during operation and which has a crankshaft journal (432), arranged eccentrically with respect to a shaft axis (E) of the crankshaft (430), and which has a drive shaft coupling (431), which is designed for the coupling of a drive shaft (501) of a drive motor (M) for driving the crankshaft (430),
- at least one connecting rod (P1, P2) which is designed in each case for deflecting the at least one piston (K1, K2) and which runs along a connecting-rod axis (Pa, Pb) and which is movable by means of the crankshaft journal (432), wherein
- the crankshaft journal (432) and/or the drive shaft coupling (431) is/are oriented parallel to an axially oriented shaft axis (E) of the crankshaft journal (432) which runs perpendicularly with respect to the radially oriented cylinder axis (Z), **characterized in that**
- the connecting-rod axis (Pa) of the connecting rod (P1) is brought into a position in which at least one connecting-rod bearing (L1, L2) is braced with respect to the crankshaft journal (432), in particular such that the bearing play of at least one connecting-rod bearing (L1, L2) is reduced, by a predetermined force (Fk) acting on the at least one connecting-rod bearing (L1, L2) along the direction of the shaft axis (E),
- wherein the connecting-rod axis (Pa) of the at least one connecting rod (P1) is tilted with a tilt angle (α) relative to the radially oriented cylinder axis (Z) by the acting predetermined force (Fk), and
- the connecting-rod axis (Pa) of the connecting rod (P1) is brought into the position by virtue of a force acting along the direction of the shaft axis (E) being imparted to the at least one connecting-rod bearing (L1, L2) until a predetermined opposing force is attained.

25. Method according to Claim 23 or 24, **characterized by** the method steps for tilting the connecting-rod axis (Pa) of the connecting rod (P1) :
- arranging an assembly device with an axially movable tilting element (820) on the reciprocating-piston machine such that the tilting element (820) can be moved against the at least one connecting-rod bearing (L1) in order to impart a force (Fk) thereto along the direction of the shaft axis (E), and
- moving the movable tilting element (820) against the at least one connecting-rod bearing (L1), whereby the predetermined force (Fk) is imparted to the at least one connecting-rod bearing (L1, L2) and the at least one connecting-rod bearing (L1, L2) is braced with respect to the crankshaft journal (432),
wherein the movable tilting element (820) is moved until a predetermined opposing force, which preferably results from a tilting of the connecting rod (P1), is attained.

26. Method according to Claim 25, **characterized in that** the axially movable tilting element (820) is moved against an inner ring of the connecting-rod bearing (L1).

27. Method according to Claim 25 or 26, **characterized by** the method step:
- arranging and fixing the crankshaft journal (432) on the inner ring (IR) of the connecting-rod bearing (L1) such that the connecting rod (P1, P2) is movable with the crankshaft journal (432), and
- removing the axially movable tilting element (820) and the assembly device (800) from the reciprocating-piston machine after the crankshaft journal (432) has been arranged on the connecting rod (P1), in particular in the connecting-rod bearing (L1), and has been fixed to the inner ring (IR) of the connecting-rod bearing (L1).

28. Reciprocating-piston machine according to any of Claims 1 to 16, which has been assembled in accordance with one of the methods of any of the methods of Claims 23, 25, 26 or 27.

29. Use of a reciprocating-piston machine according to any of Claims 1 to 16 in a method according to any of Claims 24 to 27.

## Revendications

1. Machine à piston alternatif, en particulier compresseur à piston à un, deux ou plus de deux étages (400, 400') ou compresseur à un, deux ou plus de deux cylindres, présentant :
- au moins un cylindre (410, 420) ainsi qu'au moins un piston (K1, K2) associé à un cylindre respectif (410, 420), le piston (K1, K2), pendant le fonctionnement, étant dévié le long d'un axe de cylindre orienté radialement (Z) dans un volume de cylindre (411, 421) du cylindre (410, 420),
- un vilebrequin (430) pouvant être entraîné pendant le fonctionnement, avec un maneton de vilebrequin (432) qui est disposé de manière excentrique par rapport à un axe d'arbre (E) du vilebrequin, et un accouplement d'arbre d'entraînement (431) qui est réalisé pour accoupler un arbre d'entraînement (501) pour l'entraînement du vilebrequin (430),
- au moins une bielle (P1, P2) réalisée à chaque fois pour dévier l'au moins un piston (K1, K2) et s'étendant le long d'un axe de bielle (Pa, Pb), qui peut être déplacée au moyen du maneton de vilebrequin (432),
- le maneton de vilebrequin (432) et/ou l'accouplement d'arbre d'entraînement (431) étant orientés le long d'un axe d'arbre orienté axialement (E) qui s'étend perpendiculairement à l'axe de cylindre (Z) orienté radialement,
**caractérisée en ce que**
- l'axe de bielle (Pa) de la bielle (P1) se trouve dans une position dans laquelle au moins un palier de bielle (L1, L2) est serré par rapport au maneton de vilebrequin (432) par une force (Fk) prédéterminée s'exerçant le long de la direction de l'axe d'arbre (E) sur l'au moins un palier de bielle (L1, L2),
- l'axe de bielle (Pa) de l'au moins une bielle (P1) étant basculé par la force prédéterminée exercée (Fk) avec un angle de basculement (α) par rapport à l'axe de cylindre (Z) orienté radialement, et
- l'axe de bielle (Pa) de la bielle (P1) est amené dans la position en appliquant une force agissant le long de la direction de l'axe d'arbre (E) sur l'au moins un palier de bielle (L1) jusqu'à ce qu'une force conjuguée prédéterminée soit atteinte.

2. Machine à piston alternatif selon la revendication 1, **caractérisée en ce que** le jeu de palier de l'au moins un palier de bielle (L1, L2) est réduit.

3. Machine à piston alternatif selon la revendication 1 ou 2, **caractérisée en ce que**
- l'au moins une bielle (P1) est supportée au moyen d'au moins un palier de bielle (L1) directement ou indirectement sur le maneton de vilebrequin (432), et/ou
- le piston (K2) est façonné sur la bielle (P2) ou le piston (K1) est retenu sur la bielle (P2) au moyen d'une fixation de piston (K11).

4. Machine à piston alternatif selon l'une quelconque des revendications 1 à 3, **caractérisée en ce qu'**une première bielle (P1) s'étendant le long d'un premier axe de bielle (Pa) peut être déplacée directement au moyen du maneton de vilebrequin (432) et une deuxième bielle (P2) s'étendant le long d'un deuxième axe de bielle (Pb) peut être déplacée indirectement au moyen du maneton de vilebrequin (432), en particulier au moyen de la première bielle (P1), de préférence, la deuxième bielle (P2) peut être déplacée en tant que bielle entraînée par la première bielle (P1) en tant que bielle d'entraînement.

5. Machine à piston alternatif selon l'une quelconque des revendications 1 à 4, **caractérisée en ce qu'**au moins un premier ou un deuxième palier de bielle (L1, L2) de l'au moins une première ou une deuxième bielle (P1, P2) est supporté de manière décalée par rapport à l'axe de cylindre (Z) orienté radialement, de telle sorte que le premier ou le deuxième axe de bielle (Pa, Pb) soit en l'occurrence sollicité dans la direction de l'axe d'arbre (E) par la force prédéterminée (Fk), en particulier de telle sorte que l'au moins un premier ou un deuxième palier de bielle (L1, L2) soit précontraint.

6. Machine à piston alternatif selon l'une quelconque des revendications 1 à 5, **caractérisée en ce que** l'au moins un palier de bielle (L1, L2), en particulier un premier palier de bielle (L1) d'une première bielle (P1) est supporté directement sur le maneton de vilebrequin (432) et est sollicité dans la direction de l'axe d'arbre (E) avec la force prédéterminée (Fk), en particulier de telle sorte que l'au moins un palier de bielle (L1) soit précontraint.

7. Machine à piston alternatif selon l'une quelconque des revendications 1 à 6, **caractérisée en ce que** l'au moins un palier de bielle (L1, L2), en particulier un deuxième palier de bielle (L2) d'une deuxième bielle (P2) est supporté indirectement sur le maneton de vilebrequin (432), en particulier sur la première bielle (P1), et est sollicité dans la direction de l'axe d'arbre (E) avec la force prédéterminée (Fk), en particulier de telle sorte que l'au moins un palier de bielle (L1, L2), en particulier le deuxième palier de bielle (L2), soit précontraint.

8. Machine à piston alternatif selon l'une quelconque des revendications 1 à 7, **caractérisée en ce que**
- un premier palier de bielle (L1) est supporté directement sur le maneton de vilebrequin (432) et un axe médian du premier palier de bielle est sollicité le long de la direction de l'axe d'arbre (E) avec la force prédéterminée (Fk), et/ou
- un deuxième palier de bielle est supporté indirectement sur le maneton de vilebrequin, en particulier directement sur la première bielle, et un axe médian du deuxième palier de bielle est sollicité le long de la direction de l'axe d'arbre (E) avec la force prédéterminée (Fk).

9. Machine à piston alternatif selon l'une quelconque des revendications 1 à 8, **caractérisée en ce que** l'axe de bielle (Pa, Pb) de la bielle (P1, P2) est basculé par rapport à l'axe de cylindre orienté radialement (Z) par la force prédéterminée (Fk) de telle sorte que l'au moins un palier de bielle (L1, L2) soit précontraint.

10. Machine à piston alternatif selon l'une quelconque des revendications 1 à 9, **caractérisée en ce que**
- l'axe de bielle (Pa) de l'au moins une bielle (P1) est basculé par rapport à l'axe de cylindre orienté radialement (Z) dans la direction de l'axe d'arbre (E) dans une mesure telle que
- l'au moins un palier de bielle (L1) soit supporté avec l'axe de bielle (Pa) à l'extérieur de l'axe de cylindre orienté radialement (Z) dans une mesure telle que
- l'au moins un palier de bielle (L1) soit précontraint par la force prédéterminée (Fk).

11. Machine à piston alternatif selon l'une quelconque des revendications 1 à 10, **caractérisée en ce que** le jeu de palier d'au moins l'un des paliers de bielle est réduit à une limite supérieure qui est située en dessous du jeu de palier libre dans l'état non serré.

12. Machine à piston alternatif selon l'une quelconque des revendications 1 à 11, **caractérisée en ce que**
- l'au moins un palier de bielle (L1), par rapport à un état non serré se présentant en l'absence d'une force prédéterminée (Fk), est décalé dans la direction de l'axe d'arbre (E), en particulier est décalé dans la direction de l'axe d'arbre (E) en vue de l'accouplement de l'arbre d'entraînement et/ou en vue de l'entraînement.

13. Machine à piston alternatif selon l'une quelconque des revendications 1 à 12, **caractérisée en ce qu'**un angle de basculement (α) du basculement d'au moins une bielle à partir d'un état non serré se présentant en l'absence d'une force prédéterminée (Fk), est compris entre plus de 0° et moins de 5°.

14. Machine à piston alternatif selon l'une quelconque des revendications 1 à 13, **caractérisée en ce que**
- une première bielle (P1) est supportée au moyen d'un premier palier de bielle (L1) directement sur le maneton de vilebrequin (432) et un premier piston (K1) est retenu sur la première bielle (P1) au moyen d'un fixation de piston (K11), et
- une deuxième bielle (P2) est fixée à la première bielle (P1) au moyen d'un deuxième palier de bielle (L2) et d'un élément d'accouplement, en particulier d'un boulon de palier (L2B), et un deuxième piston (K2) est façonné sur la deuxième bielle (P2).

15. Machine à piston alternatif selon la revendication 14, **caractérisée en ce que**
- le premier palier de bielle (P1) est un palier à roulement (L1), en particulier sous la forme d'un palier à roulement rainuré à billes (L1) sur le maneton de vilebrequin (432), et/ou
- le deuxième palier de bielle (L2) est un palier articulé, en particulier sous la forme d'un palier lisse ou d'un palier à roulement, en particulier d'un palier à aiguilles, sur la première bielle (P1).

16. Machine à piston alternatif selon l'une quelconque des revendications 1 à 15, **caractérisée en ce que** le compresseur à piston (400) est formé en tant que compresseur à deux étages (400) avec un premier et un deuxième étage de compresseur (401, 402), en particulier sous forme de compresseur double (TWIN), où :
- une première bielle (P1) du deuxième étage de compresseur, en particulier de l'étage de compresseur à haute pression (402), est formée, la première bielle (P1) étant supportée directement sur le maneton de vilebrequin (432) au moyen d'un premier palier de bielle (L1) et/ou
- une deuxième bielle (P2) du premier étage de compresseur, en particulier de l'étage de compresseur à basse pression (401), est formée, la deuxième bielle (P2) étant supportée directement sur la première bielle (P1) au moyen d'un deuxième palier de bielle (L2) et d'un élément d'accouplement, en particulier d'un boulon de palier (L2B).

17. Système de montage de machine à piston alternatif (799) pour le montage d'une machine à piston alternatif, présentant :
- une machine à piston alternatif selon l'une quelconque des revendications 1 à 16 et
- un dispositif de montage (800) qui est réalisé pour être disposé sur la machine à piston alternatif et pour monter la machine à piston alternatif et qui présente :
-- un élément de basculement déplaçable axialement (820) qui est réalisé pour être déplacé vers l'au moins un palier de bielle (L1) de la bielle (P1) de la machine à piston alternatif, afin d'appliquer à celui-ci le long de la direction de l'axe d'arbre (E) une force prédéterminée (Fk) afin que la bielle (P1) soit serrée par rapport au maneton de vilebrequin (432), l'axe de bielle (Pa) de l'au moins une bielle (P1) étant basculé par la force prédéterminée exercée (Fk) avec un angle de basculement (α) par rapport à l'axe de cylindre (Z) orienté radialement.

18. Système de montage de machine à piston alternatif (799) selon la revendication 17, **caractérisé en ce que** l'élément de basculement déplaçable axialement (820) est réalisé de manière à appliquer la force prédéterminée (Fk) à une bague intérieure (IR) du palier de bielle (L1) le long de la direction de l'axe d'arbre (E) afin de basculer l'axe de bielle (Pa) de la bielle (P1) par rapport à un état non serré se présentant en l'absence d'une force prédéterminée (Fk).

19. Système de montage de machine à piston alternatif (799) selon la revendication 17 ou 18, **caractérisé en ce que** l'élément de basculement déplaçable axialement (820) présente un filetage autobloquant (830) .

20. Installation d'alimentation en air comprimé (1001) pour faire fonctionner une installation pneumatique (1002), en particulier une installation à suspension pneumatique d'un véhicule, de préférence d'un véhicule léger, avec un écoulement d'air comprimé (DL), présentant :
- un agencement de sécheur d'air (100) dans une conduite pneumatique principale (200) qui relie pneumatiquement une alimentation en air comprimé (1) d'un compresseur d'air (400) et un raccord d'air comprimé (2) à l'installation pneumatique (1002), et
- un agencement de soupape (300) raccordé pneumatiquement à la conduite pneumatique principale (200) pour commander l'écoulement d'air comprimé (DL) et un sécheur d'air (101) dans la conduite pneumatique principale (200),
- un compresseur d'air (400, 400') avec une machine à piston alternatif, en particulier un compresseur à piston à un, deux ou plus de deux étages (400, 400') ou un compresseur à un, deux ou plus de deux cylindres, selon les revendications 1 à 16, étant raccordé à l'alimentation en air comprimé (1).

21. Système d'alimentation en air comprimé (1000) comprenant une installation pneumatique (1002) et une installation d'alimentation en air comprimé (1001) selon la revendication 20 pour faire fonctionner une installation pneumatique (1002) avec un écoulement d'air comprimé (DL), en particulier une installation de suspension pneumatique d'un véhicule, de préférence d'un véhicule léger, la conduite pneumatique principale (200) reliant pneumatiquement une alimentation en air comprimé (1) d'un compresseur d'air (400, 400') à une machine à piston alternatif, en particulier un compresseur à piston à un, deux ou plus de deux étages (400, 400'), selon les revendications 1 à 16 et un raccord d'air comprimé (2) à l'installation pneumatique (1002).

22. Véhicule, en particulier véhicule léger, comprenant une installation pneumatique (1002), en particulier une installation de suspension pneumatique, et une installation d'alimentation en air comprimé (1001) selon la revendication 20 pour faire fonctionner l'installation pneumatique (1002) avec un écoulement d'air comprimé (DL).

23. Procédé de montage d'une machine à piston alternatif selon l'une quelconque des revendications 1 à 16, en particulier avec un compresseur à piston à un, deux ou plus de deux étages (400, 400') ou un compresseur à un, deux ou plus de deux cylindres, en particulier sur une installation d'alimentation en air comprimé (1001), présentant :
- au moins un cylindre (410, 420) ainsi qu'au moins un piston (K1, K2) associé à un cylindre respectif (410, 420), le piston (K1, K2), pendant le fonctionnement, étant dévié le long d'un axe de cylindre orienté radialement (Z) dans un volume de cylindre (411, 421) du cylindre (410, 420),
- un vilebrequin (430) pouvant être entraîné pendant le fonctionnement, avec un maneton de vilebrequin (432) qui est disposé de manière excentrique par rapport à un axe d'arbre (E) du vilebrequin (430), et un accouplement d'arbre d'entraînement (431) qui est réalisé pour accoupler un arbre d'entraînement (501), en particulier un moteur d'entraînement (M) pour l'entraînement du vilebrequin (430),
- au moins une bielle (P1, P2) réalisée à chaque fois pour dévier l'au moins un piston (K1, K2) et s'étendant le long d'un axe de bielle (Pa, Pb), qui peut être déplacée au moyen du maneton de vilebrequin (432),
- le maneton de vilebrequin (432) et/ou l'accouplement d'arbre d'entraînement (431) étant orientés le long d'un axe d'arbre orienté axialement (E) du vilebrequin (430) qui s'étend perpendiculairement à l'axe de cylindre (7) orienté radialement,
**caractérisé en ce que**
- l'axe de bielle (Pa) de la bielle (P1) est amené dans une position dans laquelle au moins un palier de bielle (L1, L2) est serré par rapport au maneton de vilebrequin (432) par une force (Fk) prédéterminée s'exerçant le long de la direction de l'axe d'arbre (E) sur l'au moins un palier de bielle (L1, L2), en particulier de telle sorte que le jeu de palier d'au moins un palier de bielle soit réduit,
- l'axe de bielle (Pa) de l'au moins une bielle (P1) étant basculé par la force prédéterminée exercée (Fk) avec un angle de basculement (α) par rapport à l'axe de cylindre (Z) orienté radialement, et
- l'axe de bielle (Pa) de la bielle (P1) est amené dans la position en appliquant une force agissant le long de la direction de l'axe d'arbre (E) sur l'au moins un palier de bielle (L1) jusqu'à ce qu'une force conjuguée prédéterminée soit atteinte.

24. Procédé pour faire fonctionner une machine à piston alternatif selon l'une quelconque des revendications 1 à 16, en particulier avec un compresseur à piston à un, deux ou plus de deux étages (400, 400') ou un compresseur à un, deux ou plus de deux cylindres, en particulier sur une installation d'alimentation en air comprimé (1001), présentant :
- au moins un cylindre (410, 420) ainsi qu'au moins un piston (K1, K2) associé à un cylindre respectif (410, 420), le piston (K1, K2), pendant le fonctionnement, étant dévié le long d'un axe de cylindre orienté radialement (Z) dans un volume de cylindre (411, 421) du cylindre (410, 420),
- un vilebrequin (430) pouvant être entraîné pendant le fonctionnement, avec un maneton de vilebrequin (432) qui est disposé de manière excentrique par rapport à un axe d'arbre (E) du vilebrequin (430), et un accouplement d'arbre d'entraînement (431) qui est réalisé pour accoupler un arbre d'entraînement (501), en particulier un moteur d'entraînement (M) pour l'entraînement du vilebrequin (430),
- au moins une bielle (P1, P2) réalisée à chaque fois pour dévier l'au moins un piston (K1, K2) et s'étendant le long d'un axe de bielle (Pa, Pb), qui peut être déplacée au moyen du maneton de vilebrequin (432),
- le maneton de vilebrequin (432) et/ou l'accouplement d'arbre d'entraînement (431) étant orientés parallèlement à un axe d'arbre orienté axialement (E) du maneton de vilebrequin (432), qui s'étend perpendiculairement à l'axe de cylindre (Z) orienté radialement,
**caractérisé en ce que**
- l'axe de bielle (Pa) de la bielle (P1) est amené dans une position dans laquelle au moins un palier de bielle (L1, L2) est serré par rapport au maneton de vilebrequin (432) par une force (Fk) prédéterminée s'exerçant le long de la direction de l'axe d'arbre (E) sur l'au moins un palier de bielle (L1, L2), en particulier de telle sorte que le jeu de palier d'au moins un palier de bielle (L1, L2) soit réduit,
- l'axe de bielle (Pa) de l'au moins une bielle (P1) étant basculé par la force prédéterminée exercée (Fk) avec un angle de basculement (α) par rapport à l'axe de cylindre (Z) orienté radialement, et
- l'axe de bielle (Pa) de la bielle (P1) est amené dans la position en appliquant une force agissant le long de la direction de l'axe d'arbre (E) sur l'au moins un palier de bielle (L1, L2) jusqu'à ce qu'une force conjuguée prédéterminée soit atteinte.

25. Procédé selon la revendication 23 ou 24, **caractérisé par** les étapes de procédé de basculement de l'axe de bielle (Pa) de la bielle (P1) suivantes :
- agencement d'un dispositif de montage avec un élément de basculement déplaçable axialement (820) sur la machine à piston alternatif de telle sorte que l'élément de basculement (820) puisse être déplacé vers l'au moins un palier de bielle (L1) afin d'exercer sur celui-ci une force (Fk) le long de la direction de l'axe d'arbre (E), et
- déplacement de l'élément de basculement déplaçable (820) par rapport à l'au moins un palier de bielle (L1), de sorte que la force prédéterminée (Fk) soit appliquée à l'au moins un palier de bielle (L1, L2) et que l'au moins un palier de bielle (L1, L2) soit serré par rapport au maneton de vilebrequin (432),
l'élément de basculement déplaçable (820) étant déplacé jusqu'à l'obtention d'une force conjuguée prédéterminée qui résulte de préférence d'un basculement de la bielle (P1).

26. Procédé selon la revendication 25, **caractérisé en ce que** l'élément de basculement déplaçable axialement (820) est déplacé par rapport à une bague intérieure du palier de bielle (L1).

27. Procédé selon la revendication 25 ou 26, **caractérisé par** les étapes de procédé suivantes :
- agencement et fixation du maneton de vilebrequin (432) sur la bague intérieure (IR) du palier de bielle (L1) de telle sorte que la bielle (P1, P2) puisse être déplacée avec le maneton de vilebrequin (432), et
- enlèvement de l'élément de basculement déplaçable axialement (820) et du dispositif de montage (800) de la machine à piston alternatif après que le maneton de vilebrequin (432) a été disposé sur la bielle (P1), en particulier dans le palier de bielle (L1), et a été fixé à la bague intérieure (IR) du palier de bielle (L1).

28. Machine à piston alternatif selon l'une quelconque des revendications 1 à 16, qui a été montée selon le procédé des revendications 23, 25, 26 ou 27.

29. Utilisation d'une machine à piston alternatif selon l'une quelconque des revendications 1 à 16 dans un procédé selon l'une quelconque des revendications 24 à 27.
